# EUROPEAN PATENT APPLICATION

(11) **EP 4 838 813 A1**
(43) Date of publication of application: **11.11.2026**
(21) Application number: 25751007.3
(22) Date of filing: 02.01.2025
(51) Int. Cl.: H04L 1/00

(54) **DATA PROCESSING METHOD, DEVICE, AND SYSTEM**

(30) Priority: 08.02.2024 CN 202410178187
(71) Applicant: Huawei Technologies Co., Ltd., Shenzhen, Guangdong 518129 (CN)
(72) Inventor: HUANG, Kechao, Shenzhen, Guangdong 518129 (CN); WANG, Haoyi, Shenzhen, Guangdong 518129 (CN); YANG, Xiaoling, Shenzhen, Guangdong 518129 (CN); MA, Huixiao, Shenzhen, Guangdong 518129 (CN)
(74) Representative: Maiwald GmbH
(86) International application number: PCT/CN2025/070101
(87) International publication number: WO 2025/167405

(57) **Abstract**

Embodiments of this application disclose a data processing method, an apparatus, and a system. This ensures simple overall data processing operations, low complexity, and low power consumption, while improving spectrum utilization and enhancing system transmission performance. Specifically, PCS processing is performed on a first bit set in a plurality of bits to obtain a second bit set. In addition, first interleaving is performed on the second bit set and a third bit set in the plurality of bits other than the first bit set to obtain a fourth bit set 1 and a fourth bit set 2. Then, FEC encoding is performed at a granularity of a fifth bit set. For example, a fifth bit set 1 includes at least one fourth bit set 1, a fifth bit set 2 includes at least one fourth bit set 2, and FEC encoding is performed on each of the two fifth bit sets to obtain two sixth bit sets. Second interleaving is performed on each of the two sixth bit sets to obtain two seventh bit sets. Third interleaving is performed on the two seventh bit sets to obtain an eighth bit set.

## Description

This application claims priority to Chinese Patent Application No. 202410178187.8, filed with the China National Intellectual Property Administration on February 8, 2024 and entitled "DATA PROCESSING METHOD, APPARATUS, AND SYSTEM", which is incorporated herein by reference in its entirety.

### TECHNICAL FIELD

This application relates to the field of communication technologies, and in particular, to a data processing method, an apparatus, and a system.

### BACKGROUND

Driven by continuous advancement in 5G, cloud computing, big data, artificial intelligence, and other technologies, high-speed optical transport networks are evolving towards large capacity, packetization, and intelligence. Coherent optical communication systems use the amplitude, phase, polarization, and frequency of optical waves to carry information. To counter optical signal distortion caused by dispersion, polarization-dependent impairments, noise, nonlinear effects, and other factors during transmission, and to maintain long-distance transmission, the coherent optical communication systems usually use efficient forward error correction (Forward Error Correction, FEC) codes to mitigate optical impairments during optical transmission, to ensure a bit error rate low enough during long-distance transmission. For example, the open FEC (OpenFEC) code, which is briefly referred to as an OFEC code, currently adopted by 400ZR+ and 800ZR has an overhead (overhead, OH) of 15.3%. With soft-decision decoding, its pre-FEC performance is approximately 2.0E-2.

To improve spectral efficiency, multi-level quadrature amplitude modulation (Quadrature Amplitude Modulation, QAM) formats such as 16QAM, 32QAM, 64QAM, or even higher-order QAM are usually used. In conventional QAM modulation, constellation points (constellation points) on the signal constellation diagram appear with equal probability. Probabilistic constellation shaping (Probabilistic Constellation Shaping, PCS) processing technologies change the occurrence probabilities of constellation points without changing their positions, resulting in a non-uniform distribution that improves system transmission performance. As a type of modulation format optimization technology, PCS offers advantages such as approaching the Shannon limit and being flexible, and has been widely studied and applied. However, existing data processing and transmission methods using OFEC encoding mainly rely on conventional QAM modulation, and are not suitable for future scenarios involving PCS. This is a problem to be urgently resolved in the future.

### SUMMARY

Embodiments of this application provide a data processing method, an apparatus, and a system. In scenarios in which DP-64QAM modulation is used, the method integrates FEC encoding, interleaving, and PCS processing to ensure simple overall data processing operations, low complexity, and low power consumption, while improving spectrum utilization and enhancing system transmission performance. This facilitates application in future metro telecommunication transmission and metro data center interconnect (Data Center Interconnect, DCI) scenarios.

According to a first aspect, an embodiment of this application provides a data processing method. Specifically, PCS processing is performed on a first bit set in a plurality of bits to obtain a second bit set. First interleaving is performed on the second bit set and a third bit set in the plurality of bits other than the first bit set to obtain two fourth bit sets. Bit distribution manners of the two fourth bit sets are different. For ease of distinguishing between a fourth bit set 1 and a fourth bit set 2, the fourth bit set 1 may correspond to a fourth bit set 2i in the following embodiments, and the fourth bit set 2 may correspond to a fourth bit set 2i+1 in the following embodiments. Then, FEC encoding is performed at a granularity of a fifth bit set. For example, a fifth bit set 1 includes at least one fourth bit set 1, a fifth bit set 2 includes at least one fourth bit set 2, FEC encoding is performed on each of the two fifth bit sets to obtain two sixth bit sets, and the sixth bit set includes parity bits generated through the FEC encoding. Next, second interleaving is performed on each of the two sixth bit sets to obtain two seventh bit sets. Further, third interleaving is performed on the two seventh bit sets to obtain an eighth bit set. In a specific scenario, the fifth bit set includes a total of 294 bit subsets in 42 rows and 7 columns, each bit subset in a total of 252 bit subsets in 42 rows and 6 columns includes a total of 256 bits in 16 rows and 16 columns, each bit subset in a total of 42 bit subsets in 42 rows and one column includes a total of 240 bits in 16 rows and 15 columns, each of the sixth bit set and the seventh bit set includes a total of 336 bit subsets in 42 rows and 8 columns, and each bit subset includes a total of 256 bits in 16 rows and 16 columns.

It should be noted that 12 consecutive bits in the eighth bit set are mapped to obtain one dual-polarization symbol, and the dual-polarization symbol includes a first polarization symbol and a second polarization symbol. Bit 0, bit 1, bit 2, bit 3, bit 4, and bit 5 in the 12 bits are mapped to the first polarization symbol. Bit 6, bit 7, bit 8, bit 9, bit 10, and bit 11 in the 12 bits are mapped to the second polarization symbol. Four bits that are in the 12 bits and that are mapped to the first polarization symbol are from the second bit set, and the other two bits that are in the 12 bits and that are mapped to the first polarization symbol are from the third bit set and/or the parity bits of the FEC encoding. Four bits that are in the 12 bits and that are mapped to the second polarization symbol are from the second bit set, and the other two bits that are in the 12 bits and that are mapped to the second polarization symbol are from the third bit set and/or the parity bits of the FEC encoding.

In this implementation, a data processing method combining PCS processing, FEC encoding, and interleaving is designed in this application. Every 12 consecutive bits in bit data obtained through the data processing are mapped to obtain one dual-polarization symbol, the one dual-polarization symbol includes a first polarization symbol and a second polarization symbol, and odd-numbered bits and even-numbered bits in the 12 bits are respectively mapped to different polarization symbols. In addition, in the six bits mapped to each polarization symbol, four bits are from a PCS processed bit set, and the other two bits are from a non-PCS processed bit set and/or parity bits of the FEC encoding. The designed data processing method can better match a DP-64QAM modulation scenario, ensure simple overall data processing operations, low complexity, and low power consumption, while improving spectrum utilization and enhancing system transmission performance. This facilitates application in future metro telecommunication transmission and metro DCI scenarios.

In some possible implementations, the two seventh bit sets include a seventh bit set 1 and a seventh bit set 2, each of the seventh bit set 1 and the seventh bit set 2 includes a total of 336 first bit subsets in 42 rows and 8 columns, and the first bit subset includes a total of 256 bits in 16 rows and 16 columns. It should be understood that a bit distribution pattern of the first bit subset indicates positions of bits from the second bit set in the first bit subset and positions of bits from the third bit set and/or the parity bits of the FEC encoding in the first bit subset. The following describes bit distribution patterns of first bit subsets in different rows in the two seventh bit sets. In this design manner, a processing manner in which inter-block interleaving is performed at a granularity of eight bits can be matched, and this helps ensure simple overall data processing operations, low complexity, and low power consumption.

Bit distribution patterns of first bit subsets in row 0, row 3, row 6, row 9, row 12, row 15, row 18, row 23, row 26, row 29, row 32, row 35, row 38, and row 41 in the seventh bit set 1 are all a first bit distribution pattern.

Bit distribution patterns of first bit subsets in row 1, row 4, row 7, row 10, row 13, row 16, row 19, row 21, row 24, row 27, row 30, row 33, row 36, and row 39 in the seventh bit set 1 are all a second bit distribution pattern.

Bit distribution patterns of first bit subsets in row 2, row 5, row 8, row 11, row 14, row 17, row 20, row 22, row 25, row 28, row 31, row 34, row 37, and row 40 in the seventh bit set 1 are all a third bit distribution pattern.

Bit distribution patterns of first bit subsets in row 0, row 3, row 6, row 9, row 12, row 15, row 18, row 23, row 26, row 29, row 32, row 35, row 38, and row 41 in the seventh bit set 2 are all the third bit distribution pattern.

Bit distribution patterns of first bit subsets in row 1, row 4, row 7, row 10, row 13, row 16, row 19, row 21, row 24, row 27, row 30, row 33, row 36, and row 39 in the seventh bit set 2 are all the first bit distribution pattern.

Bit distribution patterns of first bit subsets in row 2, row 5, row 8, row 11, row 14, row 17, row 20, row 22, row 25, row 28, row 31, row 34, row 37, and row 40 in the seventh bit set 2 are all the second bit distribution pattern.

In some possible implementations, that the second interleaving is performed on each of the two sixth bit sets to obtain the two seventh bit sets includes: Fourth interleaving is performed on each of the two sixth bit sets to obtain two ninth bit sets. The two ninth bit sets include a ninth bit set 1 and a ninth bit set 2, each of the ninth bit set 1 and the ninth bit set 2 includes a total of 336 second bit subsets in 42 rows and 8 columns, and the second bit subset includes a total of 256 bits in 16 rows and 16 columns. Fifth interleaving is performed on each of the two ninth bit sets to obtain the two seventh bit sets, where the fifth interleaving is used for interleaving 16 bits in each row of each second bit subset in the ninth bit set. In other words, the second interleaving operation may be specifically implemented in two steps: the fourth interleaving and the fifth interleaving. The fifth interleaving may be understood as a manner of performing intra-row interleaving on the bits in each row of the second bit subset. This design improves implementation flexibility of this solution.

In some possible implementations, a bit distribution pattern of the second bit subset indicates positions of bits from the second bit set in the second bit subset and positions of bits from the third bit set and/or the parity bits of the FEC encoding in the second bit subset. The following describes bit distribution patterns of second bit subsets in different rows in the two ninth bit sets. In this design manner, a processing manner in which inter-block interleaving is performed at a granularity of eight bits can be matched, and this helps ensure simple overall data processing operations, low complexity, and low power consumption.

Bit distribution patterns of second bit subsets in row 0, row 3, row 6, row 9, row 12, row 15, row 18, row 23, row 26, row 29, row 32, row 35, row 38, and row 41 in the ninth bit set 1 are all a fourth bit distribution pattern.

Bit distribution patterns of second bit subsets in row 1, row 4, row 7, row 10, row 13, row 16, row 19, row 21, row 24, row 27, row 30, row 33, row 36, and row 39 in the ninth bit set 1 are all a fifth bit distribution pattern.

Bit distribution patterns of second bit subsets in row 2, row 5, row 8, row 11, row 14, row 17, row 20, row 22, row 25, row 28, row 31, row 34, row 37, and row 40 in the ninth bit set 1 are all a sixth bit distribution pattern.

Bit distribution patterns of second bit subsets in row 0, row 3, row 6, row 9, row 12, row 15, row 18, row 23, row 26, row 29, row 32, row 35, row 38, and row 41 in the ninth bit set 2 are all the sixth bit distribution pattern.

Bit distribution patterns of second bit subsets in row 1, row 4, row 7, row 10, row 13, row 16, row 19, row 21, row 24, row 27, row 30, row 33, row 36, and row 39 in the ninth bit set 2 are all the fourth bit distribution pattern.

Bit distribution patterns of second bit subsets in row 2, row 5, row 8, row 11, row 14, row 17, row 20, row 22, row 25, row 28, row 31, row 34, row 37, and row 40 in the ninth bit set 2 are all the fifth bit distribution pattern.

In some possible implementations, the two sixth bit sets include a sixth bit set 1 and a sixth bit set 2, each of the sixth bit set 1 and the sixth bit set 2 includes a total of 336 third bit subsets in 42 rows and 8 columns, and the third bit subset includes a total of 256 bits in 16 rows and 16 columns. In the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding. This implementation provides a bit distribution manner in the sixth bit set, to be specific, a source of each part of bits in the sixth bit set, to ensure an implementation effect of this solution.

In some possible implementations, a bit distribution pattern of the third bit subset indicates positions of bits from the second bit set in the third bit subset and positions of bits from the third bit set and/or the parity bits of the FEC encoding in the third bit subset. The following describes bit distribution patterns of third bit subsets in different rows in the two sixth bit sets. In this design manner, a processing manner in which inter-block interleaving is performed at a granularity of eight bits can be matched, and this helps ensure simple overall data processing operations, low complexity, and low power consumption.

Bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 1 are all the fourth bit distribution pattern.

Bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 1 are all the fifth bit distribution pattern.

Bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 1 are all the sixth bit distribution pattern.

Bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 2 are all the sixth bit distribution pattern.

Bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 2 are all the fourth bit distribution pattern.

Bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 2 are all the fifth bit distribution pattern.

In some possible implementations, the two seventh bit sets include a seventh bit set 1 and a seventh bit set 2, each of the seventh bit set 1 and the seventh bit set 2 includes a total of 336 first bit subsets in 42 rows and 8 columns, and the first bit subset includes a total of 256 bits in 16 rows and 16 columns. A bit distribution pattern of the first bit subset indicates positions of bits from the second bit set in the first bit subset and positions of bits from the third bit set and/or the parity bits of the FEC encoding in the first bit subset. The following describes bit distribution patterns of first bit subsets in different rows in the two seventh bit sets. In this design manner, a processing manner in which inter-block interleaving is performed at a granularity of 16 bits can be matched, and this helps ensure simple overall data processing operations, low complexity, and low power consumption.

Bit distribution patterns of first bit subsets in row 0, row 3, row 6, row 9, row 12, row 15, row 18, row 22, row 25, row 28, row 31, row 34, row 37, and row 40 in the seventh bit set 1 are all a first bit distribution pattern.

Bit distribution patterns of first bit subsets in row 1, row 4, row 7, row 10, row 13, row 16, row 19, row 23, row 26, row 29, row 32, row 35, row 38, and row 41 in the seventh bit set 1 are all a second bit distribution pattern.

Bit distribution patterns of first bit subsets in row 2, row 5, row 8, row 11, row 14, row 17, row 20, row 21, row 24, row 27, row 30, row 33, row 36, and row 39 in the seventh bit set 1 are all a third bit distribution pattern.

Bit distribution patterns of first bit subsets in row 0, row 3, row 6, row 9, row 12, row 15, row 18, row 22, row 25, row 28, row 31, row 34, row 37, and row 40 in the seventh bit set 2 are all the second bit distribution pattern.

Bit distribution patterns of first bit subsets in row 1, row 4, row 7, row 10, row 13, row 16, row 19, row 23, row 26, row 29, row 32, row 35, row 38, and row 41 in the seventh bit set 2 are all the third bit distribution pattern.

Bit distribution patterns of first bit subsets in row 2, row 5, row 8, row 11, row 14, row 17, row 20, row 21, row 24, row 27, row 30, row 33, row 36, and row 39 in the seventh bit set 2 are all the first bit distribution pattern.

In some possible implementations, that the second interleaving is performed on each of the two sixth bit sets to obtain the two seventh bit sets includes: Fourth interleaving is performed on each of the two sixth bit sets to obtain two ninth bit sets. The two ninth bit sets include a ninth bit set 1 and a ninth bit set 2, each of the ninth bit set 1 and the ninth bit set 2 includes a total of 336 second bit subsets in 42 rows and 8 columns, and the second bit subset includes a total of 256 bits in 16 rows and 16 columns. Fifth interleaving is performed on each of the two ninth bit sets to obtain the two seventh bit sets, where the fifth interleaving is used for interleaving 16 bits in each row of each second bit subset in the ninth bit set.

In some possible implementations, a bit distribution pattern of the second bit subset indicates positions of bits from the second bit set in the second bit subset and positions of bits from the third bit set and/or the parity bits of the FEC encoding in the second bit subset. The following describes bit distribution patterns of second bit subsets in different rows in the two ninth bit sets. In this design manner, a processing manner in which inter-block interleaving is performed at a granularity of 16 bits can be matched, and this helps ensure simple overall data processing operations, low complexity, and low power consumption.

Bit distribution patterns of second bit subsets in row 0, row 3, row 6, row 9, row 12, row 15, row 18, row 22, row 25, row 28, row 31, row 34, row 37, and row 40 in the ninth bit set 1 are all a fourth bit distribution pattern.

Bit distribution patterns of second bit subsets in row 1, row 4, row 7, row 10, row 13, row 16, row 19, row 23, row 26, row 29, row 32, row 35, row 38, and row 41 in the ninth bit set 1 are all a fifth bit distribution pattern.

Bit distribution patterns of second bit subsets in row 2, row 5, row 8, row 11, row 14, row 17, row 20, row 21, row 24, row 27, row 30, row 33, row 36, and row 39 in the ninth bit set 1 are all a sixth bit distribution pattern.

Bit distribution patterns of second bit subsets in row 0, row 3, row 6, row 9, row 12, row 15, row 18, row 22, row 25, row 28, row 31, row 34, row 37, and row 40 in the ninth bit set 2 are all the fifth bit distribution pattern.

Bit distribution patterns of second bit subsets in row 1, row 4, row 7, row 10, row 13, row 16, row 19, row 23, row 26, row 29, row 32, row 35, row 38, and row 41 in the ninth bit set 2 are all the sixth bit distribution pattern.

Bit distribution patterns of second bit subsets in row 2, row 5, row 8, row 11, row 14, row 17, row 20, row 21, row 24, row 27, row 30, row 33, row 36, and row 39 in the ninth bit set 2 are all the fourth bit distribution pattern.

In some possible implementations, the two sixth bit sets include a sixth bit set 1 and a sixth bit set 2, each of the sixth bit set 1 and the sixth bit set 2 includes a total of 336 third bit subsets in 42 rows and 8 columns, and the third bit subset includes a total of 256 bits in 16 rows and 16 columns. In the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding.

In some possible implementations, a bit distribution pattern of the third bit subset indicates positions of bits from the second bit set in the third bit subset and positions of bits from the third bit set and/or the parity bits of the FEC encoding in the third bit subset. The following describes bit distribution patterns of third bit subsets in different rows in the two sixth bit sets. In this design manner, a processing manner in which inter-block interleaving is performed at a granularity of 16 bits can be matched, and this helps ensure simple overall data processing operations, low complexity, and low power consumption.

Bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 1 are all the fourth bit distribution pattern.

Bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 1 are all the fifth bit distribution pattern.

Bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 1 are all the sixth bit distribution pattern.

Bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 2 are all the fifth bit distribution pattern.

Bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 2 are all the sixth bit distribution pattern.

Bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 2 are all the fourth bit distribution pattern.

In some possible implementations, bit 0, bit 1, and bit 2 in the 12 bits are mapped to a first component of the first polarization symbol; bit 3, bit 4, and bit 5 in the 12 bits are mapped to a second component of the first polarization symbol; bit 6, bit 7, and bit 8 in the 12 bits are mapped to a first component of the second polarization symbol; and bit 9, bit 10, and bit 11 in the 12 bits are mapped to a second component of the second polarization symbol. Herein, a specific mapping rule for mapping 12 bits to obtain one dual-polarization symbol is provided, and has a good practical effect.

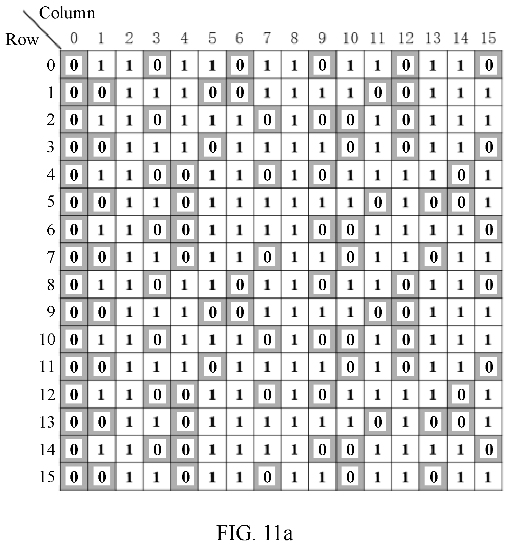

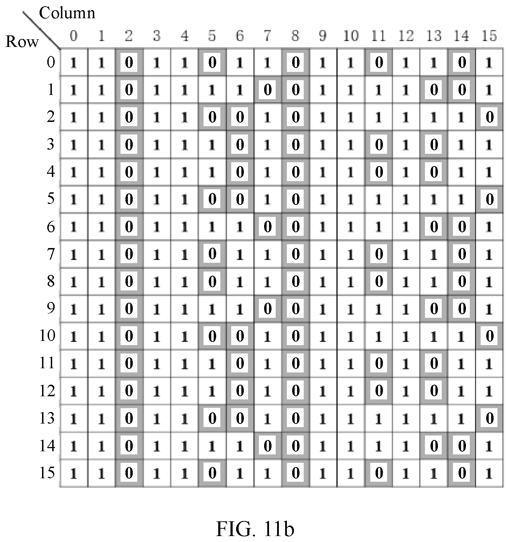

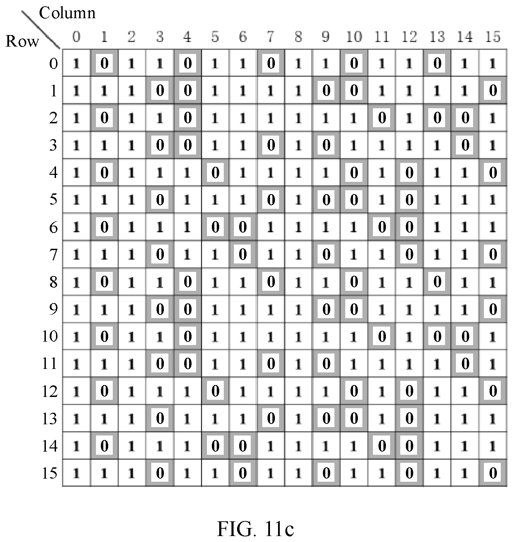

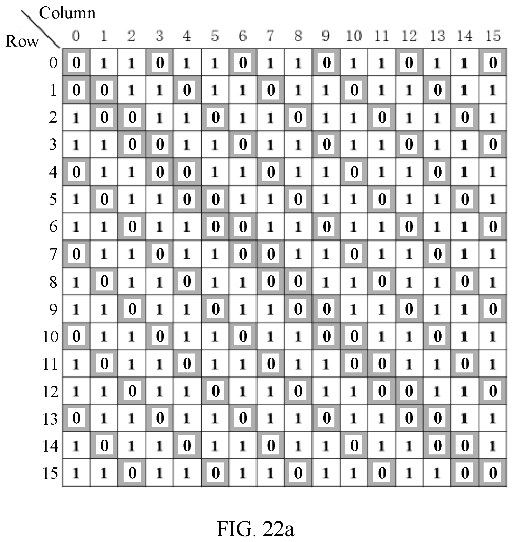

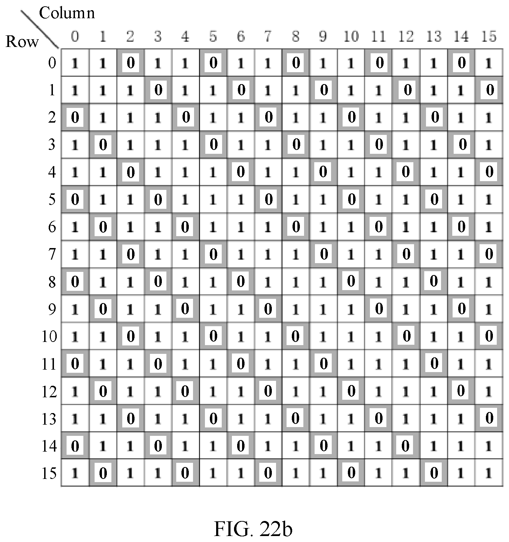

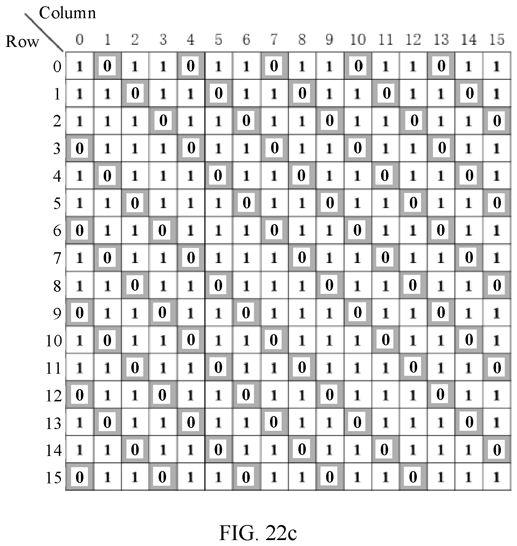

In some possible implementations, according to the foregoing mapping rule, the first bit distribution pattern is shown in FIG. 22a, the second bit distribution pattern is shown in FIG. 22b, the third bit distribution pattern is shown in FIG. 22c, the fourth bit distribution pattern is shown in FIG. 11a, the fifth bit distribution pattern is shown in FIG. 11b, and the sixth bit distribution pattern is shown in FIG. 11c.

In some possible implementations, a polarization direction of the first polarization symbol and a polarization direction of the second polarization symbol are orthogonal to each other. The first component is an I component, and the second component is a Q component; or the first component is a Q component, and the second component is an I component.

In some possible implementations, the two seventh bit sets include the seventh bit set 1 and the seventh bit set 2. That the third interleaving is performed on the two seventh bit sets to obtain the eighth bit set includes: Intra-block interleaving is performed on the seventh bit set 1 to obtain a tenth bit set 1, and intra-block interleaving is performed on the seventh bit set 2 to obtain a tenth bit set 2. Each of the tenth bit set 1 and the tenth bit set 2 includes a total of 336 fourth bit subsets in 42 rows and 8 columns, and the fourth bit subset includes a total of 256 bits in 16 rows and 16 columns. Inter-block interleaving is performed on the tenth bit set 1 and the tenth bit set 2 to obtain the eighth bit set, where the eighth bit set includes a total of 672 fourth bit subsets in 84 rows and 8 columns. A specific implementation of the third interleaving is provided herein, to be specific, the third interleaving includes the intra-block interleaving and the inter-block interleaving, to improve practicability of this solution.

In some possible implementations, the first bit set includes a first bit set 1 and a first bit set 2, and that the PCS processing is performed on the first bit set in the plurality of bits to obtain the second bit set includes: The PCS processing is performed on the first bit set 1 to obtain a second bit set 1, and the PCS processing is performed on the first bit set 2 to obtain a second bit set 2, where the second bit set includes the second bit set 1 and the second bit set 2. It should be understood that, two PCS processing are obtained through division for implementation. This helps reduce complexity of single PCS processing, and hardware implementation of single PCS processing is simpler.

In some possible implementations, the third bit set includes a third bit set 1 and a third bit set 2. That the first interleaving is performed on the second bit set and the third bit set in the plurality of bits other than the first bit set to obtain the two fourth bit sets includes: The first interleaving is performed on the second bit set 1, the second bit set 2, the third bit set 1, and the third bit set 2 to obtain the fourth bit set 1 and the fourth bit set 2.

In some possible implementations, the third bit set includes a third bit set 1 and a third bit set 2. That the first interleaving is performed on the second bit set and the third bit set in the plurality of bits other than the first bit set to obtain the two fourth bit sets includes: The first interleaving is performed on the second bit set 1 and the third bit set 1 to obtain the fourth bit set 1, and the first interleaving is performed on the second bit set 2 and the third bit set 2 to obtain the fourth bit set 2. It should be understood that, two first interleaving are obtained through division for implementation. This helps reduce complexity of single first interleaving, and hardware implementation of single first interleaving is simpler.

In some possible implementations, that the first interleaving is performed on the second bit set and the third bit set in the plurality of bits other than the first bit set to obtain the two fourth bit sets includes: The first interleaving is performed on the second bit set 1, the second bit set 2, and the third bit set to obtain the fourth bit set 1 and the fourth bit set 2.

In some possible implementations, amplitude bits mapped to the dual-polarization symbol are from the second bit set, and sign bits mapped to the dual-polarization symbol are from the third bit set and/or the parity bits of the FEC encoding.

In some possible implementations, before that specifically, the PCS processing is performed on the first bit set in the plurality of bits to obtain the second bit set, the method further includes: obtaining first data from a data frame, where the first data includes bits in r rows and q columns, r is an integer greater than 0, and q is an integer greater than 0; performing cyclic redundancy check (Cyclic Redundancy Check, CRC) on the first data and/or inserting pad bits into the first data to obtain second data, where the second data includes d_{CRC} parity bits inserted through the CRC and/or d_{PAD} pad bits, d_{CRC} is an integer greater than or equal to 0, and d_{PAD} is an integer greater than or equal to 0; and scrambling the second data to obtain third data, where a quantity of bits of the third data is d_{scr} = r × q + d_{CP}, and d_{CP} = d_{CRC} + d_{PAD}; and obtaining e×L bits from the third data, and grouping the e×L bits into L groups of bits, where each group of the L groups of bits includes e bits.

In some possible implementations, d_{scr} = 168 × e.

In some possible implementations, d_{scr} = 84 × e.

In some possible implementations, d_{scr} = 12 × e.

In some possible implementations, after that the third interleaving is performed on the two seventh bit sets to obtain the eighth bit set, the method further includes: merging L eighth bit sets to obtain fourth data; performing symbol mapping and polarization distribution on the fourth data to obtain a dual-polarization symbol stream, where every 12 consecutive bits in the fourth data are mapped to obtain one dual-polarization symbol; and performing DSP framing on the dual-polarization symbol stream.

According to a second aspect, an embodiment of this application provides a data processing apparatus. The data processing apparatus includes a PCS unit, a first interleaving unit, an FEC encoding unit, a second interleaving unit, and a third interleaving unit. The PCS unit is configured to perform PCS processing on a first bit set in a plurality of bits to obtain a second bit set. The first interleaving unit is configured to perform first interleaving on the second bit set and a third bit set in the plurality of bits other than the first bit set to obtain two fourth bit sets, where the two fourth bit sets include a fourth bit set 1 and a fourth bit set 2. The FEC encoding unit is configured to perform FEC encoding on each of two fifth bit sets to obtain two sixth bit sets, where a fifth bit set 1 in the two fifth bit sets includes at least one fourth bit set 1, and a fifth bit set 2 in the two fifth bit sets includes at least one fourth bit set 2. The second interleaving unit is configured to perform second interleaving on each of the two sixth bit sets to obtain two seventh bit sets. The third interleaving unit is configured to perform third interleaving on the two seventh bit sets to obtain an eighth bit set. 12 consecutive bits in the eighth bit set are mapped to obtain one dual-polarization symbol; the dual-polarization symbol includes a first polarization symbol and a second polarization symbol; bit 0, bit 1, bit 2, bit 3, bit 4, and bit 5 in the 12 bits are mapped to the first polarization symbol; bit 6, bit 7, bit 8, bit 9, bit 10, and bit 11 in the 12 bits are mapped to the second polarization symbol; four bits that are in the 12 bits and that are mapped to the first polarization symbol are from the second bit set, and the other two bits that are in the 12 bits and that are mapped to the first polarization symbol are from the third bit set and/or parity bits of the FEC encoding; and four bits that are in the 12 bits and that are mapped to the second polarization symbol are from the second bit set, and the other two bits that are in the 12 bits and that are mapped to the second polarization symbol are from the third bit set and/or the parity bits of the FEC encoding.

In some possible implementations, the two seventh bit sets include a seventh bit set 1 and a seventh bit set 2, each of the seventh bit set 1 and the seventh bit set 2 includes a total of 336 first bit subsets in 42 rows and 8 columns, and the first bit subset includes a total of 256 bits in 16 rows and 16 columns. It should be understood that a bit distribution pattern of the first bit subset indicates positions of bits from the second bit set in the first bit subset and positions of bits from the third bit set and/or the parity bits of the FEC encoding in the first bit subset. The following describes bit distribution patterns of first bit subsets in different rows in the two seventh bit sets.

Bit distribution patterns of first bit subsets in row 0, row 3, row 6, row 9, row 12, row 15, row 18, row 23, row 26, row 29, row 32, row 35, row 38, and row 41 in the seventh bit set 1 are all a first bit distribution pattern.

Bit distribution patterns of first bit subsets in row 1, row 4, row 7, row 10, row 13, row 16, row 19, row 21, row 24, row 27, row 30, row 33, row 36, and row 39 in the seventh bit set 1 are all a second bit distribution pattern.

Bit distribution patterns of first bit subsets in row 2, row 5, row 8, row 11, row 14, row 17, row 20, row 22, row 25, row 28, row 31, row 34, row 37, and row 40 in the seventh bit set 1 are all a third bit distribution pattern.

Bit distribution patterns of first bit subsets in row 0, row 3, row 6, row 9, row 12, row 15, row 18, row 23, row 26, row 29, row 32, row 35, row 38, and row 41 in the seventh bit set 2 are all the third bit distribution pattern.

Bit distribution patterns of first bit subsets in row 1, row 4, row 7, row 10, row 13, row 16, row 19, row 21, row 24, row 27, row 30, row 33, row 36, and row 39 in the seventh bit set 2 are all the first bit distribution pattern.

Bit distribution patterns of first bit subsets in row 2, row 5, row 8, row 11, row 14, row 17, row 20, row 22, row 25, row 28, row 31, row 34, row 37, and row 40 in the seventh bit set 2 are all the second bit distribution pattern.

In some possible implementations, the second interleaving unit includes a fourth interleaving unit and a fifth interleaving unit. The fourth interleaving unit is configured to perform fourth interleaving on each of the two sixth bit sets to obtain two ninth bit sets. The two ninth bit sets include a ninth bit set 1 and a ninth bit set 2, each of the ninth bit set 1 and the ninth bit set 2 includes a total of 336 second bit subsets in 42 rows and 8 columns, and the second bit subset includes a total of 256 bits in 16 rows and 16 columns. The fifth interleaving unit is configured to perform fifth interleaving on each of the two ninth bit sets to obtain the two seventh bit sets, where the fifth interleaving is used for interleaving 16 bits in each row of each second bit subset in the ninth bit set.

In some possible implementations, a bit distribution pattern of the second bit subset indicates positions of bits from the second bit set in the second bit subset and positions of bits from the third bit set and/or the parity bits of the FEC encoding in the second bit subset. The following describes bit distribution patterns of second bit subsets in different rows in the two ninth bit sets.

Bit distribution patterns of second bit subsets in row 0, row 3, row 6, row 9, row 12, row 15, row 18, row 23, row 26, row 29, row 32, row 35, row 38, and row 41 in the ninth bit set 1 are all a fourth bit distribution pattern.

Bit distribution patterns of second bit subsets in row 1, row 4, row 7, row 10, row 13, row 16, row 19, row 21, row 24, row 27, row 30, row 33, row 36, and row 39 in the ninth bit set 1 are all a fifth bit distribution pattern.

Bit distribution patterns of second bit subsets in row 2, row 5, row 8, row 11, row 14, row 17, row 20, row 22, row 25, row 28, row 31, row 34, row 37, and row 40 in the ninth bit set 1 are all a sixth bit distribution pattern.

Bit distribution patterns of second bit subsets in row 0, row 3, row 6, row 9, row 12, row 15, row 18, row 23, row 26, row 29, row 32, row 35, row 38, and row 41 in the ninth bit set 2 are all the sixth bit distribution pattern.

Bit distribution patterns of second bit subsets in row 1, row 4, row 7, row 10, row 13, row 16, row 19, row 21, row 24, row 27, row 30, row 33, row 36, and row 39 in the ninth bit set 2 are all the fourth bit distribution pattern.

Bit distribution patterns of second bit subsets in row 2, row 5, row 8, row 11, row 14, row 17, row 20, row 22, row 25, row 28, row 31, row 34, row 37, and row 40 in the ninth bit set 2 are all the fifth bit distribution pattern.

In some possible implementations, the two sixth bit sets include a sixth bit set 1 and a sixth bit set 2, each of the sixth bit set 1 and the sixth bit set 2 includes a total of 336 third bit subsets in 42 rows and 8 columns, and the third bit subset includes a total of 256 bits in 16 rows and 16 columns. In the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding.

In some possible implementations, a bit distribution pattern of the third bit subset indicates positions of bits from the second bit set in the third bit subset and positions of bits from the third bit set and/or the parity bits of the FEC encoding in the third bit subset. The following describes bit distribution patterns of third bit subsets in different rows in the two sixth bit sets.

Bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 1 are all the fourth bit distribution pattern.

Bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 1 are all the fifth bit distribution pattern.

Bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 1 are all the sixth bit distribution pattern.

Bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 2 are all the sixth bit distribution pattern.

Bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 2 are all the fourth bit distribution pattern.

Bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 2 are all the fifth bit distribution pattern.

In some possible implementations, the two seventh bit sets include a seventh bit set 1 and a seventh bit set 2, each of the seventh bit set 1 and the seventh bit set 2 includes a total of 336 first bit subsets in 42 rows and 8 columns, and the first bit subset includes a total of 256 bits in 16 rows and 16 columns. A bit distribution pattern of the first bit subset indicates positions of bits from the second bit set in the first bit subset and positions of bits from the third bit set and/or the parity bits of the FEC encoding in the first bit subset. The following describes bit distribution patterns of first bit subsets in different rows in the two seventh bit sets.

Bit distribution patterns of first bit subsets in row 0, row 3, row 6, row 9, row 12, row 15, row 18, row 22, row 25, row 28, row 31, row 34, row 37, and row 40 in the seventh bit set 1 are all a first bit distribution pattern.

Bit distribution patterns of first bit subsets in row 1, row 4, row 7, row 10, row 13, row 16, row 19, row 23, row 26, row 29, row 32, row 35, row 38, and row 41 in the seventh bit set 1 are all a second bit distribution pattern.

Bit distribution patterns of first bit subsets in row 2, row 5, row 8, row 11, row 14, row 17, row 20, row 21, row 24, row 27, row 30, row 33, row 36, and row 39 in the seventh bit set 1 are all a third bit distribution pattern.

Bit distribution patterns of first bit subsets in row 0, row 3, row 6, row 9, row 12, row 15, row 18, row 22, row 25, row 28, row 31, row 34, row 37, and row 40 in the seventh bit set 2 are all the second bit distribution pattern.

Bit distribution patterns of first bit subsets in row 1, row 4, row 7, row 10, row 13, row 16, row 19, row 23, row 26, row 29, row 32, row 35, row 38, and row 41 in the seventh bit set 2 are all the third bit distribution pattern.

Bit distribution patterns of first bit subsets in row 2, row 5, row 8, row 11, row 14, row 17, row 20, row 21, row 24, row 27, row 30, row 33, row 36, and row 39 in the seventh bit set 2 are all the first bit distribution pattern.

In some possible implementations, the second interleaving unit includes a fourth interleaving unit and a fifth interleaving unit. The fourth interleaving unit is configured to perform fourth interleaving on each of the two sixth bit sets to obtain two ninth bit sets. The two ninth bit sets include a ninth bit set 1 and a ninth bit set 2, each of the ninth bit set 1 and the ninth bit set 2 includes a total of 336 second bit subsets in 42 rows and 8 columns, and the second bit subset includes a total of 256 bits in 16 rows and 16 columns. The fifth interleaving unit is configured to perform fifth interleaving on each of the two ninth bit sets to obtain the two seventh bit sets, where the fifth interleaving is used for interleaving 16 bits in each row of each second bit subset in the ninth bit set.

In some possible implementations, a bit distribution pattern of the second bit subset indicates positions of bits from the second bit set in the second bit subset and positions of bits from the third bit set and/or the parity bits of the FEC encoding in the second bit subset. The following describes bit distribution patterns of second bit subsets in different rows in the two ninth bit sets.

Bit distribution patterns of second bit subsets in row 0, row 3, row 6, row 9, row 12, row 15, row 18, row 22, row 25, row 28, row 31, row 34, row 37, and row 40 in the ninth bit set 1 are all a fourth bit distribution pattern.

Bit distribution patterns of second bit subsets in row 1, row 4, row 7, row 10, row 13, row 16, row 19, row 23, row 26, row 29, row 32, row 35, row 38, and row 41 in the ninth bit set 1 are all a fifth bit distribution pattern.

Bit distribution patterns of second bit subsets in row 2, row 5, row 8, row 11, row 14, row 17, row 20, row 21, row 24, row 27, row 30, row 33, row 36, and row 39 in the ninth bit set 1 are all a sixth bit distribution pattern.

Bit distribution patterns of second bit subsets in row 0, row 3, row 6, row 9, row 12, row 15, row 18, row 22, row 25, row 28, row 31, row 34, row 37, and row 40 in the ninth bit set 2 are all the fifth bit distribution pattern.

Bit distribution patterns of second bit subsets in row 1, row 4, row 7, row 10, row 13, row 16, row 19, row 23, row 26, row 29, row 32, row 35, row 38, and row 41 in the ninth bit set 2 are all the sixth bit distribution pattern.

Bit distribution patterns of second bit subsets in row 2, row 5, row 8, row 11, row 14, row 17, row 20, row 21, row 24, row 27, row 30, row 33, row 36, and row 39 in the ninth bit set 2 are all the fourth bit distribution pattern.

In some possible implementations, the two sixth bit sets include a sixth bit set 1 and a sixth bit set 2, each of the sixth bit set 1 and the sixth bit set 2 includes a total of 336 third bit subsets in 42 rows and 8 columns, and the third bit subset includes a total of 256 bits in 16 rows and 16 columns. In the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding.

In some possible implementations, a bit distribution pattern of the third bit subset indicates positions of bits from the second bit set in the third bit subset and positions of bits from the third bit set and/or the parity bits of the FEC encoding in the third bit subset. The following describes bit distribution patterns of third bit subsets in different rows in the two sixth bit sets.

Bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 1 are all the fourth bit distribution pattern.

Bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 1 are all the fifth bit distribution pattern.

Bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 1 are all the sixth bit distribution pattern.

Bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 2 are all the fifth bit distribution pattern.

Bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 2 are all the sixth bit distribution pattern.

Bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 2 are all the fourth bit distribution pattern.

In some possible implementations, bit 0, bit 1, and bit 2 in the 12 bits are mapped to a first component of the first polarization symbol; bit 3, bit 4, and bit 5 in the 12 bits are mapped to a second component of the first polarization symbol; bit 6, bit 7, and bit 8 in the 12 bits are mapped to a first component of the second polarization symbol; and bit 9, bit 10, and bit 11 in the 12 bits are mapped to a second component of the second polarization symbol. Herein, a specific mapping rule for mapping 12 bits to obtain one dual-polarization symbol is provided, and has a good practical effect.

In some possible implementations, according to the foregoing mapping rule, the first bit distribution pattern is shown in FIG. 22a, the second bit distribution pattern is shown in FIG. 22b, the third bit distribution pattern is shown in FIG. 22c, the fourth bit distribution pattern is shown in FIG. 11a, the fifth bit distribution pattern is shown in FIG. 11b, and the sixth bit distribution pattern is shown in FIG. 11c.

In some possible implementations, a polarization direction of the first polarization symbol and a polarization direction of the second polarization symbol are orthogonal to each other. The first component is an I component, and the second component is a Q component; or the first component is a Q component, and the second component is an I component.

In some possible implementations, the two seventh bit sets include the seventh bit set 1 and the seventh bit set 2. The third interleaving unit includes an intra-block interleaving unit 1, an intra-block interleaving unit 2, and an inter-block interleaving unit. The intra-block interleaving unit 1 is configured to perform intra-block interleaving on the seventh bit set 1 to obtain a tenth bit set 1. The intra-block interleaving unit 2 is configured to perform intra-block interleaving on the seventh bit set 2 to obtain a tenth bit set 2. The inter-block interleaving unit performs inter-block interleaving on the tenth bit set 1 and the tenth bit set 2 to obtain the eighth bit set, where the eighth bit set includes a total of 672 fourth bit subsets in 84 rows and 8 columns.

In some possible implementations, the first bit set includes a first bit set 1 and a first bit set 2. The PCS unit includes a first PCS subunit and a second PCS subunit. The first PCS subunit is configured to perform PCS processing on the first bit set 1 to obtain a second bit set 1. The second PCS subunit is configured to perform PCS processing on the first bit set 2 to obtain a second bit set 2. The second bit set includes the second bit set 1 and the second bit set 2.

In some possible implementations, the third bit set includes a third bit set 1 and a third bit set 2. The first interleaving unit is specifically configured to perform first interleaving on the second bit set 1, the second bit set 2, the third bit set 1, and the third bit set 2 to obtain the fourth bit set 1 and the fourth bit set 2.

In some possible implementations, the third bit set includes a third bit set 1 and a third bit set 2. The first interleaving unit includes a first interleaving subunit and a second interleaving subunit. The first interleaving subunit is configured to perform first interleaving on the second bit set 1 and the third bit set 1 to obtain the fourth bit set 1. The second interleaving subunit is configured to perform first interleaving on the second bit set 2 and the third bit set 2 to obtain the fourth bit set 2.

In some possible implementations, the first interleaving unit is specifically configured to perform first interleaving on the second bit set 1, the second bit set 2, and the third bit set to obtain the fourth bit set 1 and the fourth bit set 2.

In some possible implementations, amplitude bits mapped to the dual-polarization symbol are from the second bit set, and sign bits mapped to the dual-polarization symbol are from the third bit set and/or the parity bits of the FEC encoding.

In some possible implementations, the data processing apparatus further includes a first processing unit. Before that specifically, the PCS processing is performed on the first bit set in the plurality of bits to obtain the second bit set, the first processing unit is configured to: obtain first data from a data frame, where the first data includes bits in r rows and q columns, r is an integer greater than 0, and q is an integer greater than 0; perform CRC on the first data and/or insert pad bits into the first data to obtain second data, where the second data includes d_{CRC} parity bits inserted through the CRC and/or d_{PAD} pad bits, d_{CRC} is an integer greater than or equal to 0, and d_{PAD} is an integer greater than or equal to 0; and scrambling the second data to obtain third data, where a quantity of bits of the third data is d_{scr} = r × q + d_{CP} , and d_{CP} = d_{CRC} + d_{PAD} ; and obtain e×L bits from the third data, and group the e×L bits into L groups of bits, where each group of the L groups of bits includes e bits.

In some possible implementations, d_{scr} = 168 × e.

In some possible implementations, d_{scr} = 84 × e.

In some possible implementations, d_{scr} = 12 × e.

In some possible implementations, the data processing apparatus further includes a second processing unit. After that the third interleaving is performed on the two seventh bit sets to obtain the eighth bit set, the second processing unit is configured to: merge L eighth bit sets to obtain fourth data; perform symbol mapping and polarization distribution on the fourth data to obtain a dual-polarization symbol stream, where every 12 consecutive bits in the fourth data are mapped to obtain one dual-polarization symbol; and perform DSP framing on the dual-polarization symbol stream.

According to a third aspect, this application provides a chip. The chip includes a processor, and the processor is configured to perform the method described in any implementation of the first aspect.

According to a fourth aspect, an embodiment of this application provides an optical module. The optical module includes a processor and an interface. The processor is configured to: perform the method described in any implementation of the first aspect, and send a signal through the interface. For example, the interface is configured to: send a signal from the processor, or transmit a received signal to the processor.

In some possible implementations, the interface is specifically an electrical interface, and the processor is configured to send an electrical signal through the interface. For example, the processor performs the method described in any implementation of the first aspect, performs data processing on the eighth bit set to obtain a DSP super-frame, and sends the DSP super-frame through the interface. The data processing includes symbol mapping, polarization distribution, and DSP framing.

In some possible implementations, the interface is specifically an optical interface, and the optical module further includes a modulator. For example, the processor performs the method described in any implementation of the first aspect, and performs data processing on the eighth bit set to obtain a DSP super-frame. Then, the modulator performs signal processing, for example, electrical-to-optical conversion, based on the DSP super-frame to obtain an optical signal, and sends the optical signal through the interface. The data processing includes symbol mapping, polarization distribution, and DSP framing.

According to a fifth aspect, an embodiment of this application provides a sending device. The sending device includes a host side device and the optical module described in any implementation of the fourth aspect. The optical module is configured to: generate an optical signal based on data from the host side device, and send the optical signal.

According to a sixth aspect, an embodiment of this application provides a communication system. The communication system includes the sending device described in the fifth aspect and a receiving device. The sending device is configured to send an optical signal to the receiving device.

According to a seventh aspect, this application provides a computer-readable storage medium. The computer-readable storage medium stores instructions. When the instructions are executed by a computer, the method described in any implementation of the first aspect is implemented.

According to an eighth aspect, this application provides a computer program product. The computer program product includes program instructions. When the computer program product is executed, the method described in any implementation of the first aspect is implemented.

### BRIEF DESCRIPTION OF DRAWINGS

FIG. 1 is a diagram of a communication system to which an embodiment of this application is applied;
FIG. 2 is a diagram of a structure of a data frame;
FIG. 3 is a diagram of an embodiment of first data processing according to an embodiment of this application;
FIG. 4a is a diagram of an embodiment of second data processing according to an embodiment of this application;
FIG. 4b is a diagram of an embodiment of second data sub-processing according to an embodiment of this application;
FIG. 5a is a diagram of an embodiment of third data processing according to an embodiment of this application;
FIG. 5b is a diagram of another embodiment of third data processing according to an embodiment of this application;
FIG. 5c is a diagram of still another embodiment of third data processing according to an embodiment of this application;
FIG. 6a is a diagram of an embodiment of PCS processing and first interleaving according to an embodiment of this application;
FIG. 6b is a diagram of another embodiment of PCS processing and first interleaving according to an embodiment of this application;
FIG. 6c is a diagram of still another embodiment of PCS processing and first interleaving according to an embodiment of this application;
FIG. 6d is a diagram of yet another embodiment of PCS processing and first interleaving according to an embodiment of this application;
FIG. 7 is a diagram of seven columns of bit blocks in each row according to an embodiment of this application;
FIG. 8 is a diagram of a fifth bit set according to an embodiment of this application;
FIG. 9 is a diagram of a 16×16 bit block according to an embodiment of this application;
FIG. 10 is a diagram of a 16×15 bit block according to an embodiment of this application;
FIG. 11a is a diagram of a first bit pattern according to an embodiment of this application;
FIG. 11b is a diagram of a second bit pattern according to an embodiment of this application;
FIG. 11c is a diagram of a third bit pattern according to an embodiment of this application;
FIG. 12a is a diagram of a fourth bit pattern according to an embodiment of this application;
FIG. 12b is a diagram of a fifth bit pattern according to an embodiment of this application;
FIG. 12c is a diagram of a sixth bit pattern according to an embodiment of this application;
FIG. 12d is a diagram of another fourth bit pattern according to an embodiment of this application;
FIG. 12e is a diagram of another fifth bit pattern according to an embodiment of this application;
FIG. 12f is a diagram of another sixth bit pattern according to an embodiment of this application;
FIG. 13 is a diagram of a seventh bit pattern according to an embodiment of this application;
FIG. 14 is a diagram of an eighth bit pattern according to an embodiment of this application;
FIG. 15 is a diagram of an implementation of performing data processing on two first bit streams according to an embodiment of this application;
FIG. 16 is a diagram of eight columns of bit blocks in each row according to an embodiment of this application;
FIG. 17 is a diagram of a sixth bit set according to an embodiment of this application;
FIG. 18a is a diagram of a ninth bit pattern according to an embodiment of this application;
FIG. 18b is a diagram of a tenth bit pattern according to an embodiment of this application;
FIG. 19 is a diagram of a ninth bit set according to an embodiment of this application;
FIG. 20 is a diagram of a seventh bit set according to an embodiment of this application;
FIG. 21 is a diagram of an implementation of fifth interleaving according to an embodiment of this application;
FIG. 22a is a diagram of an eleventh bit pattern according to an embodiment of this application;
FIG. 22b is a diagram of a twelfth bit pattern according to an embodiment of this application;
FIG. 22c is a diagram of a thirteenth bit pattern according to an embodiment of this application;
FIG. 23 is a diagram of an implementation of intra-block interleaving according to an embodiment of this application;
FIG. 24a is a diagram of a fourteenth bit pattern according to an embodiment of this application;
FIG. 24b is a diagram of a fifteenth bit pattern according to an embodiment of this application;
FIG. 24c is a diagram of a sixteenth bit pattern according to an embodiment of this application;
FIG. 25 is a diagram of an embodiment of inter-block interleaving according to an embodiment of this application;
FIG. 26 is a diagram of an inter-block interleaved bit set according to an embodiment of this application;
FIG. 27 is a diagram of a constellation diagram in a polarization direction according to an embodiment of this application;
FIG. 28 is a diagram of an application scenario of second data processing according to an embodiment of this application;
FIG. 29 is a diagram of another application scenario of second data processing according to an embodiment of this application;

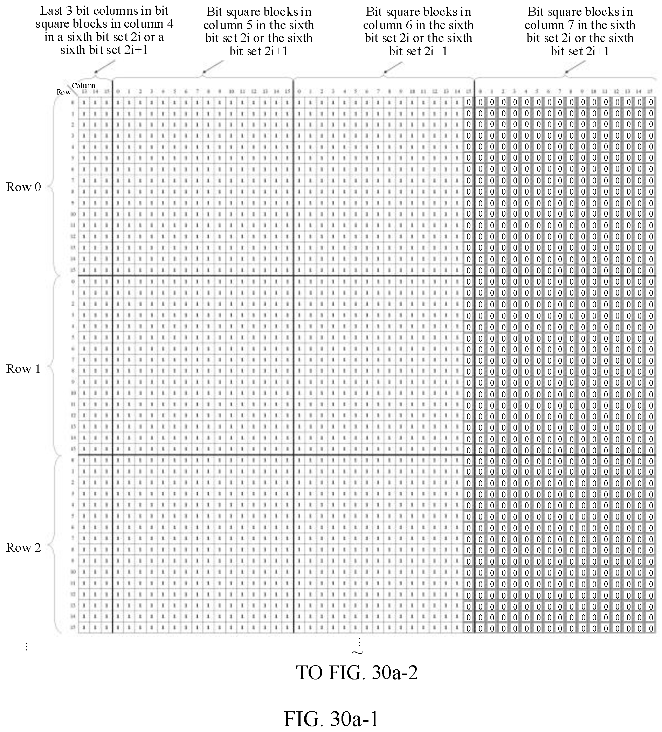

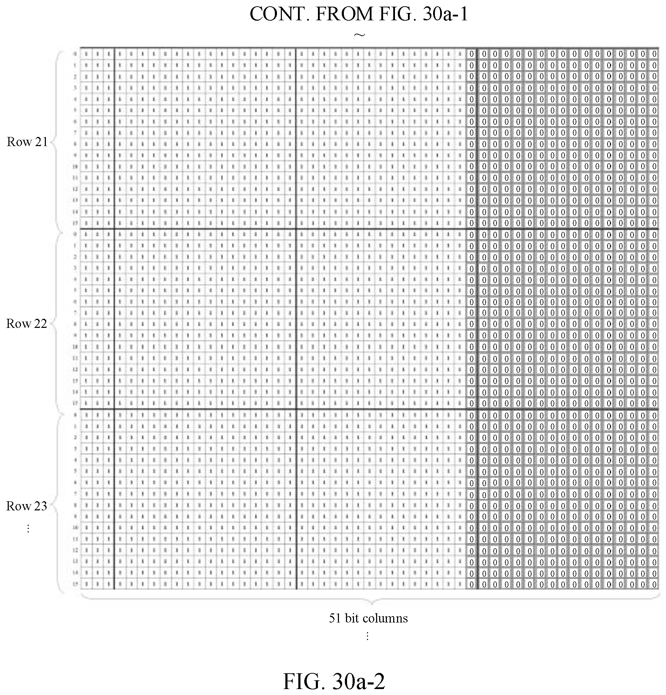

FIG. 30a-1 and FIG. 30a-2 are a diagram of bit distribution of last 51 bit columns in a sixth bit set 2i or a sixth bit set 2i+1 according to an embodiment of this application;

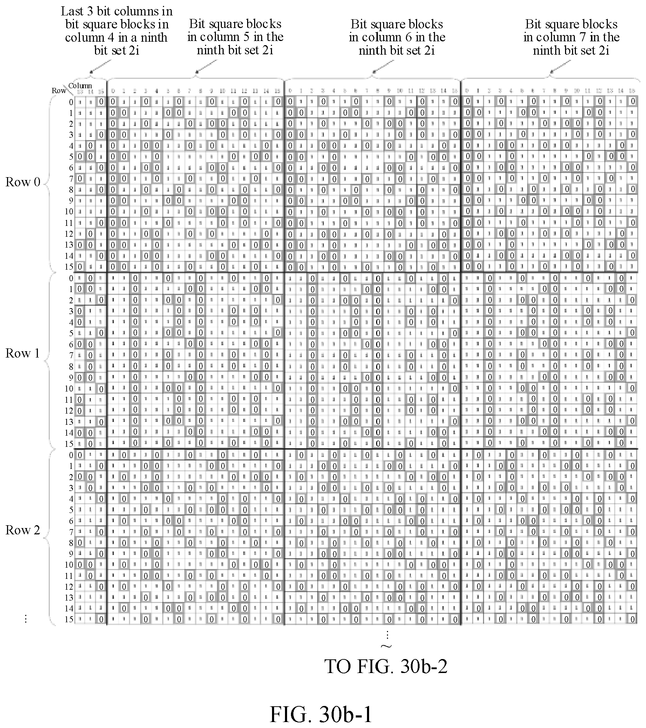

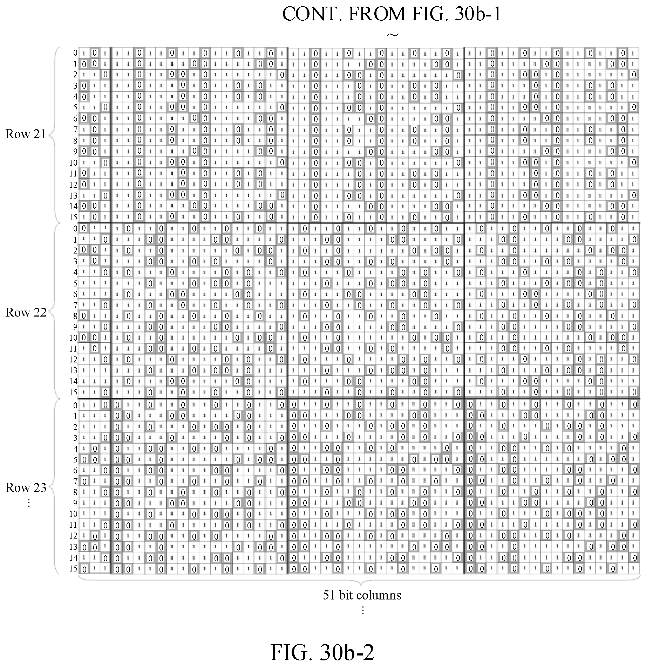

FIG. 30b-1 and FIG. 30b-2 are a diagram of bit distribution of a ninth bit set 2i according to an embodiment of this application;

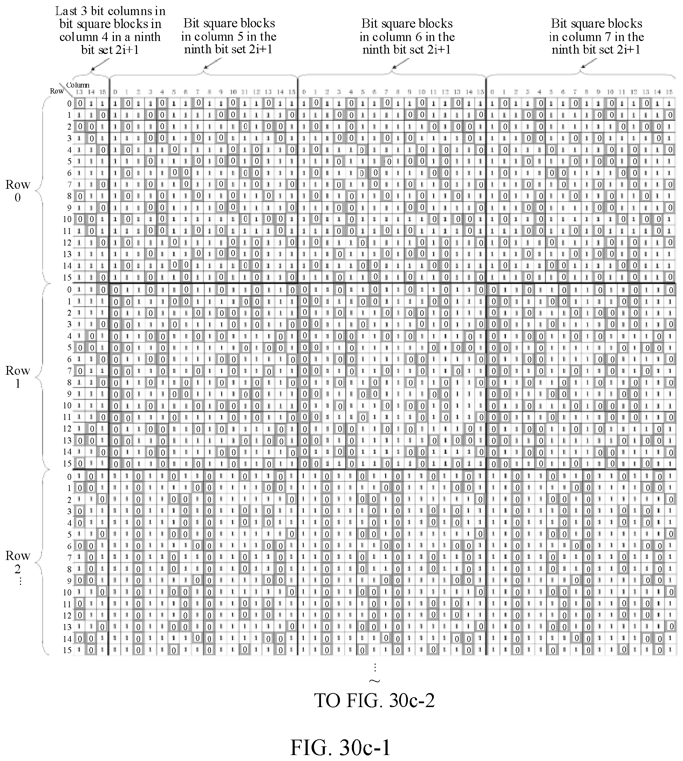

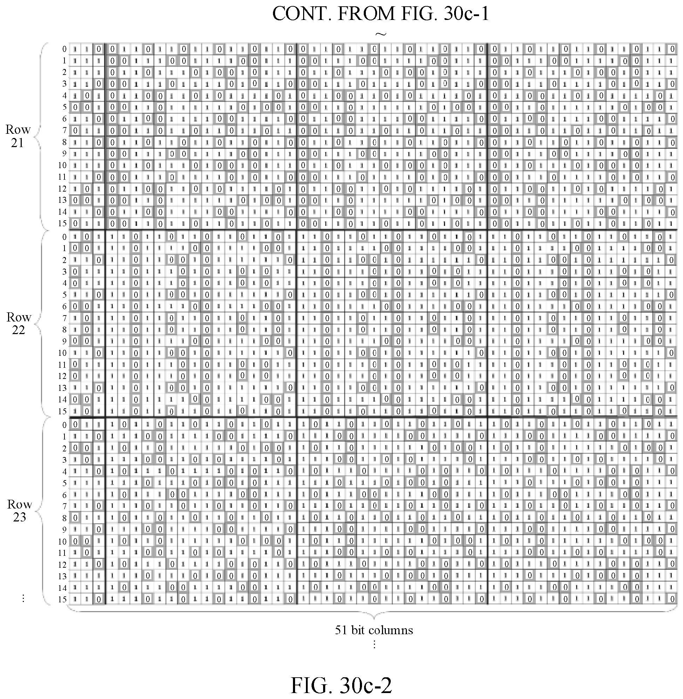

FIG. 30c-1 and FIG. 30c-2 are a diagram of bit distribution of a ninth bit set 2i+1 according to an embodiment of this application;

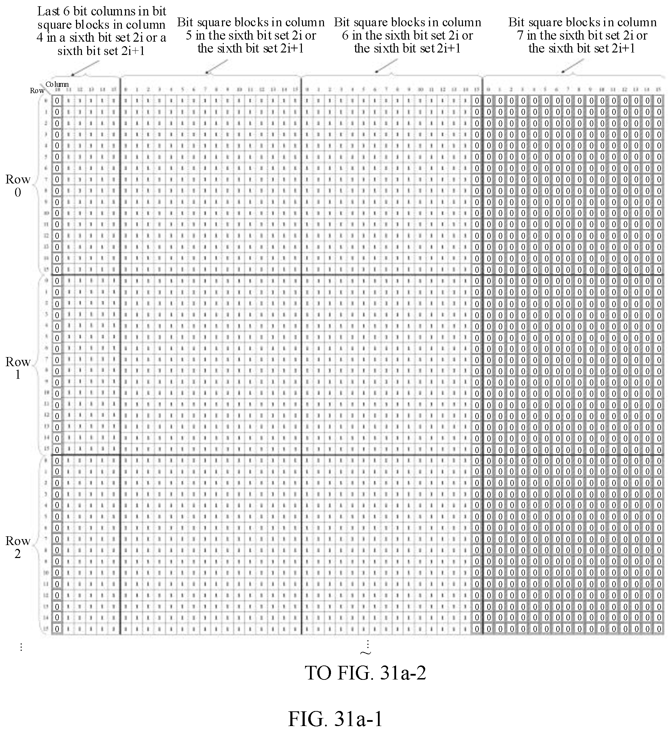

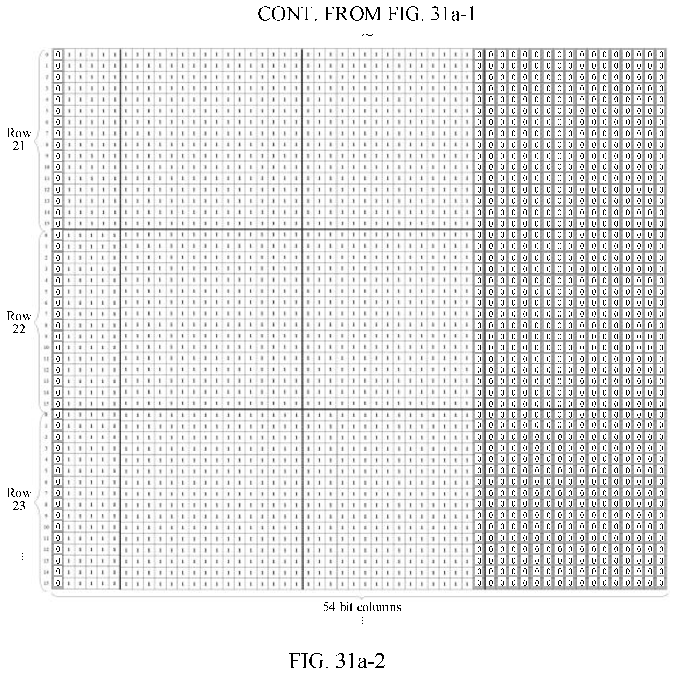

FIG. 31a-1 and FIG. 31a-2 are a diagram of bit distribution of last 54 bit columns in a sixth bit set 2i or a sixth bit set 2i+1 according to an embodiment of this application;

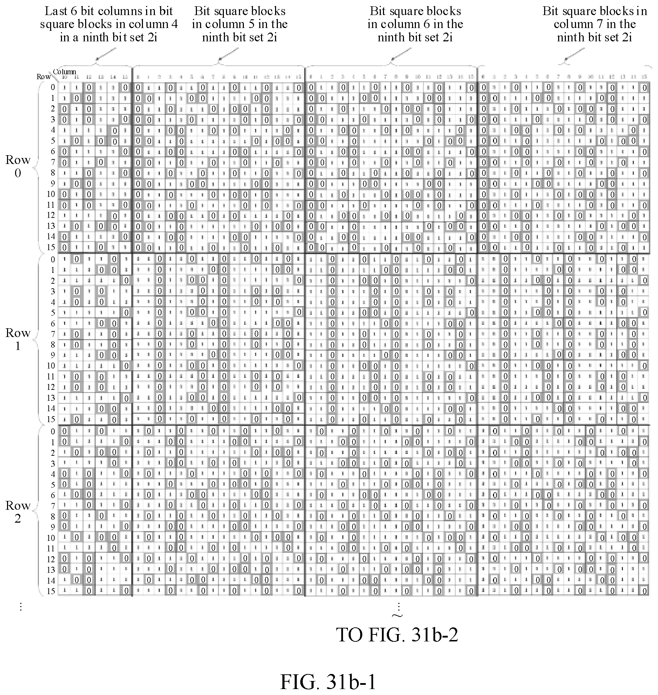

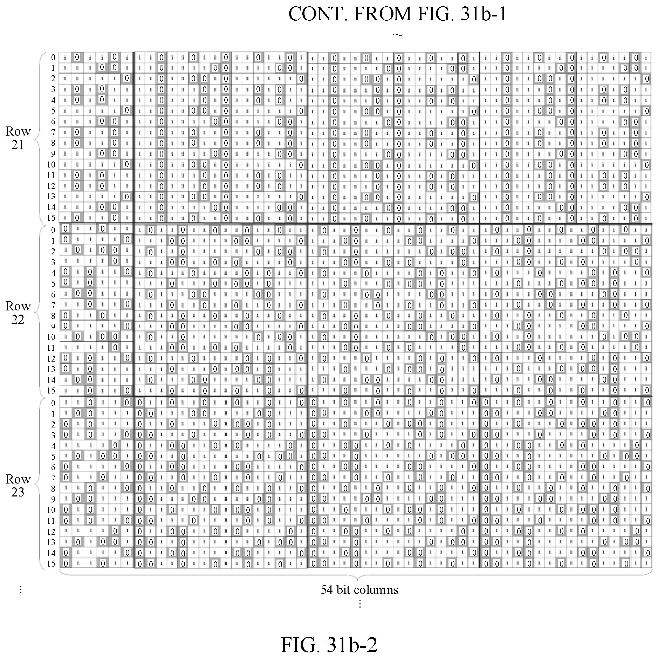

FIG. 31b-1 and FIG. 31b-2 are a diagram of bit distribution of a ninth bit set 2i according to an embodiment of this application;

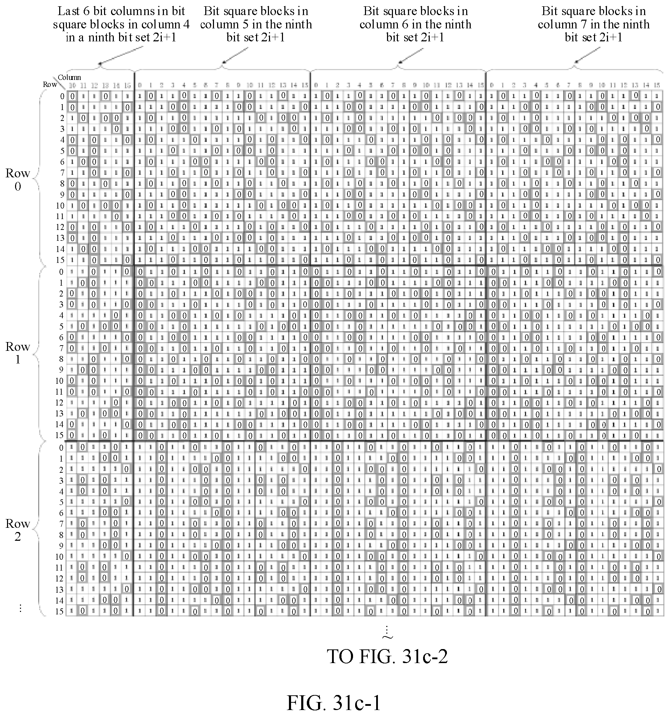

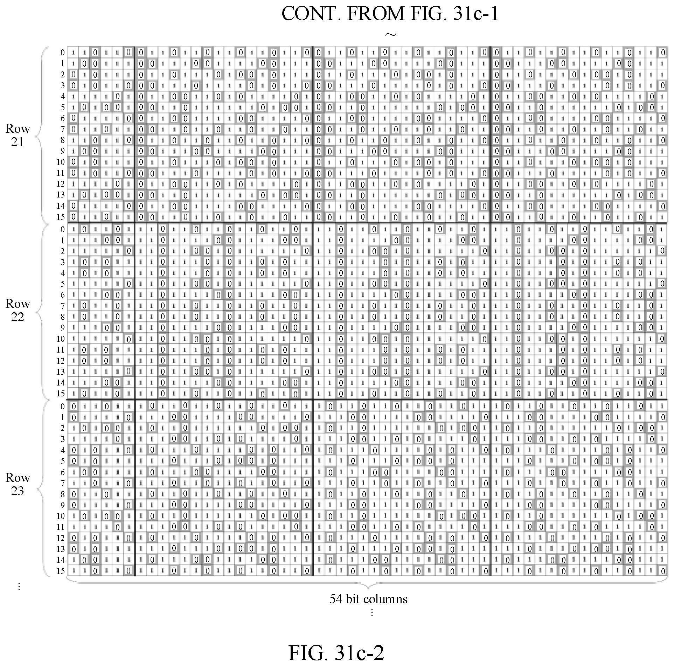

FIG. 31c-1 and FIG. 31c-2 are a diagram of bit distribution of a ninth bit set 2i+1 according to an embodiment of this application;

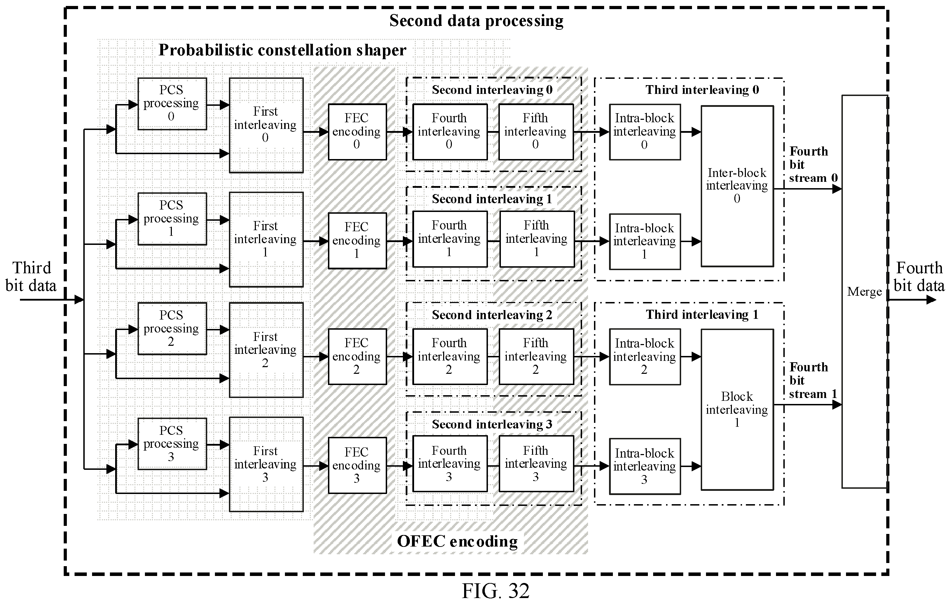

FIG. 32 is a diagram of still another application scenario of second data processing according to an embodiment of this application;

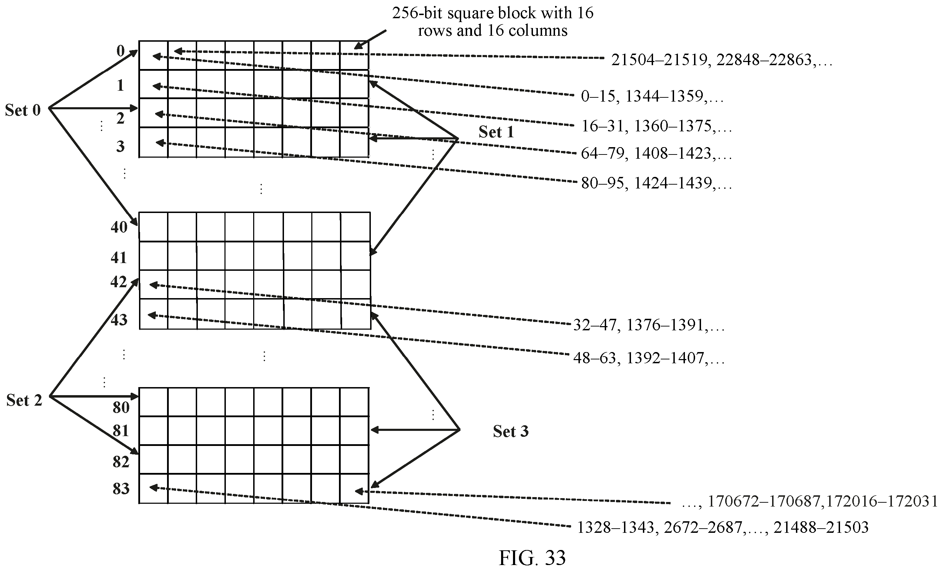

FIG. 33 is a diagram of another embodiment of inter-block interleaving according to an embodiment of this application;

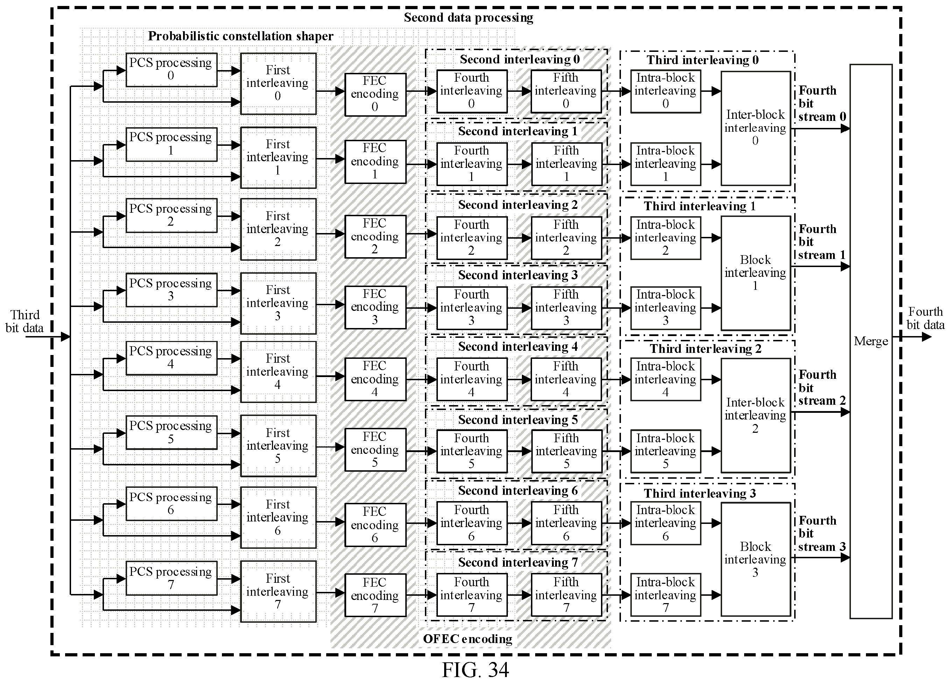

FIG. 34 is a diagram of yet another application scenario of second data processing according to an embodiment of this application;

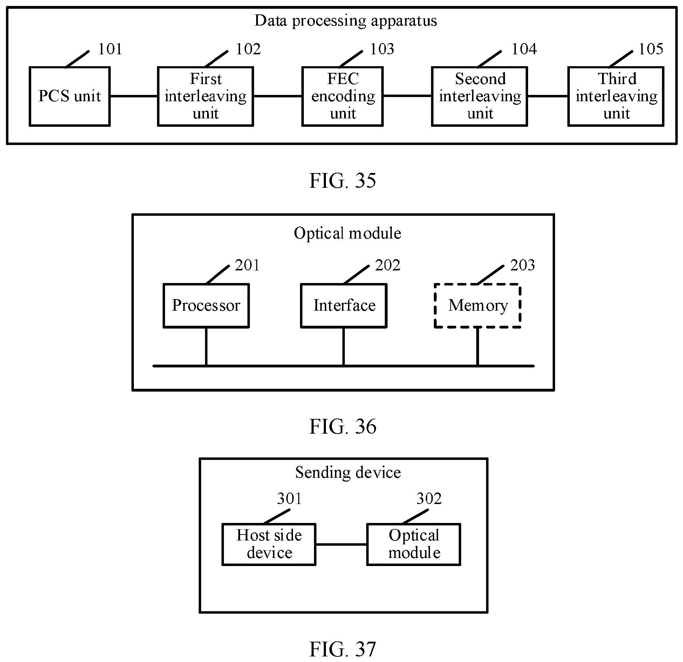

FIG. 35 is a diagram of a structure of a data processing apparatus according to an embodiment of this application.
FIG. 36 is a diagram of a structure of an optical module according to an embodiment of this application; and
FIG. 37 is a diagram of a structure of a sending device according to an embodiment of this application.

### DESCRIPTION OF EMBODIMENTS

Embodiments of this application provide a data processing method and a data processing apparatus, so that DP-64QAM modulation is used in combination with FEC encoding, interleaving, and PCS technologies, to ensure simple overall data processing operations, low complexity, and low power consumption, while improving spectrum utilization and enhancing system transmission performance, to adapt to future metro telecommunication transmission and metro DCI scenarios.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly enumerated steps or units, but may include other steps or units not expressly enumerated or inherent to the process, method, product, or device.

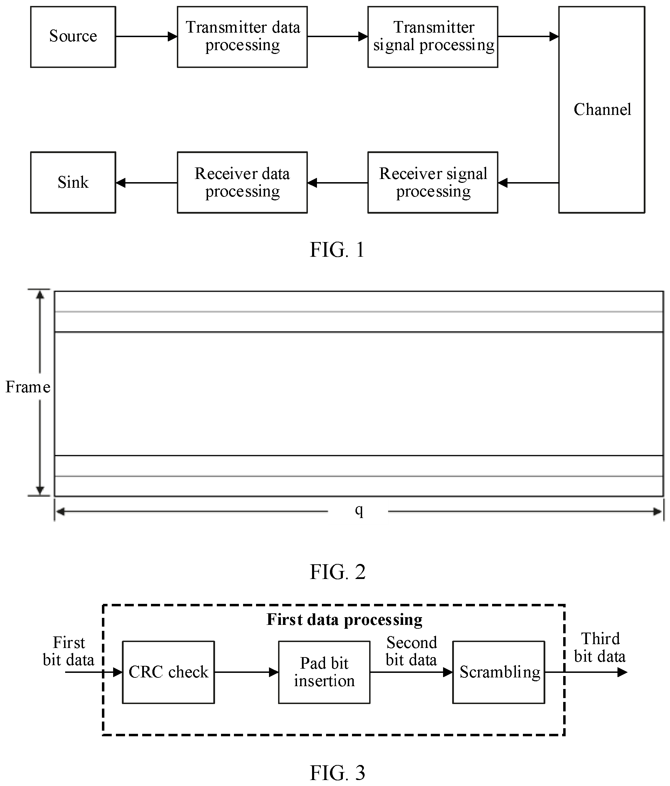

FIG. 1 is a diagram of a communication system to which an embodiment of this application is applied. As shown in FIG. 1, at a transmitter, a source provides a to-be-sent data stream, and a transmitter data processor receives the data stream. The transmitter data processor first performs data processing including PCS processing, encoding, interleaving, modulation, and DSP framing on the data stream to obtain a symbol data stream, and then sends the symbol data stream to a transmitter signal processor for signal processing, where a processed symbol data stream is transmitted to a receiver device over a channel. After receiving a distorted signal generated due to noise on the channel or other impairments, the receiver device sends the signal to a receiver signal processor for dispersion compensation, synchronization, phase recovery, and other operations. Then, the signal is sent to a receiver data processor for demodulation, deinterleaving, decoding, and other operations to restore original data, so as to transmit the restored data to a destination.

It should be noted that for some operation symbols in formulas in embodiments of this application, an $\left⌊a\right⌋$ operation in embodiments of this application indicates performing a floor operation on a, for example, $\left⌊1.5\right⌋ = 1$, and $\left⌊-1.5\right⌋ = - 2$; and a b%c operation in embodiments of this application indicates b modulo c. When b is a non-negative number, a value of b%c is a remainder obtained by dividing b by c. For example, 8%3=2 and 2%3=2. When b is a negative number, a value of b%c is obtained by performing a modulo operation on a positive integer obtained by adding an integer multiple of c to b. For example, -9%16=7, and -10%3=2.

It should be noted that a bit set and a bit subset in the specification and claims of this application are merely concepts introduced for ease of description. In an actual application, a data stream is a whole and there is no division, and each bit set and each bit subset may be considered as one or more bits in the data stream. It should be understood that the bit set and the bit subset may alternatively be presented in a form of a matrix, an array, a sequence, or the like. This is not specifically limited herein.

FIG. 2 is a diagram of a structure of a data frame (frame). As shown in FIG. 2, the data frame includes a plurality of rows of bits, and each row includes q bits. It should be understood that a specific type of the data frame is not limited in this application. In an example, an 800ZR frame, a FlexO-8 frame, or a FlexO-8e frame includes 512 rows, where each row includes 10280 bits. In another example, to better adapt to PCS processing, an 800ZR frame, a FlexO-8 frame, or a FlexO-8e frame may be represented as including 2560 rows, where each row includes 2056 bits. In still another example, one 1.6T data frame includes 5120 rows, where each row includes 2056 bits. In yet another example, one 1.2T data frame includes 3840 rows, where each row includes 2056 bits. In some specific applications, the integer q is an integer multiple of 257. Typically, q is 10280, 8224, 4112, 2056, or the like.

It should be noted that the data processing method provided in this application may be divided into three parts, which are respectively denoted as "first data processing", "second data processing", and "third data processing". The following separately describes in detail the "first data processing", the "second data processing", and the "third data processing".

FIG. 3 is a diagram of an embodiment of first data processing according to an embodiment of this application. As shown in FIG. 3, the first data processing includes cyclic redundancy check (Cyclic Redundancy Check, CRC), pad insertion (Pad Insertion), and scrambling (scrambling). In an actual application, at least one of CRC and pad insertion may be performed. Specifically, first bit data is obtained from a data frame, where the first bit data includes bits in r rows and q columns, r is an integer greater than 0, and q is an integer greater than 0. Hereinafter, r_{Frame} uniformly represents the r rows included in the first bit data.

In an example, the first bit data has a total of dᵢₙ = q × r_{Frame} bits. Then, CRC and/or pad bit insertion are/is performed on the first bit data, to obtain second bit data. d_{CRC} CRC parity bits are added in the CRC operation, and d_{PAD} pad (Pad) bits are inserted in the pad insertion operation. Further, the second bit data is scrambled to obtain third bit data, where a quantity of bits of the third bit data is d_{scr} = q × r_{Frame} + d_{CRC} + d_{PAD} scrambled bits, and d_{CRC} is an integer greater than or equal to 0, d_{PAD} is an integer greater than or equal to 0, and d_{CP} = d_{CRC} + d_{PAD} may be denoted. In this case, an overhead corresponding to the CRC check and the pad bit insertion is OH_{CP} = d_{scr}/dᵢₙ - 1 = (d_{CRC} + d_{PAD})/(q × f_{Frame}).

In an example, when d_{PAD} = 0, no pad bit is inserted into CRC-checked q × r_{Frame} + d_{CRC} bits, but scrambling is directly performed on the bits. In another example, to implement lower delays and lower complexity, the CRC check bits are bypassed (bypassed) and replaced with pad bits. In this case, d_{CRC} = 0.

It should be noted that, in some specific application scenarios, CRC-32 is used for the CRC check. In an example, CRC-32 operations are performed on the first bit data for p times in total, where p is an integer greater than 1 and the integer r_{Frame} is divisible by p. In this case, d_{CRC} = 32 × p. More specifically, for r_{Frame} rows of data obtained from the data frame, CRC-32 operations are performed on a total of q × r_{Frame}/p bits in every r_{Frame}/p rows to add 32 parity bits, and CRC-32 operations are repeatedly performed for p times to add a total of d_{CRC} = 32 × p CRC-32 parity bits.

It should be noted that, in some other specific application scenarios, CRC-32 operations are performed on the first bit data for p times in total, where p is an integer greater than 1 and the integer r_{Frame} is indivisible by p. In this case, r_{F0} × (p - 1) + r_{F1} = r_{Frame} is considered, where the integer r_{F0} is greater than the integer r_{F1}. In some specific implementations, the integer ${r}_{F 0} = \left⌊{r}_{Frame}/p\right⌋ + 1$ , the integer r_{F1} = r_{Frame} - r_{F0} × (p - 1), and r_{F0} > r_{F1}. The following provides a specific implementation. For r_{Frame} rows of data obtained from the data frame, CRC-32 is separately performed on a total of q × r_{F0} bits in every r_{F0} rows in first r_{F0} × (p - 1) rows of the r_{Frame} rows of data to add 32 parity bits, so as to obtain a total of 32 × (p - 1) CRC parity bits, and CRC-32 operations are performed once on a total of q × r_{F1} bits in last r_{F1} rows to add 32 parity bits, so as to obtain a total of d_{CRC} = 32 × (p - 1) + 32 = 32 × p CRC-32 parity bits. It should be noted that, in some specific implementations, q × r_{F0} =41120 is selected. In this case, CRC-32 operations in the existing 800G-ZR may be directly used as CRC-32 encoding and corresponding CRC detection operations, where the CRC-32 operations are performed on a total of 4 × 10280 =41120 bits of data in four rows and 10280 columns in the existing 800G-ZR. In some specific implementations, q = 2056 and r_{F0} = 20.

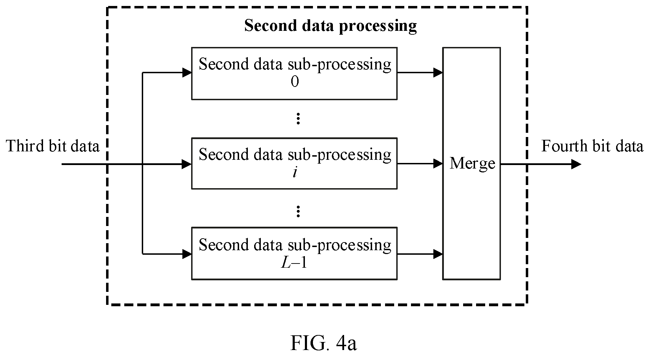

FIG. 4a is a diagram of an embodiment of second data processing according to an embodiment of this application. As shown in FIG. 4a, a plurality of pieces of bit data are obtained from third bit data that is output through first data processing, and are sent to L second data sub-processing (namely, second data sub-processing 0, second data sub-processing 1, ..., and second data sub-processing L-1) in a round-robin fashion. For example, e bits are input into each second data sub-processing. L data streams may be obtained through the L second data sub-processing, and then the L data streams are merged (Merged) to obtain an output of the second data processing, namely, fourth bit data in FIG. 4a, where L is an integer greater than 0.

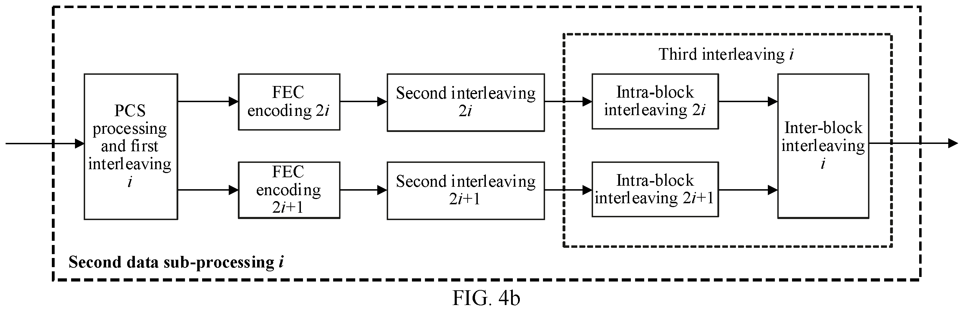

FIG. 4b is a diagram of an embodiment of second data sub-processing according to an embodiment of this application. As shown in FIG. 4b, operations of second data sub-processing i (i = 0, 1, ... , L - 1) include PCS processing and first interleaving (namely, "PCS processing and first interleaving i" in FIG. 4b), FEC encoding (namely, "FEC encoding 2i" and "FEC encoding 2i+1" in FIG. 4b), second interleaving (namely, "second interleaving 2i" and "second interleaving 2i+1" in FIG. 4b), and third interleaving (namely, "third interleaving i" in FIG. 4b). The third interleaving includes intra-block interleaving (namely, "intra-block interleaving 2i" and "intra-block interleaving 2i+1" in FIG. 4b) and inter-block interleaving (namely, "inter-block interleaving i" in FIG. 4b). The third interleaving is also referred to as block interleaving (Block Interleaver). It should be understood that various interleaving operations mentioned in embodiments of this application may have other names in different scenarios. For example, interleaving may also be referred to as permutation or reordering.

Specifically, in the second data sub-processing, a plurality of bits are obtained, PCS processing and first interleaving are performed to obtain two first bit streams, FEC encoding is performed on each of the two first bit streams to obtain two second bit streams, second interleaving is performed on the two second bit streams to obtain two third bit streams, and third interleaving is performed on the two third bit streams to obtain a fourth bit stream, namely, an output data stream of the second data sub-processing. It should be understood that, in some possible scenarios, the second interleaving may be one operation, or the second interleaving may be divided into two operations: fourth interleaving and fifth interleaving. Details are described below.

A total of L second data sub-processing output bit streams that are obtained through L second data sub-processing are merged (Merged) to obtain one second data processing output bit stream. The second data processing output bit stream includes a plurality of pieces of fourth bit data. Typically, in the merge operation, S bits are obtained from each second data sub-processing output bit stream to obtain a total of S× L bits, which are used as consecutive S × L bits in the second data processing output bit stream. The merge operation may be referred to as block merge (Block Merge), or may be referred to as multiplexing (MUX). It should be noted that when L=1, that is, there is only one second data sub-processing output bit stream, the second data processing output bit stream can be obtained without merging. In an example, L may be 2, 4, 8, or the like. This is not specifically limited herein.

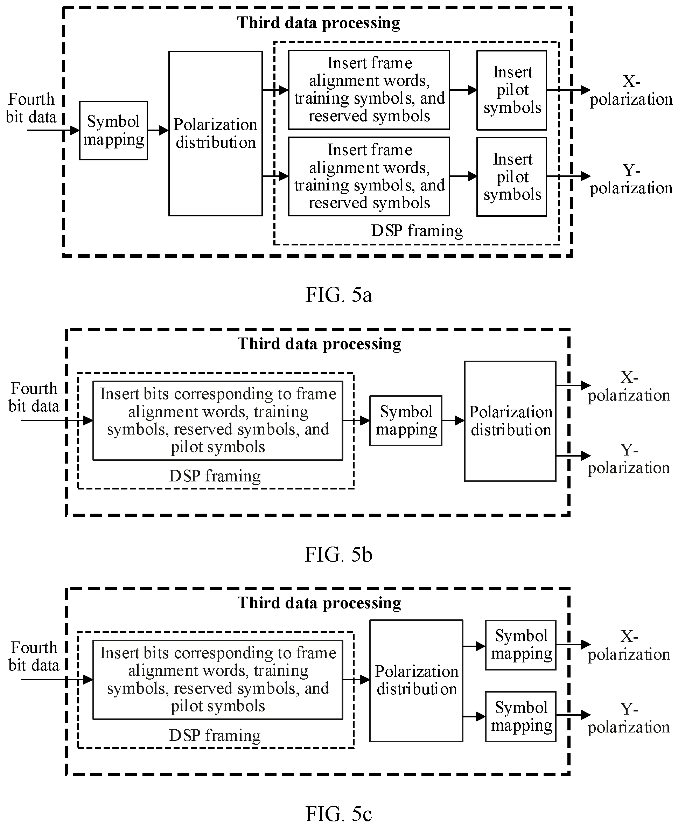

FIG. 5a is a diagram of an embodiment of third data processing according to an embodiment of this application. As shown in FIG. 5a, a dual-polarization symbol sequence is obtained by performing symbol mapping (Symbol Mapping) and polarization distribution (Polarization Distribution) on fourth bit data, where every 12 bits in the fourth bit data are mapped to one dual-polarization symbol through symbol mapping and polarization distribution. Further, a DSP framing operation is performed on the dual-polarization symbol sequence. Specifically, at least one of a frame alignment word sequence (Frame Alignment Word Sequence, FAW Sequence for short), a training symbol sequence (Training Sequence), a reserved symbol sequence (Reserved Field), and a pilot symbol sequence (Pilot Sequence) is inserted in each of X-polarization (X-polarization) and Y-polarization (Y-polarization) directions, to obtain a to-be-sent dual-polarization symbol sequence. For example, in the DSP framing operation, DSP framing processing is performed on every 172032 dual-polarization symbols to obtain one DSP super-frame. In some specific applications, one super-frame includes 175104 dual-polarization symbols. In some embodiments, in the X-polarization direction or the Y-polarization direction, one symbol at a fixed position in every *N*_{G} symbols of a super-frame is a pilot symbol. In an example, a 1^{st} symbol in every *N*_{G} symbols is a pilot symbol. Typically, *N*_{G} = 32, 64, 96, 128, or the like.

It should be noted that frame alignment words are used for frame alignment, training symbols are used for link training, pilot symbols are used for carrier phase recovery, and reserved symbols are used for future use and innovation. A value of the reserved symbol may be known and unchanged, or may be randomized (randomized), and the value of the reserved symbol may also be referred to as a pattern (pattern). In some specific embodiments, a super-frame (super-frame) may also be referred to as a multi-frame (multi-frame), a reserved symbol may also be referred to as a fixed stuff (fixed stuff, FS), and a frame alignment word may also be referred to as a multi-frame alignment signal (multi-frame alignment signal, MFAS).

It should be noted that the DSP framing operation shown in FIG. 5a is performed on symbols (symbols), and the DSP framing operation may also be performed on bits (bits), as shown in FIG. 5b and FIG. 5c. FIG. 5b is a diagram of another embodiment of third data processing according to an embodiment of this application. As shown in FIG. 5b, in a DSP framing operation, before symbol mapping, bits corresponding to a frame alignment word sequence, a training symbol sequence, a reserved symbol sequence, and a pilot symbol sequence may be inserted into fourth bit data, and then symbol mapping and polarization distribution are performed to obtain a super-frame that is the same as that in the operation in FIG. 5a. FIG. 5c is a diagram of still another embodiment of third data processing according to an embodiment of this application. As shown in FIG. 5c, in a DSP framing operation, before symbol mapping, bits corresponding to a frame alignment word sequence, a training symbol sequence, a reserved symbol sequence, and a pilot symbol sequence may be inserted into fourth bit data, and polarization distribution and symbol mapping are performed to obtain a super-frame that is the same as that in the operation in FIG. 5a. It should be understood that there may be another framing operation. Details are not described in this application.

As shown in FIG. 4a and FIG. 4b, the bit streams output through the third interleaving are merged to obtain the fourth bit data, and symbol mapping and polarization distribution are performed on the fourth bit data to obtain a dual-polarization symbol. Specifically, bit streams output through a total of L third interleaving are merged in groups of S=12 bits in a round-robin fashion, and then symbol mapping is performed (to be specific, 12 bits output through third interleaving 0 are mapped to one dual polarization modulation symbol, 12 bits output through third interleaving 1 are mapped to one dual polarization modulation symbol, and so on until 12 bits output through third interleaving L-1 are mapped to one dual polarization modulation symbol). When dual-polarization 64QAM modulation (DP-64QAM) is used, every 12 bits (b₀, b₁, b₂, b₃, b₄, b₅, b₆, b₇, b₈, b₉, b₁₀, b₁₁) are mapped, through symbol mapping and polarization distribution, to obtain one DP-64QAM symbol. One dual-polarization symbol includes an X-polarization symbol and a Y-polarization symbol. X-polarization and Y-polarization are orthogonal to each other. The X-polarization symbol includes an I component (in-phase component) and a Q component (quadrature-phase component) on the X-polarization, and the Y-polarization symbol includes an I component (in-phase component) and a Q component (quadrature-phase component) on the Y-polarization.

It should be noted that, b₀, b₁, b₂, b₃, b₄, and b₅ in the 12 bits are mapped to the X-polarization symbol; and b₆ , b₇ , b₈ , b₉ , b₁₀ , and b₁₁ in the 12 bits are mapped to the Y-polarization symbol. Four bits that are in the 12 bits and that are mapped to the X-polarization symbol are from a second bit set, and the other two bits that are in the 12 bits and that are mapped to the X-polarization symbol are from a third bit set and/or parity bits of FEC encoding. Four bits that are in the 12 bits and that are mapped to the Y-polarization symbol are from the second bit set, and the other two bits that are in the 12 bits and that are mapped to the Y-polarization symbol are from the third bit set and/or the parity bits of the FEC encoding.

In an example, for DP-64QAM, the following first symbol mapping scheme is considered: (b₀, b₁, b₂) is mapped to an I component (in-phase component) of X-polarization of a DP-64QAM symbol, denoted as X_{I}; (b₃, b₄, b₅) is mapped to a Q component (quadrature-phase component) of the X-polarization of the DP-64QAM symbol, denoted as X_{Q}; (b₆, b₇, b₈) is mapped to an I component (in-phase component) of Y-polarization of the DP-64QAM symbol, denoted as Y_{I}; and (b₉, b₁₀, b₁₁) is mapped to a Q component (quadrature-phase component) of the Y-polarization of the DP-64QAM symbol, denoted as Y_{Q}. In each signaling dimension (signaling dimension) X_{I}/X_{Q}/Y_{I}/Y_{Q}, three bits are mapped to corresponding symbol amplitude (symbol amplitude) in the following mapping manner: $\left(0, 0, 0\right) \to - 7 , \left(0, 0, 1\right) \to - 5 , \left(0, 1, 1\right) \to - 3 , \left(0, 1, 0\right) \to - 1 ,$ $\left(1, 1, 0\right) \to + 1 , \left(1, 1, 1\right) \to + 3 , \left(1, 0, 1\right) \to + 5 , \left(1, 0, 0\right) \to + 7$

In this case, b₀ and b₃ in the 12 bits (b₀, b₁, b₂, b₃, b₄, b₅, b₆, b₇, b₈, b₉, b₁₀, b₁₁) are two sign bits (sign bits) in 64QAM in the X-polarization direction, b₁, b₂, b₄, and b₅ are four amplitude bits (amplitude bits) in 64QAM in the X-polarization direction, b₆ and b₉ are two sign bits (sign bits) in 64QAM in the Y-polarization direction, and b₇, b₈, b₁₀, and b₁₁ are four amplitude bits (amplitude bits) in 64QAM in the Y-polarization direction.

It should be noted that a complex number formed by the real part X_{I} and the imaginary part X_{Q} represents a modulation symbol in the X-polarization direction, and a complex number formed by the real part Y_{I} and the imaginary part Y_{Q} represents a modulation symbol in the Y-polarization direction. The dual-polarization symbol is sent, where digital-to-analog conversion (digital-to-analog conversion, DAC) may be performed on the I component X_{I} on the X-polarization, the Q component X_{Q} on the X-polarization, the I component Y_{I} on the Y-polarization, and the Q component Y_{Q} on the Y-polarization, to obtain four corresponding analog signals (analog signals).

The following describes in detail each operation of the second data sub-processing i (i = 0,1, ..., L - 1) by using an example in which the first symbol mapping scheme is used for modulation, where L is an integer greater than 0.

### (1) PCS processing and first interleaving:

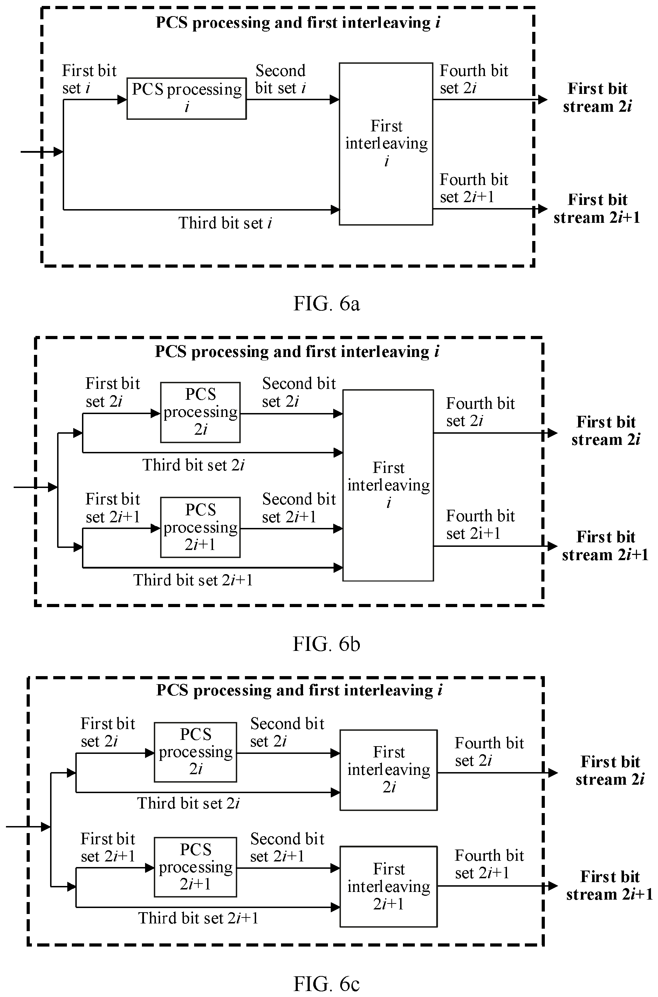

FIG. 6a is a diagram of an embodiment of PCS processing and first interleaving according to an embodiment of this application. As shown in FIG. 6a, "PCS processing and first interleaving i" specifically includes one PCS processing operation (namely, "PCS processing i") and one first interleaving operation (namely, "first interleaving i").

Specifically, e bits are first obtained, where e is an integer greater than 0. A first bit set i in the e bits is sent to the "PCS processing i" to obtain a second bit set i. The second bit set i and a third bit set i remaining after the first bit set i is removed from the e bits are sent to the first interleaving i for interleaving, to obtain two fourth bit sets, namely, a fourth bit set 2i and a fourth bit set 2i+1. It should be understood that, the e bits include the first bit set i and the third bit set i. It should be understood that, as shown in FIG. 6a, a first bit stream 2i output through the "PCS processing and first interleaving" may include a plurality of fourth bit sets 2i, and a first bit stream 2i+1 output through the "PCS processing and first interleaving" may include a plurality of fourth bit sets 2i+1.

Typically, a quantity of bits in each of the fourth bit set 2i and the fourth bit set 2i+1 is 1776 × *k*₀ bits, a quantity of bits in the second bit set i is 8192 × *k*₀/3 bits, a quantity of bits in the third bit set i is 3552 × *k*₀ - 8192 × *k*₀/3 bits, and a quantity of bits in the first bit set i is e - (3552 × *k*₀ - 8192 × *k*₀/3) bits, where *k*₀ is an integer greater than 0 and is an integer multiple of 3. For example, *k*₀ = 3, 6, 9, 12, ... , 42.

The following further provides several more specific examples.

Example 1: *k*₀ = 3 is considered. In the "PCS processing and first interleaving", e₁ bits are obtained, where e₁ is an integer greater than 0. As shown in FIG. 6a, a quantity of bits in the first bit set i is e₁-2464, a quantity of bits in the second bit set i is 8192, and a quantity of bits in the third bit set i is 2464. A quantity of bits in each of the fourth bit set 2i and the fourth bit set 2i+1 that are obtained through the first interleaving is 5328. It may be understood that the first bit set i including e₁-2464 bits is sent to the "PCS processing i", to obtain the second bit set i including 8192 bits. The second bit set i and the third bit set i including 2464 bits, totaling 8192+2464=10656 bits, are sent to the first interleaving i for interleaving, to obtain the fourth bit set 2i and the fourth bit set 2i+1.

Example 2: *k*₀ = 6 is considered. In the "PCS processing and first interleaving", e₁ bits are obtained, where e₁ is an integer greater than 0. As shown in FIG. 6a, a quantity of bits in the first bit set i is e₁-4928, a quantity of bits in the second bit set i is 16384, and a quantity of bits in the third bit set i is 4928. A quantity of bits in each of the fourth bit set 2i and the fourth bit set 2i+1 that are obtained through the first interleaving is 10656. It may be understood that the first bit set i including e₁-4928 bits is sent to the "PCS processing i", to obtain the second bit set i including 16384 bits. The second bit set i and the third bit set i including 4928 bits, totaling 16384+4928=21312 bits, are sent to the first interleaving i for interleaving, to obtain the fourth bit set 2i and the fourth bit set 2i+1.

Example 3: *k*₀ = 42 is considered. In the "PCS processing and first interleaving", e₁ bits are obtained, where e₁ is an integer greater than 0. As shown in FIG. 6a, a quantity of bits in the first bit set i is e₁-34496, a quantity of bits in the second bit set i is 114688, and a quantity of bits in the third bit set i is 34496. A quantity of bits in each of the fourth bit set 2i and the fourth bit set 2i+1 that are obtained through the first interleaving is 74592. It may be understood that the first bit set i including e₁-34496 bits is sent to the "PCS processing i", to obtain the second bit set i including 114688 bits. The second bit set i and the third bit set i including 34496 bits, totaling 114688+34496=149184 bits, are sent to the first interleaving i for interleaving, to obtain the fourth bit set 2i and the fourth bit set 2i+1.

FIG. 6b is a diagram of another embodiment of PCS processing and first interleaving according to an embodiment of this application. As shown in FIG. 6b, "PCS processing and first interleaving i" specifically includes two PCS processing operations (namely, "PCS processing 2i" and "PCS processing 2i+1") and one first interleaving operation (namely, "first interleaving i"). It should be understood that, in comparison with the implementation in FIG. 6a, two PCS processing are obtained through division for implementation in FIG. 6b. This helps reduce complexity of single PCS processing, and hardware implementation of single PCS processing is simpler.

Specifically, e bits are first obtained, where e is an integer greater than 1. The e bits include two first bit sets, namely, a first bit set 2i and a first bit set 2i+1. The PCS processing 2i is performed on the first bit set 2i to obtain a second bit set 2i, and the PCS processing 2i+1 is performed on the first bit set 2i+1 to obtain a second bit set 2i+1. Typically, e is an even number greater than 0, and a quantity of bits in the first bit set 2i is the same as that in the first bit set 2i+1.

The e bits further include two third bit sets, namely, a third bit set 2i and a third bit set 2i+1. It should be understood that the e bits include the first bit set 2i, the first bit set 2i+1, the third bit set 2i, and the third bit set 2i+1. The third bit set 2i, the third bit set 2i+1, the second bit set 2i, and the second bit set 2i+1 are all sent to the first interleaving i for interleaving, to obtain two fourth bit sets, namely, a fourth bit set 2i and a fourth bit set 2i+1. It should be understood that, as shown in FIG. 6b, a first bit stream 2i output through the PCS processing and first interleaving may include a plurality of fourth bit sets 2i, and a first bit stream 2i+1 output through the PCS processing and first interleaving may include a plurality of fourth bit sets 2i+1.

Typically, a quantity of bits in the fourth bit set 2i is the same as that in the fourth bit set 2i+1. More specifically, the quantity of bits in each of the fourth bit set 2i and the fourth bit set 2i+1 is 1776 × *k*₀ bits, a quantity of bits in each of the second bit set 2i and the second bit set 2i+1 is 4096 × *k*₀/3 bits, a quantity of bits in each of the third bit set 2i and the third bit set 2i+1 is 1776 × *k*₀ - 4096 × *k*₀/3 bits, and the quantity of bits in each of the first bit set 2i and the first bit set 2i+1 is e/2 - (1776 × *k*₀ - 4096 × *k*₀/3) bits, where *k*₀ is an integer greater than 0 and is an integer multiple of 3. For example, *k*₀ = 3, 6, 9, 12, ... , 42.

The following further provides several more specific examples.

Example 4: *k*₀ = 3 is considered. In the "PCS processing and first interleaving", e₀ bits are obtained, where e₀ is an even number greater than 0. As shown in FIG. 6b, a quantity of bits in each of the first bit set 2i and the first bit set 2i+1 is e₀/2-1232, a quantity of bits in each of the second bit set 2i and the second bit set 2i+1 is 4096, and a quantity of bits in each of the third bit set 2i and the third bit set 2i+1 is 1232. A quantity of bits in each of the fourth bit set 2i and the fourth bit set 2i+1 that are obtained through the first interleaving is 5328. It may be understood that, in the "PCS processing and first interleaving", the first bit set 2i including e₀/2-1232 bits is sent to the "PCS processing 2i" to obtain the second bit set 2i including 4096 bits; and in the "PCS processing and first interleaving", the first bit set 2i+1 including e₀/2-1232 bits is sent to the "PCS processing 2i+1" to obtain the second bit set 2i+1 including 4096 bits. The second bit set 2i, the second bit set 2i+1, and the third bit set 2i and the third bit set 2i+1 each including 1232 bits, totaling 10656 bits, are sent to the first interleaving i. In the first interleaving i, 10656 bits are interleaved, to obtain the fourth bit set 2i and the fourth bit set 2i+1.

Example 5: *k*₀ = 6 is considered. In the "PCS processing and first interleaving", e₀ bits are obtained, where e₀ is an even number greater than 0. As shown in FIG. 6b, a quantity of bits in each of the first bit set 2i and the first bit set 2i+1 is e₀/2-2464, a quantity of bits in each of the second bit set 2i and the second bit set 2i+1 is 8192, and a quantity of bits in each of the third bit set 2i and the third bit set 2i+1 is 2464. A quantity of bits in each of the fourth bit set 2i and the fourth bit set 2i+1 that are obtained through the first interleaving is 10656. It may be understood that in the "PCS processing and first interleaving", the first bit set 2i including e₀/2-2464 bits is sent to the "PCS processing 2i" to obtain the second bit set 2i including 8192 bits; and in the "PCS processing and first interleaving", the first bit set 2i+1 including e₀/2-2464 bits is sent to the "PCS processing 2i+1" to obtain the second bit set 2i+1 including 8192 bits. The second bit set 2i, the second bit set 2i+1, and the third bit set 2i and the third bit set 2i+1 each including 2464 bits, totaling 21312 bits, are sent to the first interleaving i. In the first interleaving i, 21312 bits are interleaved, to obtain the fourth bit set 2i and the fourth bit set 2i+1.

Example 6: *k*₀ = 42 is considered. In the "PCS processing and first interleaving", e₀ bits are obtained, where e₀ is an even number greater than 0. As shown in FIG. 6b, a quantity of bits in each of the first bit set 2i and the first bit set 2i+1 is e₀/2-17248, a quantity of bits in each of the second bit set 2i and the second bit set 2i+1 is 57344, and a quantity of bits in each of the third bit set 2i and the third bit set 2i+1 is 17248. A quantity of bits in each of the fourth bit set 2i and the fourth bit set 2i+1 that are obtained through the first interleaving is 74592. It may be understood that in the "PCS processing and first interleaving", the first bit set 2i including e₀/2-17248 bits is sent to the "PCS processing 2i" to obtain the second bit set 2i including 57344 bits; and in the "PCS processing and first interleaving", the first bit set 2i+1 including e₀/2-17248 bits is sent to the "PCS processing 2i+1" to obtain the second bit set 2i+1 including 57344 bits. The second bit set 2i, the second bit set 2i+1, and the third bit set 2i and the third bit set 2i+1 each including 17248 bits, totaling 149184 bits, are sent to the first interleaving i. In the first interleaving i, 149184 bits are interleaved, to obtain the fourth bit set 2i and the fourth bit set 2i+1.

It should be understood that, in the foregoing example 4 to example 6, the first bit set 2i and the third bit set 2i jointly include e₀/2 bits, and the first bit set 2i+1 and the third bit set 2i+1 jointly include e₀/2 bits. In other words, the input e₀ bits are first divided into two parts, each including e₀/2 bits, for subsequent processing. In some other possible scenarios, the input e₀ bits may alternatively be divided into two parts based on another ratio, in other words, a quantity of bits included in the first bit set 2i and the third bit set 2i is different from that included in the first bit set 2i+1 and the third bit set 2i+1.

FIG. 6c is a diagram of still another embodiment of PCS processing and first interleaving according to an embodiment of this application. As shown in FIG. 6c, "PCS processing and first interleaving i" specifically includes two PCS processing operations (namely, "PCS processing 2i" and "PCS processing 2i+1") and two first interleaving operations (namely, "first interleaving 2i" and "first interleaving 2i+1"). It should be understood that, in comparison with the implementations in FIG. 6a and FIG. 6b, two first interleaving are obtained through division for implementation in FIG. 6c. This helps reduce complexity of single first interleaving, and hardware implementation of single first interleaving is simpler.

Specifically, e bits are first obtained, where e is an integer greater than 0. The e bits include two first bit sets, namely, a first bit set 2i and a first bit set 2i+1. The PCS processing 2i is performed on the first bit set 2i to obtain a second bit set 2i, and the PCS processing 2i+1 is performed on the first bit set 2i+1 to obtain a second bit set 2i+1. Typically, e is an even number greater than 0, and a quantity of bits in the first bit set 2i is the same as that in the first bit set 2i+1.

The e bits further include two third bit sets, namely, a third bit set 2i and a third bit set 2i+1. It should be understood that the e bits include the first bit set 2i, the first bit set 2i+1, the third bit set 2i, and the third bit set 2i+1.

The third bit set 2i and the second bit set 2i are sent to the first interleaving 2i for interleaving, to obtain one fourth bit set, namely, a fourth bit set 2i. The third bit set 2i+1 and the second bit set 2i+1 are sent to the first interleaving 2i+1 for interleaving, to obtain one fourth bit set, namely, a fourth bit set 2i+1. It should be understood that, as shown in FIG. 6c, a first bit stream 2i output through the "PCS processing and first interleaving" may include a plurality of fourth bit sets 2i, and a first bit stream 2i+1 output through the "PCS processing and first interleaving" may include a plurality of fourth bit sets 2i+1.

Typically, a quantity of bits in the fourth bit set 2i is the same as that in the fourth bit set 2i+1. More specifically, the quantity of bits in each of the fourth bit set 2i and the fourth bit set 2i+1 is 1776 × *k*₀ bits, a quantity of bits in each of the second bit set 2i and the second bit set 2i+1 is 4096 × *k*₀/3 bits, a quantity of bits in each of the third bit set 2i and the third bit set 2i+1 is 1776 × *k*₀ - 4096 × *k*₀/3 bits, and the quantity of bits in each of the first bit set 2i and the first bit set 2i+1 is e/2 - (1776 × *k*₀ - 4096 × *k*₀/3) bits, where *k*₀ is an integer greater than 0 and is an integer multiple of 3. For example, *k*₀ = 3, 6, 9, 12, ... , 42.

The following further provides several more specific examples.

Example 7: *k*₀ = 3 is considered. In the "PCS processing and first interleaving", e₂ bits are obtained, where e₂ is an even number greater than 0. As shown in FIG. 6c, a quantity of bits in each of the first bit set 2i and the first bit set 2i+1 is e₂/2-1232, a quantity of bits in each of the second bit set 2i and the second bit set 2i+1 is 4096, and a quantity of bits in each of the third bit set 2i and the third bit set 2i+1 is 1232. A quantity of bits in each of the fourth bit set 2i and the fourth bit set 2i+1 that are obtained through the first interleaving is 5328. It may be understood that the "PCS processing and first interleaving" includes two sub-processing, and in each sub-processing, e₂/2 bits are obtained for processing. More specifically, for first sub-processing, the first bit set 2i including e₂/2-1232 bits is sent to the "PCS processing 2i" to obtain the second bit set 2i including 4096 bits. The second bit set 2i and the third bit set 2i including 1232 bits, totaling 4096+1232=5328 bits, are sent to the first interleaving 2i for interleaving, to obtain the fourth bit set 2i. For second sub-processing, the first bit set 2i+1 including e₂/2-1232 bits is sent to the "PCS processing 2i+1", to obtain the second bit set 2i+1 including 4096 bits. The second bit set 2i+1 and the third bit set 2i+1 including 1232 bits, totaling 3824+1504=5328 bits, are sent to the first interleaving 2i+1 for interleaving, to obtain the fourth bit set 2i+1.

Example 8: *k*₀ = 6 is considered. In the "PCS processing and first interleaving", e₂ bits are obtained, where e₂ is an even number greater than 0. As shown in FIG. 6c, a quantity of bits in each of the first bit set 2i and the first bit set 2i+1 is e₂/2-2464, a quantity of bits in each of the second bit set 2i and the second bit set 2i+1 is 8192, and a quantity of bits in each of the third bit set 2i and the third bit set 2i+1 is 2464. A quantity of bits in each of the fourth bit set 2i and the fourth bit set 2i+1 that are obtained through the first interleaving is 10656. It may be understood that the "PCS processing and first interleaving" includes two sub-processing, and in each sub-processing, e₂/2 bits are obtained for processing. More specifically, for first sub-processing, the first bit set 2i including e₂/2-2464 bits is sent to the PCS processing 2i to obtain the second bit set 2i including 8192 bits. The second bit set 2i and the third bit set 2i including 2464 bits, totaling 8192+2464=10656 bits, are sent to the first interleaving 2i for interleaving, to obtain the fourth bit set 2i. For second sub-processing, the first bit set 2i+1 including e₂/2-2464 bits is sent to the PCS processing 2i+1, to obtain the second bit set 2i+1 including 8192 bits. The second bit set 2i+1 and the third bit set 2i+1 including 2464 bits, totaling 8192+2464=10656 bits, are sent to the first interleaving 2i+1 for interleaving, to obtain the fourth bit set 2i+1.

Example 9: *k*₀ = 42 is considered. In the "PCS processing and first interleaving", e₂ bits are obtained, where e₂ is an even number greater than 0. As shown in FIG. 6c, a quantity of bits in each of the first bit set 2i and the first bit set 2i+1 is e₂/2-17248, a quantity of bits in each of the second bit set 2i and the second bit set 2i+1 is 57344, and a quantity of bits in each of the third bit set 2i and the third bit set 2i+1 is 17248. A quantity of bits in each of the fourth bit set 2i and the fourth bit set 2i+1 that are obtained through the first interleaving is 74592. It may be understood that the "PCS processing and first interleaving" includes two sub-processing, and in each sub-processing, e₂/2 bits are obtained for processing. More specifically, for first sub-processing, the first bit set 2i including e₂/2-17248 bits is sent to the PCS processing 2i to obtain the second bit set 2i including 57344 bits. The second bit set 2i and the third bit set 2i including 17248 bits, totaling 57344+17248=74592 bits, are sent to the first interleaving 2i for interleaving, to obtain the fourth bit set 2i. For second sub-processing, the first bit set 2i+1 including e₂/2-17248 bits is sent to the "PCS processing 2i+1", to obtain the second bit set 2i+1 including 57344 bits. The second bit set 2i+1 and the third bit set 2i+1 including 17248 bits, totaling 57344+17248=74592 bits, are sent to the first interleaving 2i+1 for interleaving, to obtain the fourth bit set 2i+1.

It should be understood that, in the foregoing example 7 to example 9, the first bit set 2i and the third bit set 2i jointly include e₀/2 bits, and the first bit set 2i+1 and the third bit set 2i+1 jointly include e₀/2 bits. In other words, the input e₀ bits are first divided into two parts, each including e₀/2 bits, for subsequent processing.

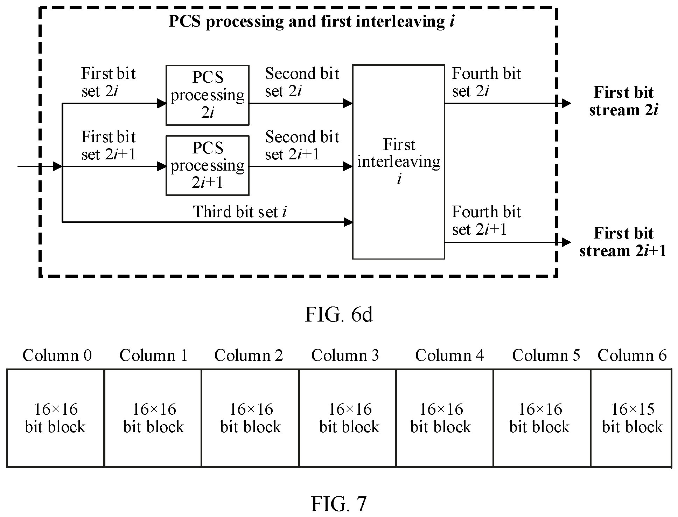

FIG. 6d is a diagram of yet another embodiment of PCS processing and first interleaving according to an embodiment of this application. As shown in FIG. 6d, "PCS processing and first interleaving i" includes two PCS processing (namely, "PCS processing 2i" and "PCS processing 2i+1") and one first interleaving (namely, "first interleaving i"). It should be understood that, in comparison with the implementation in FIG. 6a, two PCS processing are obtained through division for implementation in FIG. 6d. This helps reduce complexity of single PCS processing, and hardware implementation of single PCS processing is simpler.

In the "PCS processing and first interleaving", e bits are obtained, where e is an integer greater than 0. The e bits include two first bit sets, namely, a first bit set 2i and a first bit set 2i+1. The first bit set 2i is sent to the "PCS processing 2i" to obtain a second bit set 2i, and the first bit set 2i+1 is sent to the "PCS processing 2i+1" to obtain a second bit set 2i+1. Typically, e is an even number greater than 0, and a quantity of bits in the first bit set 2i is the same as that in the first bit set 2i+1.

The e bits include one third bit set, namely, a third bit set i. It should be understood that the e bits include the first bit set 2i, the first bit set 2i+1, and the third bit set i. The third bit set i, the second bit set 2i, and the second bit set 2i+1 are all sent to the first interleaving i for interleaving, to obtain two fourth bit sets, namely, a fourth bit set 2i and a fourth bit set 2i+1. It should be understood that, as shown in FIG. 6d, a first bit stream 2i output through the "PCS processing and first interleaving" may include a plurality of fourth bit sets 2i, and a first bit stream 2i+1 output through the "PCS processing and first interleaving" may include a plurality of fourth bit sets 2i+1.

Typically, a quantity of bits in the fourth bit set 2i is the same as that in the fourth bit set 2i+1. More specifically, the quantity of bits in each of the fourth bit set 2i and the fourth bit set 2i+1 is 1776 × *k*₀ bits, a quantity of bits in each of the second bit set 2i and the second bit set 2i+1 is 4096 × *k*₀/3 bits, a quantity of bits in the third bit set i is $2 \times \left(1776\times {k}_{0}-4096\times \frac{{k}_{0}}{3}\right)$ bits, and the quantity of bits in each of the first bit set 2i and the first bit set 2i+1 is e/2 - (1776 × *k*₀ - 4096 × *k*₀/3) bits, where *k*₀ is an integer greater than 0 and is an integer multiple of 3. For example, *k*₀ = 3, 6, 9, 12, ... , 42.

The following further provides several more specific examples.

Example 10: *k*₀ = 3 is considered. In the "PCS processing and first interleaving", e₃ bits are obtained, where e₃ is an even number greater than 0. As shown in FIG. 6d, a quantity of bits in each of the first bit set 2i and the first bit set 2i+1 is e₃/2-1232, a quantity of bits in each of the second bit set 2i and the second bit set 2i+1 is 4096, and a quantity of bits in the third bit set i is 2464. A quantity of bits in each of the fourth bit set 2i and the fourth bit set 2i+1 that are obtained through the first interleaving is 5328. It may be understood that in the "PCS processing and first interleaving", the first bit set 2i including e₃/2-1232 bits is sent to the "PCS processing 2i" to obtain the second bit set 2i including 4096 bits; and in the "PCS processing and first interleaving", the first bit set 2i+1 including e₃/2-1232 bits is sent to the "PCS processing 2i+1" to obtain the second bit set 2i+1 including 4096 bits. The second bit set 2i, the second bit set 2i+1, and the third bit set i including 2464 bits, totaling 10656 bits, are sent to the first interleaving i. In the first interleaving i, 10656 bits are interleaved, to obtain the fourth bit set 2i and the fourth bit set 2i+1.

Example 11: *k*₀ = 6 is considered. In the "PCS processing and first interleaving", e₃ bits are obtained, where e₃ is an even number greater than 0. As shown in FIG. 6d, a quantity of bits in each of the first bit set 2i and the first bit set 2i+1 is e₃/2-2464, a quantity of bits in each of the second bit set 2i and the second bit set 2i+1 is 8192, and a quantity of bits in the third bit set i is 4928. A quantity of bits in each of the fourth bit set 2i and the fourth bit set 2i+1 that are obtained through the first interleaving is 10656. It may be understood that in the "PCS processing and first interleaving", the first bit set 2i including e₃/2-2464 bits is sent to the "PCS processing 2i" to obtain the second bit set 2i including 8192 bits; and the first bit set 2i+1 including e₃/2-2464 bits is sent to the "PCS processing 2i+1" to obtain the second bit set 2i+1 including 8192 bits. The second bit set 2i, the second bit set 2i+1, and the third bit set i including 4928 bits, totaling 21312 bits, are sent to the first interleaving i. In the first interleaving i, 21312 bits are interleaved, to obtain the fourth bit set 2i and the fourth bit set 2i+1.

Example 12: *k*₀ = 42 is considered. In the "PCS processing and first interleaving", e₃ bits are obtained, where e₃ is an even number greater than 0. As shown in FIG. 6d, a quantity of bits in each of the first bit set 2i and the first bit set 2i+1 is e₃/2-17248, a quantity of bits in each of the second bit set 2i and the second bit set 2i+1 is 57344, and a quantity of bits in the third bit set i is 34496. A quantity of bits in each of the fourth bit set 2i and the fourth bit set 2i+1 that are obtained through the first interleaving is 74592. It may be understood that in the "PCS processing and first interleaving", the first bit set 2i including e₃/2-17248 bits is sent to the "PCS processing 2i" to obtain the second bit set 2i including 57344 bits; and the first bit set 2i+1 including e₃/2-17248 bits is sent to the "PCS processing 2i+1" to obtain the second bit set 2i+1 including 57344 bits. The second bit set 2i, the second bit set 2i+1, and the third bit set i including 34496 bits, totaling 149184 bits, are sent to the first interleaving i. In the first interleaving i, 149184 bits are interleaved, to obtain the fourth bit set 2i and the fourth bit set 2i+1.

It should be noted that, in some specific applications, the PCS processing may be implemented by using one or more lookup tables (lookup tables, LUTs). In each lookup table, LUT mapping is performed on input k_{LUT} bits to obtain output n_{LUT} bits, where n_{LUT} > k_{LUT}. For example, LUT mapping is performed, by using a lookup table, on every k_{LUT} bits in k*_{pcs}* bits input through the PCS processing, to obtain output n_{LUT} bits, and a total of k*_{pcs}*/k_{LUT} × n_{LUT} PCS processing output bits are obtained. In some specific applications, lookup table LUT processing may alternatively be implemented by including a plurality of lookup subtables, and quantities of input bits of the lookup subtables may be different and quantities of output bits of the lookup subtables may also be different. In this application, a specific implementation of the LUT lookup table is not limited. In this case, the PCS processing is also referred to as PCS LUT processing. It should be noted that the PCS processing may also be referred to as a distribution matcher (Distribution Matcher, DM). In some specific applications, the first interleaving may be referred to as block mapping (Block Map), may be referred to as pre-encoding interleaving (pre-FEC interleaver), or may be referred to as pre-encoding permutation (pre-FEC Permutation).

It should be noted that a quantity d_{scr} of bits of third bit data output through first data processing is an integer multiple of L × *e*₀, L × *e*₁, L × *e*₂, or L × *e*₃. In this case, after the d_{scr} bits are output through the first data processing, processing on the d_{scr} bits may be completed by performing one or more second data processing operations, and no more other processing such as buffering needs to be performed. This simplifies a specific hardware implementation of the overall data processing, and lowers power consumption.

It should be noted that, as shown in FIG. 6a, FIG. 6b, FIG. 6c, and FIG. 6d, the first bit stream includes a plurality of fourth bit sets. Each fourth bit set may be distributed in a form including a plurality of rows of bit blocks (blocks), where each row includes seven columns of bit blocks. Bits in each bit block are consecutive. It should be understood that, in some possible scenarios, the bit block may also be referred to as a bit subset, and the bit block is a specific implementation form of a bit subset distributed in rows and columns. Further, if a quantity of rows and a quantity of columns of a bit block are the same, the bit block may also be referred to as a bit square block (square block), a square block, or a matrix. For example, a bit block including 16 rows and 16 columns in the specification may also be referred to as a bit square block, a square block, or a matrix. It should be understood that, in embodiments of this application, all bit sets, bit subsets, bit blocks, and the like that are distributed in rows and columns are counted from row 0 and column 0. It should be further understood that, in embodiments of this application, all rows and columns in a bit set are bit subsets or bit blocks distributed in rows and columns in the bit set, and in embodiments of this application, all rows and columns in a bit subset or a bit block are bits distributed in rows and columns in the bit subset or the bit block.

FIG. 7 is a diagram of seven columns of bit blocks in each row according to an embodiment of this application. As shown in FIG. 7, each of bit blocks in columns 0, 1, 2, 3, 4, and 5 includes a total of 256 bits in 16 bit rows and 16 bit columns, and a bit block in column 6 includes a total of 240 bits in 16 bit rows and 15 bit columns. That is, seven columns of bit blocks in each row include 1776 bits in total. It should be noted that a bit block including a total of 256 bits in 16 bit rows and 16 bit columns may be referred to as a square block (square block), or may be referred to as a matrix.

As shown in the foregoing example 1, example 4, and example 7, the quantity of bits in each fourth bit set is 5328. In this case, each fourth bit set may be distributed in a form of a total of 21 bit blocks in three rows and seven columns. Each bit block in first six columns includes 16 bit rows and 16 bit columns, and each bit block in the last one column includes 16 bit rows and 15 bit columns. Bits in each bit block are consecutive.

As shown in the foregoing example 2, example 5, and example 8, the quantity of bits in each fourth bit set is 10656. In this case, each fourth bit set may be distributed in a form of a total of 42 bit blocks in six rows and seven columns.

Each bit block in first six columns includes 16 bit rows and 16 bit columns, and each bit block in the last one column includes 16 bit rows and 15 bit columns. Bits in each bit block are consecutive.

As shown in the foregoing example 3, example 6, and example 9, the quantity of bits in each fourth bit set is 74592. In this case, each fourth bit set may be distributed in a form of a total of 294 bit blocks in 42 rows and 7 columns. Each bit block in first six columns includes 16 bit rows and 16 bit columns, and each bit block in the last one column includes 16 bit rows and 15 bit columns. Bits in each bit block are consecutive.

It should be noted that, in some specific applications, the first interleaving operation in the "PCS processing and first interleaving" is performed at a granularity of 149184 or 74592 bits. In some other specific applications, the first interleaving operation in the "PCS processing and first interleaving" is performed at a granularity of 10656 bits. In this case, the first interleaving is time-varying, in other words, interleaving operations on the 10656 bits are different at different moments. In some other specific applications, the first interleaving operation in the "PCS processing and first interleaving" is performed at a granularity of 21312 bits. In this case, the first interleaving is time-varying, in other words, interleaving operations on the 21312 bits are different at different moments. It should be understood that, as shown in FIG. 6c, interleaving operations of the first interleaving 2i and the first interleaving 2i+1 are different.

It should be noted that the first bit stream includes a plurality of fifth bit sets, and bits in each fifth bit set are distributed as a total of 294 bit blocks in 42 rows and 7 columns. Each bit block in first six columns includes 16 bit rows and 16 bit columns, and each bit block in the last one column includes 16 bit rows and 15 bit columns. Each row of bit blocks includes seven bit blocks, totaling 1776 bits. For a specific form of the bit blocks, refer to FIG. 7. Bits in each bit block are consecutive.

It should be noted that, in some specific applications, bit blocks in 42 rows and 7 columns in the fifth bit set, totaling 74592 bits, are formed by one or more fourth bit sets. More specifically, for example, in the foregoing example 1, example 4, and example 7, the quantity of bits in each fourth bit set is 5328. In this case, the fifth bit set may be formed by 14 fourth bit sets. For another example, in the foregoing example 2, example 5, and example 8, the quantity of bits in each fourth bit set is 10656. In this case, the fifth bit set may be formed by seven fourth bit sets. As shown in the foregoing example 3, example 6, and example 9, the quantity of bits in each fourth bit set is 74592. In this case, the fifth bit set may be formed by one fourth bit set, and the fourth bit set may also be represented by the fifth bit set.

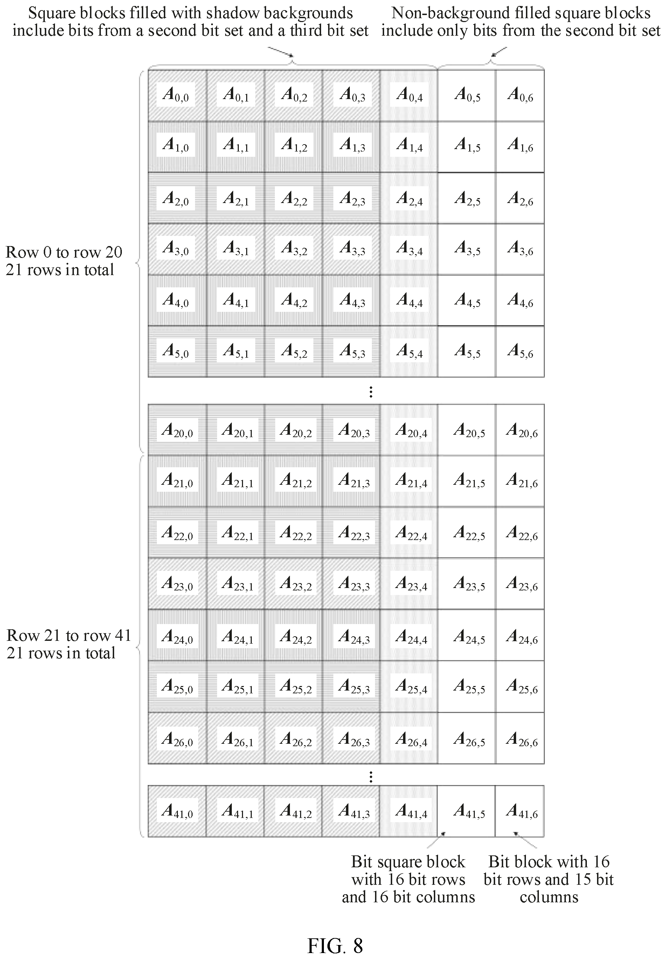

FIG. 8 is a diagram of a fifth bit set according to an embodiment of this application. As shown in FIG. 8, the fifth bit set may be specifically presented in a form of a bit rectangular block (rectangular block). A bit block in row i₁ and column j₁ in the fifth bit set is denoted as A_{*i*₁,*j*₁}, where 0 ≤ i₁ < 42 and 0 ≤ j₁ < 7.

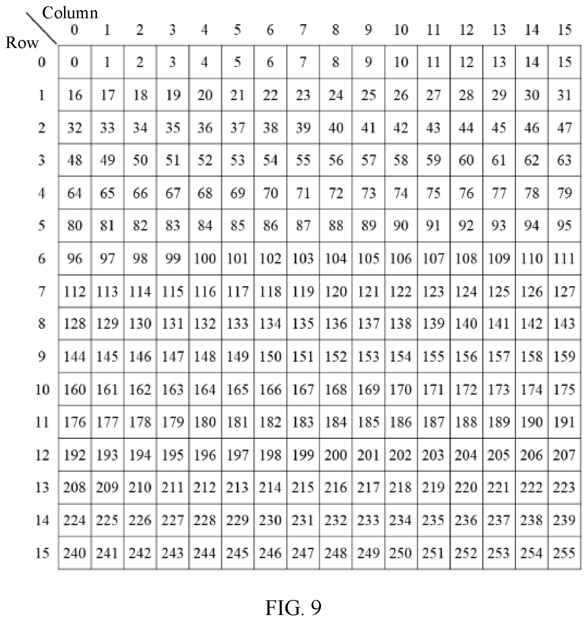

As shown in FIG. 8, each bit block in first six columns (namely, columns 0 to 5) of the fifth bit set includes 16 bit rows and 16 bit columns, that is, A_{*i*₁,*j*₁} (0 ≤ i₁ < 42 and 0 ≤ j₁ < 6) is a square block including 256 bits. In some specific applications, the bit block A_{*i*₁,*j*₁} (0 ≤ i₁ < 42 and 0 ≤ j₁ < 6) includes a total of 256 bits in 16 rows and 16 columns, where the bits are consecutive in the first bit stream. FIG. 9 is a diagram of a 16×16 bit block according to an embodiment of this application. As shown in FIG. 9, a bit in row r₀ and column c₀ (0 ≤ r₀ < 16 and 0 ≤ c₀ < 16) in each bit block A_{*i*₁,*j*₁} (0 ≤ i₁ < 42 and 0 ≤ j₁ < 6) corresponds to bit 16 × r₀ + c₀ in 256 consecutive bits. For example, a bit in row r₀ = 1 and column c₀ = 0 in the bit block corresponds to bit 16 in the 256 bits. For another example, a bit in row r₀ = 2 and column c₀ = 3 in the bit block corresponds to bit 35 in the 256 bits.

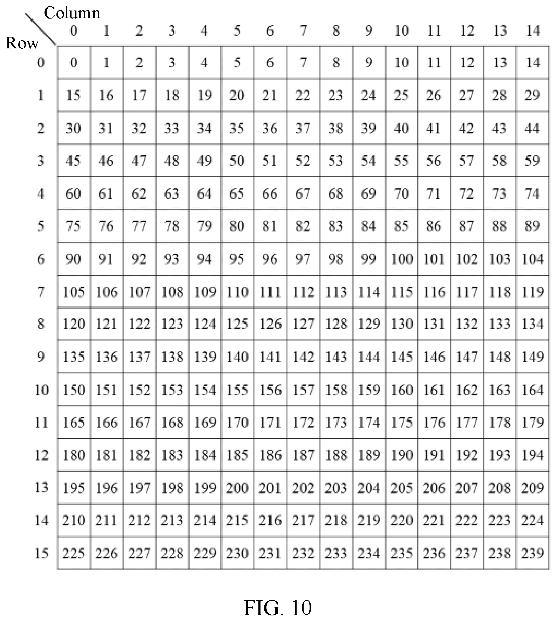

As shown in FIG. 8, each bit block in the last column (namely, column 6) of the fifth bit set includes 16 bit rows and 15 bit columns, that is, A_{*i*₁,*j*₁} (0 ≤ i₁ < 42 and j₁ = 6) is a bit block including 240 bits. In some specific applications, the bit block A_{*i*₁,*j*₁} (0 ≤ i₁ < 42 and j₁ = 6) includes a total of 240 bits in 16 rows and 15 columns, where the bits are consecutive in the first bit stream. FIG. 10 is a diagram of a 16×15 bit block according to an embodiment of this application. As shown in FIG. 10, a bit in row *r*₁ and column c₁ (0 ≤ *r*₁ < 16 and 0 ≤ c₁ < 15) in each bit block A_{*i*₁,*j*₁} (0 ≤ i₁ < 42 and j₁ = 6) corresponds to bit 15 × *r*₁ + c₁ in 240 consecutive bits. For example, a bit in row *r*₁ = 1 and column c₁ = 0 in the bit block corresponds to bit 15 in the 240 bits. For another example, a bit in row *r*₁ = 2 and column c₁ = 3 in the bit block corresponds to bit 33 in the 240 bits.

It should be noted that, in some specific applications, a total of 74592 bits in 42 rows and 7 columns in the fifth bit set are consecutive in the first bit stream. Further, in some specific applications, a specific distribution, in the first bit stream, of a total of 294 bit blocks in 42 rows and 7 columns in the fifth bit set may be a continuous distribution of a total of 1776 bits in one row of bit blocks. For example, a total of 1776 bits in seven bit blocks A_{*i*₁,0}, A_{*i*₁,1}, A_{*i*₁,2}, A_{*i*₁,3}, A_{*i*₁,4}, A_{*i*₁,5}, and A_{*i*₁,6} in the fifth bit set are consecutive in the first bit stream, where 0 ≤ i₁ < 42. In some other specific applications, a specific distribution, in the first bit stream, of a total of 294 bit blocks in 42 rows and 7 columns in the fifth bit set may be a continuous distribution of a total of 3552 bits in two rows of bit blocks. For example, a total of 3552 bits in 14 bit blocks A_{2*i*₂,0}, A_{2*i*₂ +1,0}, A_{2*i*₂,1}, A_{2*i*₂+1,1}, A_{2*i*₂,2}, A_{2*i*₂+1,2}, A_{2*i*₂,3}, A_{2*i*₂+1,3}, A_{2*i*₂,4}, A_{2*i*₂+1,4}, A_{2*i*₂,5}, A_{2*i*₂+1,5}, A_{2*i*₂,6}, and A_{2*i*₂+1,6} in the fifth bit set are consecutive in the first bit stream, where 0 ≤ i₂ < 21. In some still other specific applications, a specific distribution, in the first bit stream, of a total of 294 bit blocks in 42 rows and 7 columns in the fifth bit set may be a continuous distribution of a total of 5328 bits in three rows of bit blocks. For example, a total of 5328 bits in 21 bit blocks A_{3*i*₃,0}, A_{3*i*₃+1,0}, A_{3*i*₃+2,0}, A_{3*i*₃,1}, A_{3*i*₃+1,1}, A_{3*i*₃+2,1}, A_{3*i*₃,2}, A_{3*i*₃+1,2}, A_{3*i*₃+2,2}, A_{3*i*₃,3}, A_{3*i*₃+1,3}, A_{3*i*₃+2,3}, A_{3*i*₃,4}, A_{3*i*₃+1,4}, A_{3*i*₃+2,4}, A_{3*i*₃,5}, A_{3*i*₃+1,5}, A_{3*i*₃+2,5}, A_{3*i*₃,6}, A_{3*i*₃+1,6}, and A_{3*i*₃+2,6} in the fifth bit set are consecutive in the first bit stream, where 0 ≤ i₃ < 14. In some yet other specific applications, a specific distribution, in the first bit stream, of a total of 294 bit blocks in 42 rows and 7 columns in the fifth bit set may be a continuous distribution of a total of 10656 bits in six rows of bit blocks. For example, a total of 10656 bits in 42 bit blocks A_{6*i*₄,0}, A_{6*i*₄+1,0}, A_{6*i*₄+2,0}, A_{6*i*₄+3,0}, A_{6*i*₄+4,0}, A_{6*i*₄+5,0}, A_{6*i*₄,1}, A_{6*i*₄+1,1}, A_{6*i*₄+2,1}, A_{6*i*₄+3,1}, A_{6*i*₄+4,1}, A_{6*i*₄+5,1}, ..., A_{6*i*₄,6}, A_{6*i*₄+1,6}, A_{6*i*₄+2,6}, A_{6*i*₄+3,6}, A_{6*i*₄+4,6}, and A_{6*i*₄+5,6} in the fifth bit set are consecutive in the first bit stream, where 0 ≤ i₄ < 7.

As shown in FIG. 8, the bits in the fifth bit set are distributed as a total of 294 bit blocks A_{*i*₁,*j*₁} (0 ≤ i₁ < 42 and 0 ≤ j₁ < 7) in 42 rows and 7 columns. Bits in leftmost five bit blocks in the fifth bit set, namely, bit blocks A_{*i*₁,*j*₁} (0 ≤ i₁ < 42 and 0 ≤ j₁ < 5 ) filled with shadow backgrounds shown in FIG. 8, are from some bits in the PCS processed second bit set and bits in the non-PCS processed third bit set. Bit blocks in the rightmost two columns in the fifth bit set, namely, bit blocks A_{*i*₁,*j*₁} ( 0 ≤ i₁ < 42 and 5 ≤ j₁ < 7) filled with non-shadow (blank) backgrounds shown in FIG. 8, are from remaining bits of the PCS processed second bit set (that is, no bits from the third bit set are included).

It should be noted that a distribution of specific bit blocks in the fifth bit set 2i in the first bit stream 2i and the fifth bit set 2i+1 in the first bit stream 2i+1 may be understood with reference to FIG. 8. However, specific bit patterns (bit patterns) of bit blocks are not completely the same, that is, specific bit patterns of A_{*i*₁,*j*₁} (0 ≤ i₁ < 42 and 0 ≤ j₁ < 7) in the fifth bit set 2i and A_{*i*₁,*j*₁} (0 ≤ i₁ < 42 and 0 ≤ j₁ < 7) in the fifth bit set 2i+1 are not completely the same.

It should be noted that the bit pattern (also referred to as a bit distribution pattern) is used to describe a specific source and purpose of each bit in the bit block. More specifically, parts in rows *i*₀ and columns *j*₀ filled with shadow backgrounds (marked by using digits "0") in the bit pattern indicate that bits in rows *i*₀ and columns *j*₀ in the bit block are from the non-PCS processed third bit set and/or parity bits of FEC encoding, and are used as sign bits (Sign bits) in symbol mapping (also referred to as modulation). Parts in rows *i*₀ and columns *j*₀ filled with non-shadow (blank) backgrounds (marked by using digits "1") in the bit pattern indicate that bits in rows *i*₀ and columns *j*₀ in the bit block are from the PCS processed second bit set, and are used as amplitude bits (Amplitude bits) in symbol mapping (also referred to as modulation).

The following separately describes patterns of bit blocks in the fifth bit set 2i and the fifth bit set 2i+1. It should be understood that, in the following accompanying drawings that include bit block patterns filled with shadow backgrounds and non-shadow (blank) backgrounds, a part filled with a shadow background is also marked by using a digit "0", and a part filled with a non-shadow (blank) background is also marked by using a digit "1". For shadow backgrounds marked by using digits 0, patterns for filling shadow backgrounds may be different in different accompanying drawings.

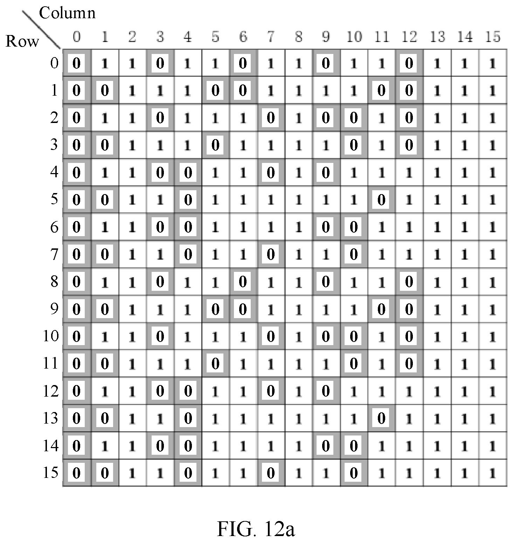

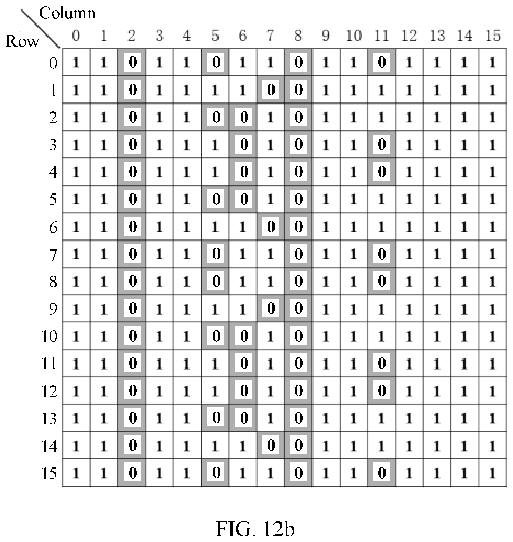

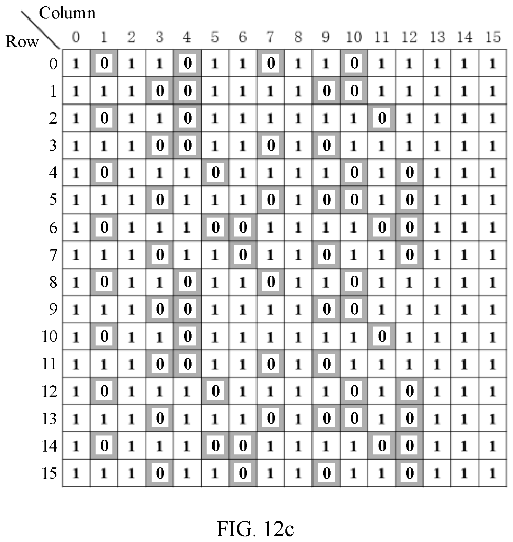

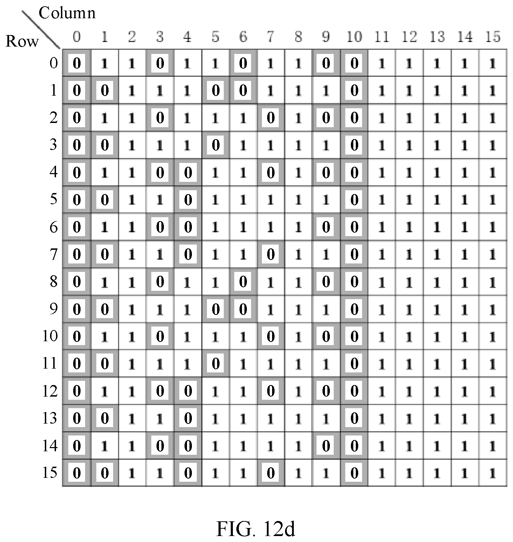

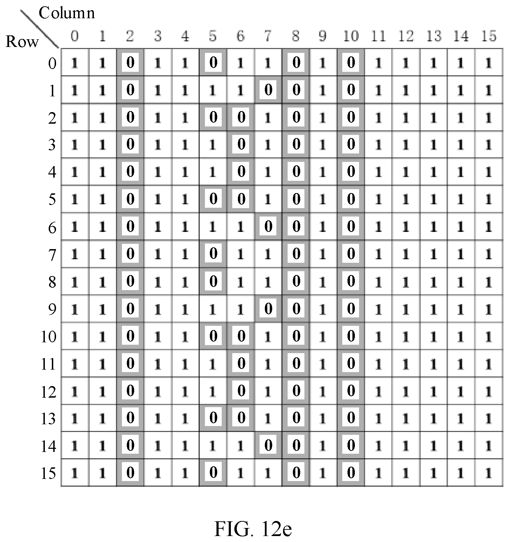

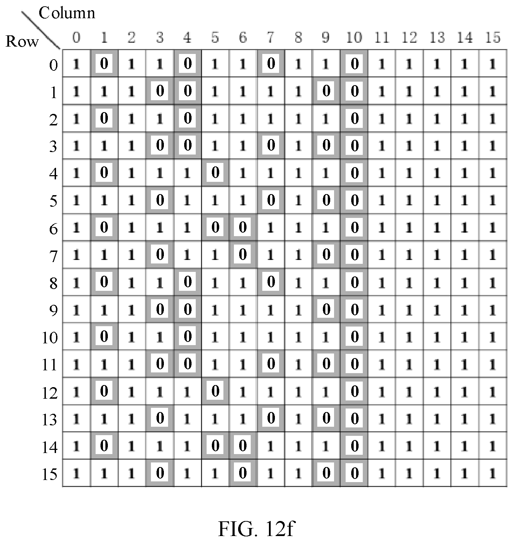

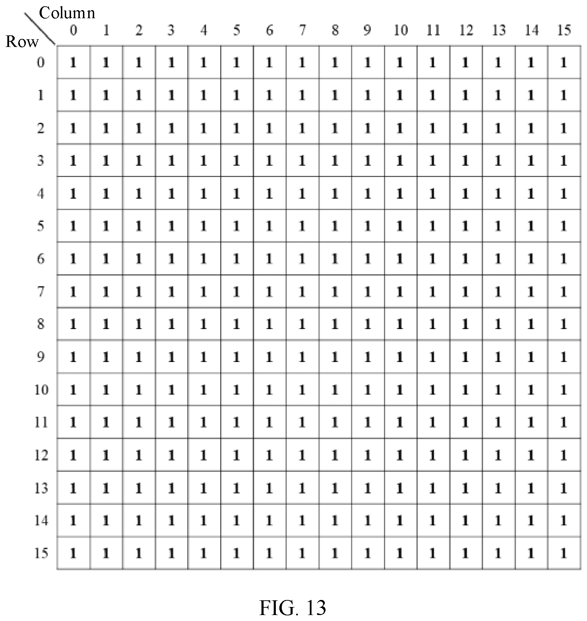

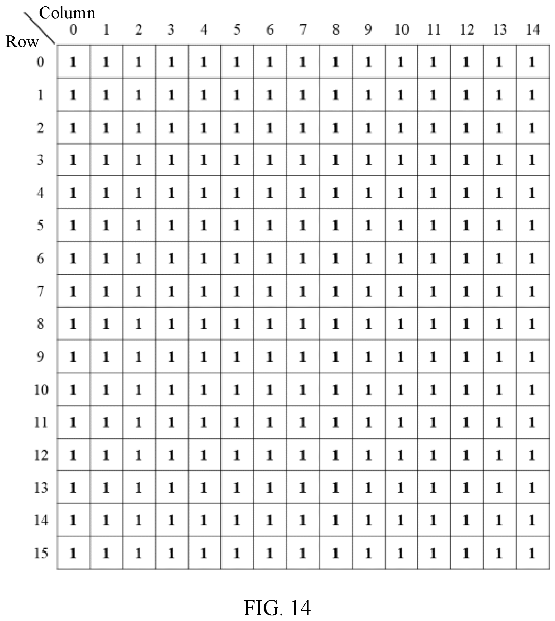

Refer to the diagram of the bit blocks in 42 rows and 7 columns shown in FIG. 8, the following describes the pattern of bit block A_{*i*₁,*j*₁} (0 ≤ i₁ < 42 and 0 ≤ j₁ < 7) in the fifth bit set 2i in the first bit stream 2i. Specifically, FIG. 11a is a diagram of a first bit pattern according to an embodiment of this application; FIG. 11b is a diagram of a second bit pattern according to an embodiment of this application; FIG. 11c is a diagram of a third bit pattern according to an embodiment of this application; FIG. 12a is a diagram of a fourth bit pattern according to an embodiment of this application; FIG. 12b is a diagram of a fifth bit pattern according to an embodiment of this application; FIG. 12c is a diagram of a sixth bit pattern according to an embodiment of this application; FIG. 12d is a diagram of another fourth bit pattern according to an embodiment of this application; FIG. 12e is a diagram of another fifth bit pattern according to an embodiment of this application; FIG. 12f is a diagram of another sixth bit pattern according to an embodiment of this application; FIG. 13 is a diagram of a seventh bit pattern according to an embodiment of this application; and FIG. 14 is a diagram of an eighth bit pattern according to an embodiment of this application.
(1) For 0 ≤ i₁ < 21 and i₁%3 = 0, or 21 ≤ i₁ < 42 and i₁%3 = 2, that is, i₁ = 0, 3, 6, 9, 12, 15, 18, 23, 26, 29, 32, 35, 38, 41, and j₁ = 0,1,2,3, bit patterns of corresponding 56 bit blocks A_{*i*₁,*j*₁} all use a first bit pattern. In an example, when the first symbol mapping is used, the first bit pattern is shown in FIG. 11a, and includes: In a bit block with 16 rows and 16 columns, each row includes six bits filled with shadow backgrounds and 10 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(2) For 0 ≤ i₁ < 21 and i₁%3 = 1, or 21 ≤ i₁ < 42 and i₁%3 = 0, that is, i₁ = 1,4,7,10,13,16,19,21,24,27,30,33,36,39, and j₁ = 0,1,2,3, bit patterns of corresponding 56 bit blocks A_{*i*₁,*j*₁} all use a second bit pattern. In an example, when the first symbol mapping is used, the second bit pattern is shown in FIG. 11b, and includes: In a bit block with 16 rows and 16 columns, each row includes six bits filled with shadow backgrounds and 10 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(3) For 0 ≤ i₁ < 21 and i₁%3 = 2, or 21 ≤ i₁ < 42 and i₁%3 = 1, that is, i₁ = 2,5,8,11,14,17,20,22,25,28,31,34,37,40, and j₁ = 0,1,2,3, bit patterns of corresponding 56 bit blocks A_{*i*₁,*j*₁} all use a third bit pattern. In an example, when the first symbol mapping is used, the third bit pattern is shown in FIG. 11c, and includes: In a bit block with 16 rows and 16 columns, each row includes four bits filled with shadow backgrounds and 12 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(4) For 0 ≤ i₁ < 21 and i₁%3 = 0, or 21 ≤ i₁ < 42 and i₁%3 = 2, that is, i₁ = 0, 3, 6, 9, 12, 15, 18, 23, 26, 29, 32, 35, 38, 41, and j₁ = 4, bit patterns of corresponding 14 bit blocks A_{*i*₁,*j*₁} all use a fourth bit pattern.

In a specific implementation, when the first symbol mapping is used, the fourth bit pattern is shown in FIG. 12a, and includes 82 bits filled with shadow backgrounds and 174 bits filled with non-shadow (blank) backgrounds.

In another specific implementation, when the first symbol mapping is used, the fourth bit pattern is shown in FIG. 12d, and includes 78 bits filled with shadow backgrounds and 178 bits filled with non-shadow (blank) backgrounds.

In still another specific implementation, when the first symbol mapping is used, the fourth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fourth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fourth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.

(5) For 0 ≤ i₁ < 21 and i₁%3 = 1, or 21 ≤ i₁ < 42 and i₁%3 = 0, that is, i₁ = 1,4,7,10,13,16,19,21,24,27,30,33,36,39, and j₁ = 4, bit patterns of corresponding 14 bit blocks A_{*i*₁,*j*₁} all use a fifth bit pattern.

In a specific implementation, when the first symbol mapping is used, the fifth bit pattern is shown in FIG. 12b, and includes 60 bits filled with shadow backgrounds and 196 bits filled with non-shadow (blank) backgrounds.

In another specific implementation, when the first symbol mapping is used, the fifth bit pattern is shown in FIG. 12e, and includes 68 bits filled with shadow backgrounds and 188 bits filled with non-shadow (blank) backgrounds.

In still another specific implementation, when the first symbol mapping is used, the fifth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fifth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fifth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.

(6) For 0 ≤ i₁ < 21 and i₁%3 = 2, or 21 ≤ i₁ < 42 and i₁%3 = 1, that is, i₁ = 2,5,8,11,14,17,20,22,25,28,31,34,37,40, and j₁ = 4, bit patterns of corresponding 14 bit blocks A_{*i*₁,*j*₁} all use a sixth bit pattern.

In a specific implementation, when the first symbol mapping is used, the sixth bit pattern is shown in FIG. 12c, and includes 66 bits filled with shadow backgrounds and 190 bits filled with non-shadow (blank) backgrounds.

In another specific implementation, when the first symbol mapping is used, the sixth bit pattern is shown in FIG. 12f, and includes 62 bits filled with shadow backgrounds and 194 bits filled with non-shadow (blank) backgrounds.

In still another specific implementation, when the first symbol mapping is used, the sixth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the sixth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the sixth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.
(7) For 0 ≤ i₁ < 42 and j₁ = 5, bit patterns of corresponding 42 bit blocks A_{*i*₁,*j*₁} all use a seventh bit pattern. In an example, when the first symbol mapping is used, the seventh bit pattern is shown in FIG. 13, and includes 256 bits filled with non-shadow (blank) backgrounds. The bits filled with the non-shadow (blank) backgrounds are from bits in the PCS processed second bit set.
(8) For 0 ≤ i₁ < 42 and j₁ = 6, bit patterns of corresponding 42 bit blocks A_{*i*₁,*j*₁} all use an eighth bit pattern. In an example, when eighth symbol mapping is used, the eighth bit pattern is shown in FIG. 14, and includes 240 bits filled with non-shadow (blank) backgrounds. The bits filled with the non-shadow (blank) backgrounds are from bits in the PCS processed second bit set.

It should be noted that when 0 ≤ i₁ < 42 and j₁ = 4, corresponding 42 bit blocks A_{*i*₁,*j*₁} include bits in 7840 second bit sets and bits in 2912 third bit sets in total. Further, for every three consecutive rows of bit blocks in the 42 bit blocks A_{*i*₁,4}, that is, when 0 ≤ i₃ < 14 and j₁ = 4, 768 bits in corresponding three bit blocks A_{3*i*₃,*j*₁}, A_{3*i*₃+*j*₁}, A_{3*i*₃+2,*j*₁} include 560 bits from the second bit set and 208 bits from the third bit set. In a specific implementation, when the first symbol mapping is used, the fourth bit pattern is shown in FIG. 12a, the fifth bit pattern is shown in FIG. 12b, and the sixth bit pattern is shown in FIG. 12c. In another specific implementation, when the first symbol mapping is used, the fourth bit pattern is shown in FIG. 12d, the fifth bit pattern is shown in FIG. 12e, and the sixth bit pattern is shown in FIG. 12f.

Refer to the diagram of the bit blocks in 42 rows and 7 columns shown in FIG. 8, the following describes the pattern of bit block A_{*i*₁,*j*₁} (0 ≤ i₁ < 42 and 0 ≤ j₁ < 7) in the fifth bit set 2i+1 in the first bit stream 2i+1.
(1) For 0 ≤ i₁ < 21 and i₁%3 = 0, or 21 ≤ i₁ < 42 and i₁%3 = 2, that is, i₁ = 0, 3, 6, 9, 12, 15, 18, 23, 26, 29, 32, 35, 38, 41, and j₁ = 0,1,2,3, bit patterns of corresponding 56 bit blocks A_{*i*₁,*j*₁} all use the third bit pattern. In an example, when the first symbol mapping is used, the third bit pattern is shown in FIG. 11c.
(2) For 0 ≤ i₁ < 21 and i₁%3 = 1, or 21 ≤ i₁ < 42 and i₁%3 = 0, that is, i₁ = 1,4,7,10,13,16,19,21,24,27,30,33,36,39, and j₁ = 0,1,2,3, bit patterns of corresponding 56 bit blocks A_{*i*₁,*j*₁} all use the first bit pattern. In an example, when the first symbol mapping is used, the first bit pattern is shown in FIG. 11a.
(3) For 0 ≤ i₁ < 21 and i₁%3 = 2, or 21 ≤ i₁ < 42 and i₁%3 = 1, that is, i₁ = 2,5,8,11,14,17,20,22,25,28,31,34,37,40, and j₁ = 0,1,2,3, bit patterns of corresponding 56 bit blocks A_{*i*₁,*j*₁} all use the second bit pattern. In an example, when the first symbol mapping is used, the second bit pattern is shown in FIG. 11b.
(4) For 0 ≤ i₁ < 21 and i₁%3 = 0, or 21 ≤ i₁ < 42 and i₁%3 = 2, that is, i₁ = 0, 3, 6, 9, 12, 15, 18, 23, 26, 29, 32, 35, 38, 41, and j₁ = 4, bit patterns of corresponding 14 bit blocks A_{*i*₁,*j*₁} all use the sixth bit pattern.

In a specific implementation, the bit pattern of bit block A_{*i*₁,*j*₁} uses the sixth bit pattern. In an example, when the first symbol mapping is used, the sixth bit pattern is shown in FIG. 12c.

In another specific implementation, when the first symbol mapping is used, the sixth bit pattern is shown in FIG. 12f.

In still another specific implementation, when the first symbol mapping is used, the sixth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the sixth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the sixth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

(5) For 0 ≤ i₁ < 21 and i₁%3 = 1, or 21 ≤ i₁ < 42 and i₁%3 = 0, that is, i₁ = 1,4,7,10,13,16,19,21,24,27,30,33,36,39, and j₁ = 4, bit patterns of corresponding 14 bit blocks A_{*i*₁,*j*₁} all use the fourth bit pattern.

In a specific implementation, the bit pattern of bit block A_{*i*₁,*j*₁} uses the fourth bit pattern. In an example, when the first symbol mapping is used, the fourth bit pattern is shown in FIG. 12a.

In another specific implementation, when the first symbol mapping is used, the fourth bit pattern is shown in FIG. 12d.

In still another specific implementation, when the first symbol mapping is used, the fourth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fourth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fourth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

(6) For 0 ≤ i₁ < 21 and i₁%3 = 2, or 21 ≤ i₁ < 42 and i₁%3 = 1, that is, i₁ = 2,5,8,11,14,17,20,22,25,28,31,34,37,40, and j₁ = 4, bit patterns of corresponding 14 bit blocks A_{*i*₁,*j*₁} all use the fifth bit pattern.

In a specific implementation, the bit pattern of bit block A_{*i*₁,*j*₁} uses the fifth bit pattern. In an example, when the first symbol mapping is used, the fifth bit pattern is shown in FIG. 12b.

In another specific implementation, when the first symbol mapping is used, the fifth bit pattern is shown in FIG. 12e.

In still another specific implementation, when the first symbol mapping is used, the fifth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fifth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fifth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.
(7) For 0 ≤ i₁ < 42 and j₁ = 5, bit patterns of corresponding 42 bit blocks A_{*i*₁,*j*₁} all use the seventh bit pattern. In an example, when the first symbol mapping is used, the seventh bit pattern is shown in FIG. 13.
(8) For 0 ≤ i₁ < 42 and j₁ = 6, bit patterns of corresponding 42 bit blocks A_{*i*₁,*j*₁} all use the eighth bit pattern. In an example, when the first symbol mapping is used, the eighth bit pattern is shown in FIG. 14.

It should be noted that when 0 ≤ i₁ < 42 and j₁ = 4, corresponding 42 bit blocks A_{*i*₁,*j*₁} include bits in 7840 second bit sets and bits in 2912 third bit sets in total. Further, for every three consecutive rows of bit blocks in the 42 bit blocks A_{*i*₁,4}, that is, when 0 ≤ i₃ < 14 and j₁ = 4, 768 bits in corresponding three bit blocks A_{3*i*₃,*j*₁}, A_{3*i*₃+1,*j*₁,} A_{3*i*₃+2,*j*₁} include 560 bits from the second bit set and 208 bits from the third bit set. In a specific implementation, when the first symbol mapping is used, the fourth bit pattern is shown in FIG. 12c, the fifth bit pattern is shown in FIG. 12a, and the sixth bit pattern is shown in FIG. 12b. In another specific implementation, when the first symbol mapping is used, the fourth bit pattern is shown in FIG. 12f, the fifth bit pattern is shown in FIG. 12d, and the sixth bit pattern is shown in FIG. 12e.

It should be noted that, in this application, bit blocks (or square blocks) in different figures are marked by using same shadow backgrounds. This does not mean that patterns of these bit blocks are completely the same, and is merely a graphical representation method. It should be noted that the bits in the PCS processed second bit set are used as amplitude bits (Amplitude bits) in symbol mapping (also referred to as modulation), and the bits in the non-PCS processed third bit set are used as sign bits (Sign bits) in symbol mapping (also referred to as modulation). In FIG. 11a, FIG. 11b, FIG. 11c, FIG. 12a, FIG. 12b, FIG. 12c, FIG. 13, and FIG. 14, the bits in the shadow backgrounds are from the bits in the non-PCS processed third bit set, which are sign bits, and the remaining bits in the non-shadow (blank) backgrounds are from the bits in the PCS processed second bit set, which are amplitude bits.

It should be noted that the distribution of the bit blocks in the fifth bit set 2i and the fifth bit set 2i+1 is shown in FIG. 8, but patterns of specific bit blocks A_{*i*₁,*j*₁} included in the fifth bit set 2i and the fifth bit set 2i+1 are not completely the same. More specifically, distribution patterns of bit blocks A_{*i*₁,*j*₁} (0 ≤ i₁ ≤ 42 and 0 ≤ j₁ ≤ 5) are different, to be specific, distribution positions of amplitude bits and sign bits in the bit blocks are different. It should be understood that the first bit stream 2i obtained through the "PCS processing and first interleaving" may include a plurality of fifth bit sets 2i, and the first bit stream 2i+1 may include a plurality of fifth bit sets 2i+1.

### (2) FEC encoding:

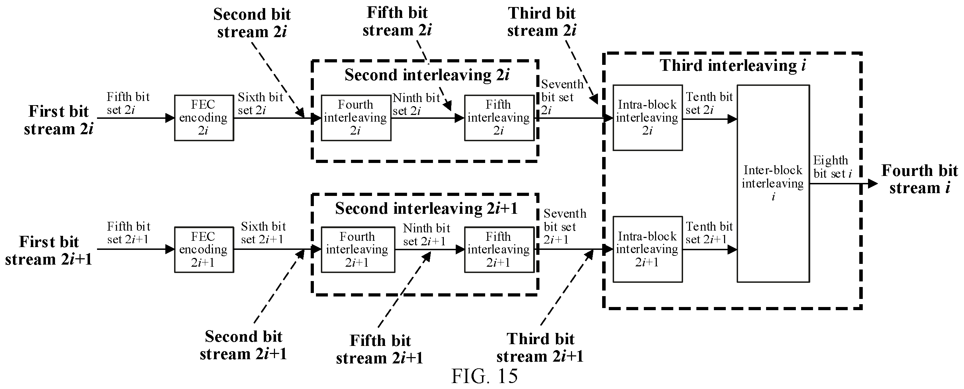

FIG. 15 is a diagram of an implementation of performing data processing on two first bit streams according to an embodiment of this application. As shown in FIG. 15, in "FEC encoding 2i", the fifth bit set 2i in the first bit stream 2i is encoded to add parity bits, so as to obtain a sixth bit set 2i. In "FEC encoding 2i+1", the fifth bit set 2i+1 in the first bit stream 2i+1 is encoded to add parity bits, so as to obtain a sixth bit set 2i+1. It should be understood that a second bit stream 2i output through the FEC encoding may include a plurality of sixth bit sets 2i, and a second bit stream 2i+1 output through the FEC encoding may include a plurality of sixth bit sets 2i+1. It should be noted that, an input processing granularity of the FEC encoding is K, and a corresponding output granularity is N. In consideration of K/N=111/128, an encoding overhead of the FEC encoding is N/K-1=15.3%. In an example, K=3552, N=4096, and extended BCH (256,239) is used for the FEC encoding. In the FEC encoding, a total of 1776×2=3552 bits in every two bit rows in the fifth bit set are encoded to add parity bits, so as to obtain a total of 4096 encoded bits, and the operation is performed for 21 times to obtain the sixth bit set. In the FEC encoding, a total of 111 bits in each bit row in the fifth bit set are encoded to add 17 parity (parity) bits, to obtain a row, totaling 128 bits, in the sixth bit set. More specifically, extended (256,239) encoding is performed on a total of 111 bits in one bit row in one bit block row (which may be considered as a bit block row at a current moment) in the fifth bit set in combination of a total of 128 bits in a plurality of previous bit block rows (which may be considered as bit block rows at a previous moment) in the fifth bit set, totaling 111+128=239 bits, to add 17 parity bits, so as to obtain 256 bits of one codeword. It should be understood that the FEC encoding is a convolutional algebraic code, and is also referred to as a spatially-coupled code.

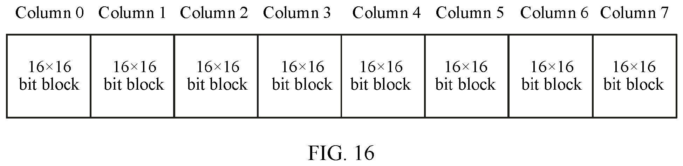

It should be noted that the second bit stream includes a plurality of sixth bit sets, and bits in each sixth bit set are distributed as a total of 336 bit blocks in 42 rows and 8 columns. Each bit block is a square block including 16 bit rows and 16 bit columns. Typically, 256 bits in each square block are consecutive in the second data stream. FIG. 16 is a diagram of eight columns of bit blocks in each row according to an embodiment of this application. As shown in FIG. 16, each row of bit blocks includes eight bit blocks, totaling 2048 bits. It should be understood that, from the FEC encoding to completion of third interleaving, intermediate operations: fourth interleaving, fifth interleaving, intra-block interleaving, and inter-block interleaving, are all performed at a granularity of a total of 336 bit blocks in 42 rows and 8 columns. It should be noted that in some specific applications, the fourth interleaving may be performed at a granularity of a total of 24 bit blocks in three rows and eight columns. In this case, the fourth interleaving is time-varying, in other words, operations on the 24 bit blocks in three rows and eight columns are different at different moments. In some other specific applications, the fourth interleaving may be performed at a granularity of a total of 48 bit blocks in six rows and eight columns. In this case, the fourth interleaving is time-varying, in other words, operations on 48 bit blocks in six rows and eight columns are different at different moments. For ease of description, in this application material, the operations: the fourth interleaving, the fifth interleaving, the intra-block interleaving, and the inter-block interleaving, are performed at a granularity of a total of 336 bit blocks in 42 rows and 8 columns.

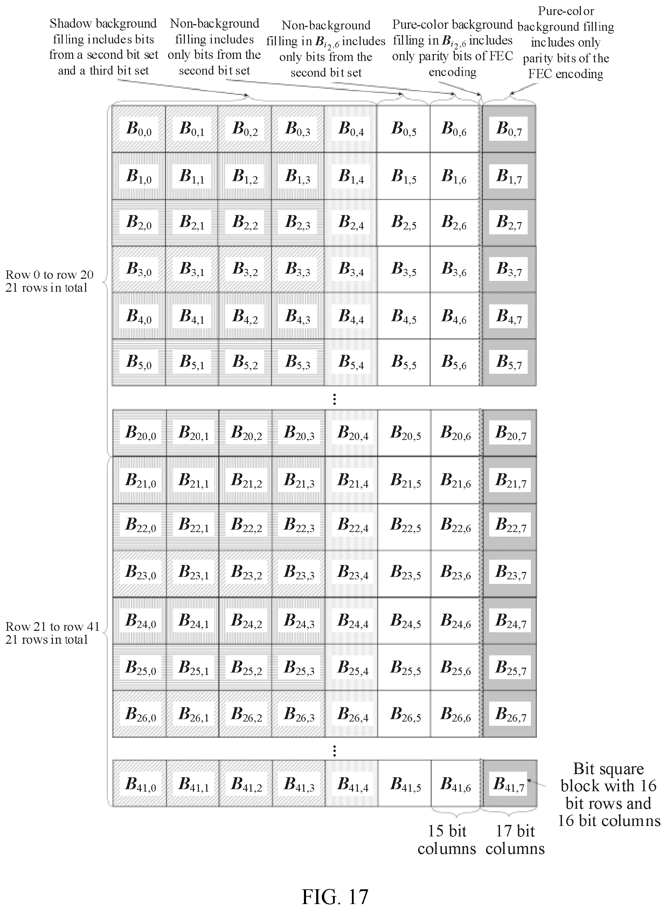

FIG. 17 is a diagram of a sixth bit set according to an embodiment of this application. As shown in FIG. 17, the sixth bit set is presented in a form of a bit rectangular block (rectangular block). A bit block in row i₂ and column j₂ in the sixth bit set is denoted as B_{*i*₂,*j*₂}, where 0 ≤ i₂ < 42 and 0 ≤ j₂ < 8.

In some specific applications, the bit block B_{*i*₂,*j*₂} (0 ≤ i₂ < 42 and 0 ≤ j₂ < 8) includes a total of 256 bits in 16 rows and 16 columns, where the bits are consecutive in the second bit stream. More specifically, FIG. 9 shows a specific distribution. A bit in row r₀ and column c₀ ( 0 ≤ r₀ < 16 and 0 ≤ c₀ < 16 ) in each bit block B_{*i*₂,*j*₂} (0 ≤ i₂ < 42 and 0 ≤ j₂ < 8) corresponds to bit 16 × r₀ + c₀ in 256 bits. For example, a bit in row r₀ = 1 and column c₀ = 0 in the bit block corresponds to bit 16 in the 256 bits. For another example, a bit in row r₀ = 2 and column c₀ = 3 in the bit block corresponds to bit 35 in the 256 bits.

It should be noted that, in some specific applications, a specific distribution, in the second bit stream, of a total of 336 bit blocks in 42 rows and 8 columns in the sixth bit set may be a continuous distribution of a total of 2048 bits in one row of bit blocks. For example, a total of 2048 bits in eight bit blocks B_{*i*₂,0}, B_{*i*₂,1}, B_{*i*₂,2}, B_{*i*₂,3}, B_{*i*₂,4}, B_{*i*₂,5}, B_{*i*₂,6}, and B_{*i*₂,7} in the sixth bit set are consecutive in the second bit stream, where 0 ≤ i₂ < 42. In some other specific applications, a specific distribution, in the second bit stream, of a total of 336 bit blocks in 42 rows and 8 columns in the sixth bit set may be a continuous distribution of a total of 4096 bits in two rows of bit blocks. For example, a total of 4096 bits in 16 bit blocks B_{2*i*₂,0}, B_{2*i*₂+1,0}, B_{2*i*₂,1}, B_{2*i*₂+1,1}, B_{2*i*₂,2}, B_{2*i*₂+1,2}, B_{2*i*₂,3}, B_{2*i*₂+1,3}, B_{2*i*₂,4}, B_{2*i*₂+1,4}, B_{2*i*₂,5}, B_{2*i*₂+1,5}, B_{2*i*₂,6}, B_{2*i*₂+1,6}, B_{2*i*₂,7}, and B_{2*i*₂+1,7} in the sixth bit set are consecutive in the second bit stream, where 0 ≤ i₂ < 21. In some still other specific applications, a specific distribution, in the second bit stream, of a total of 336 bit blocks in 42 rows and 8 columns in the sixth bit set may be a continuous distribution of a total of 6144 bits in three rows of bit blocks. For example, a total of 6144 bits in 24 bit blocks B_{3*i*₂,0}, B_{3*i*₂+1,0}, B_{3*i*₂+2,0}, B_{3*i*₂,1}, B_{3*i*₂+1,1}, B_{3*i*₂+2,1}, B_{3*i*₂,2} , B_{3*i*₂+1,2}, B_{3*i*₂+2,2} , B_{3*i*₂,3}, B_{3*i*₂+1,3}, B_{3*i*₂+2,3}, B_{3*i*₂},4, B_{3*i*₂}+₁,₄, B_{3*i*₂+2,4}, B_{3*i*₂,5}, B_{3*i*₂+1,5}, B_{3*i*₂+2,5}, B_{3*i*₂,6}, B_{3*i*₂+1,6}, B_{3*i*₂+2,6}, B_{3*i*₂,7}, B_{3*i*₂+1,7}, and B_{3*i*₂+2,7} in the sixth bit set are consecutive in the second bit stream, where 0 ≤ i₂ < 14. In some yet other specific applications, a specific distribution, in the second bit stream, of a total of 336 bit blocks in 42 rows and 8 columns in the sixth bit set may be a continuous distribution of a total of 12288 bits in six rows of bit blocks. For example, a total of 12288 bits in 48 bit blocks B_{6*i*₂,0} B_{6*i*₂+1,0}, B_{6*i*₂ + 2,0}, B_{6*i*₂ + 3,0}, B_{6*i*₄ + 2,0}, B_{6*i*₂ + 5,0}, B_{6*i*₂,1}, B_{6*i*₂ + 1,1}, B_{6*i*₂ + 2,1}, B_{6*i*₂ + 3,1}, B_{6*i*₂ + 4,1}, B_{6*i*₂ + 5,1}, ..., B_{6*i*₂,7}, B_{6*i*₂+1},₇, *B*_{6*i*₂+2,7}, B_{6*i*₂+3,7}, B_{6*i*₂+4,7} and B_{6*i*₂+5,7} in the sixth bit set are consecutive in the second bit stream, where 0 ≤ i₂ < 7.

As shown in FIG. 17, the bits in the sixth bit set are distributed as a total of 336 bit blocks B_{*i*₂,*j*₂} (0 ≤ i₂ < 42 and 0 ≤ j₂ < 8) in 42 rows and 8 columns. Bits in leftmost five bit blocks (namely, columns 0 to 4) in the sixth bit set, namely, bit blocks B_{*i*₂,*j*₂} (0 ≤ i₂ < 42 and 0 ≤ j₂ < 5) filled with shadow backgrounds shown in FIG. 17, are from some bits in the PCS processed second bit set and the bits in the non-PCS processed third bit set. Leftmost 15 bit columns in bit block B_{*i*₂,5} (0 ≤ i₂ < 42) in column 5 and bit block B_{*i*₂,6} (0 ≤ i₂ < 42) in column 6 in the sixth bit set, bits in a total of 16+15=31 bit columns, are from remaining bits in the PCS processed second bit set (that is, no bits from the third bit set are included). The rightmost bit column in bit block B_{*i*₂,6} (0 ≤ i₂ < 42) in column 6 and bit block B_{*i*₂,7} (0 ≤ i₂ < 42) in column 7 in the sixth bit set, bits in a total of 1+16=17 bit columns, are from the parity bits obtained through the FEC encoding.

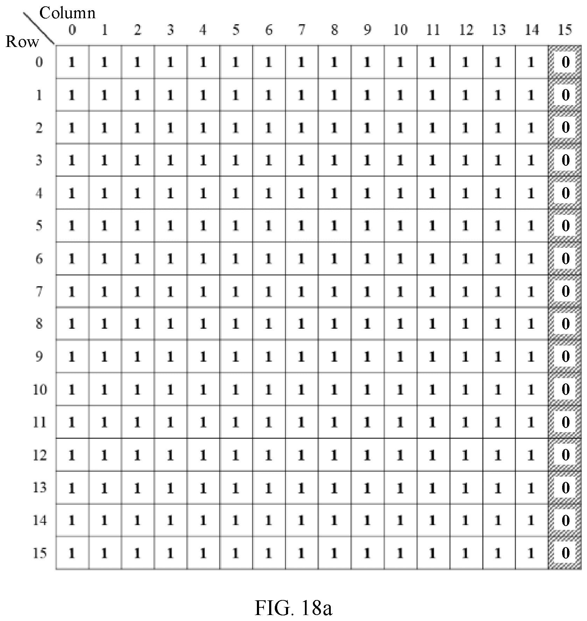

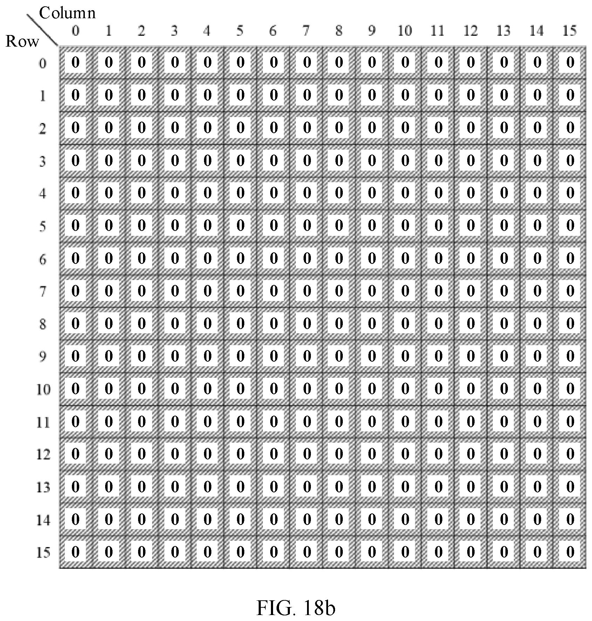

It should be noted that a distribution of specific bit blocks in the sixth bit set 2i in the second bit stream 2i and the sixth bit set 2i+1 in the second bit stream 2i+1 may be understood with reference to FIG. 17. However, specific bit patterns of bit blocks (square blocks) are not completely the same, that is, specific bit patterns of B_{*i*₂,*j*₂} (0 ≤ i₂ < 42 and 0 ≤ j₂ < 8) in the sixth bit set 2i and B_{*i*₂,*j*₂} (0 ≤ i₂ < 42 and 0 ≤ j₂ < 8) in the sixth bit set 2i+1 are not completely the same. The following separately describes patterns of bit blocks (square blocks) in the sixth bit set 2i and the sixth bit set 2i+1. FIG. 18a is a diagram of a ninth bit pattern according to an embodiment of this application. FIG. 18b is a diagram of a tenth bit pattern according to an embodiment of this application.

For 0 ≤ i₂ < 42 and 0 ≤ j₂ < 6, a bit pattern of bit block (square block) B_{*i*₂,*j*₂} in the sixth bit set 2i is the same as that of bit block (square block) A_{*i*₂,*j*₂} in the corresponding fifth bit set 2i before the encoding, and a bit pattern of bit block (square block) B_{*i*₂,*j*₂} in the sixth bit set 2i+1 is the same as that of bit block (square block) A_{*i*₂,*j*₂} in the corresponding fifth bit set 2i+1 before the encoding.

For 0 ≤ i₂ < 42 and j₂ = 6, a bit pattern of bit block (square block) B_{*i*₂,6} in the sixth bit set 2i and the sixth bit set 2i+1 uses the ninth bit pattern. In an example, when the first symbol mapping is used, the ninth bit pattern is shown in FIG. 18a, and includes 240 bits filled with non-shadow (blank) backgrounds and 16 bits filled with shadow backgrounds. The bits filled with the non-shadow (blank) backgrounds are from the bits in the PCS processed second bit set, and the bits filled with the shadow backgrounds are from the parity bits of the FEC encoding.

For 0 ≤ i₂ < 42 and j₂ = 7, a bit pattern of bit block (square block) B_{*i*₂,7} in the sixth bit set 2i and the sixth bit set 2i+1 uses the tenth bit pattern. In an example, when the first symbol mapping is used, the tenth bit pattern is shown in FIG. 18b, and includes 256 bits filled with shadow backgrounds. The bits filled with the shadow backgrounds are from the parity bits of the FEC encoding.

In some specific applications, one sixth bit set 2i in the second bit stream 2i is obtained by directly adding parity bits to one fifth bit set 2i before the encoding, and one sixth bit set 2i+1 in the second bit stream 2i+1 is obtained by directly adding parity bits to one fifth bit set 2i+1 before the encoding. More specifically, bit data in bit columns 0 to 111 in the sixth bit set 2i in the second bit stream 2i is equal to bit data in bit columns 0 to 111 in the fifth bit set 2i before the encoding, and bit data in bit columns 0 to 111 in the sixth bit set 2i+1 in the second bit stream 2i+1 is equal to bit data in bit columns 0 to 111 in the fifth bit set 2i+1 before the encoding.

It should be noted that the bits in the PCS processed second bit set are used as amplitude bits (Amplitude bits) in symbol mapping (also referred to as modulation), and the bits in the non-PCS processed third bit set and the parity bits obtained through the FEC encoding are used as sign bits (Sign bits) in symbol mapping (also referred to as modulation). For the sixth bit set 2i and the sixth bit set 2i+1 shown in FIG. 17, when the square block in the sixth bit set 2i and the sixth bit set 2i+1 uses the bit pattern shown in FIG. 11a, FIG. 11b, FIG. 11c, or FIG. 13, bits in shadow backgrounds in the bit pattern are from the bits in the non-PCS processed third bit set, which are sign bits; and bits in non-shadow backgrounds are from the bits in the PCS processed second bit set, which are amplitude bits. When the bit block uses the bit pattern in FIG. 18a or FIG. 18b, bits in shadow backgrounds in the bit pattern are from the parity bits of the FEC encoding, which are sign bits; and bits in non-shadow (blank) backgrounds are from the bits in the PCS processed second bit set, which are amplitude bits.

It should be noted that the distribution of the bit blocks (square blocks) in the sixth bit set 2i and the sixth bit set 2i+1 is shown in FIG. 17, but patterns of specific bit blocks B_{*i*₂,*j*₂} included in the sixth bit set 2i and the sixth bit set 2i+1 are not completely the same. More specifically, distribution patterns of bit blocks B_{*i*₂,*j*₂} (0 ≤ i₁ < 42 and 0 ≤ j₁ < 5) are different, to be specific, distribution positions of amplitude bits and sign bits in the bit blocks are different. It should be understood that the second bit stream 2i obtained through the "FEC encoding" may include a plurality of sixth bit sets 2i, and the second bit stream 2i+1 may include a plurality of sixth bit sets 2i+1.

### (3) Second interleaving:

As shown in FIG. 15, the second interleaving may include two steps of operations: the fourth interleaving and the fifth interleaving. More specifically, second interleaving 2i includes fourth interleaving 2i and fifth interleaving 2i, and second interleaving 2i+1 includes fourth interleaving 2i+1 and fifth interleaving 2i+1.

A sixth bit set 2i distributed as bit blocks in 42 rows and 8 columns in the second bit stream 2i is sent to the fourth interleaving 2i to obtain a ninth bit set 2i, and the ninth bit set 2i distributed as bit blocks in 42 rows and 8 columns is sent to the fifth interleaving 2i to obtain a seventh bit set 2i. Similarly, a sixth bit set 2i+1 distributed as bit blocks in 42 rows and 8 columns in the second bit stream 2i+1 is sent to the fourth interleaving 2i+1 to obtain a ninth bit set 2i+1, and the ninth bit set 2i+1 distributed as bit blocks in 42 rows and 8 columns is sent to the fifth interleaving 2i+1 to obtain a seventh bit set 2i+1. It should be understood that, as shown in FIG. 15, a fifth bit stream 2i output through the fourth interleaving 2i may include a plurality of ninth bit sets 2i, and a fifth bit stream 2i+1 output through the fourth interleaving 2i+1 may include a plurality of ninth bit sets 2i+1. A third bit stream 2i output through the fifth interleaving 2i may include a plurality of seventh bit sets 2i, and a third bit stream 2i+1 output through the fifth interleaving 2i+1 may include a plurality of seventh bit sets 2i+1.

The following separately describes the fourth interleaving and the fifth interleaving.

In some specific application scenarios, in the fourth interleaving, bits in 168 bit blocks *B*_{*i*₂,*j*₂} (0 ≤ i₂ < 42 and 4 ≤ j₂ < 8) from j₂ = 4 to j₂ = 7 in the sixth bit set are interleaved to obtain a ninth bit set, that is, the 168 bit blocks B_{*i*₂,*j*₂} (0 ≤ i₂ < 42 and 0 ≤ j₂ < 4) from j₂ = 0 to j₂ = 3 in the sixth bit set are not changed. Further, in some specific application scenarios, in the fourth interleaving, bit positions of several bit columns in matrix column 4 B_{*i*₂,4} (0 ≤ i₂ < 42) in the sixth bit set are not changed. For example, bit positions of first (namely, leftmost) several bit columns in B_{*i*₂,4} (0 ≤ i₂ < 42) are not changed, that is, bits of the several first (namely, leftmost) bit columns in B_{*i*₂,4} (0 ≤ i₂ < 42) do not participate in the fourth interleaving. For example, bits in first (namely, leftmost) 10 bit columns in B_{*i*₂,4} (0 ≤ i₂ < 42) do not participate in the fourth interleaving operation, that is, the fourth interleaving is performed on bits in columns 10, 11, 12, 13, 14, and 15 in B_{*i*₂,4} in combination with B_{*i*₂,5}, B_{*i*₂,6}, and B_{*i*₂,7}, totaling 54 bit columns.

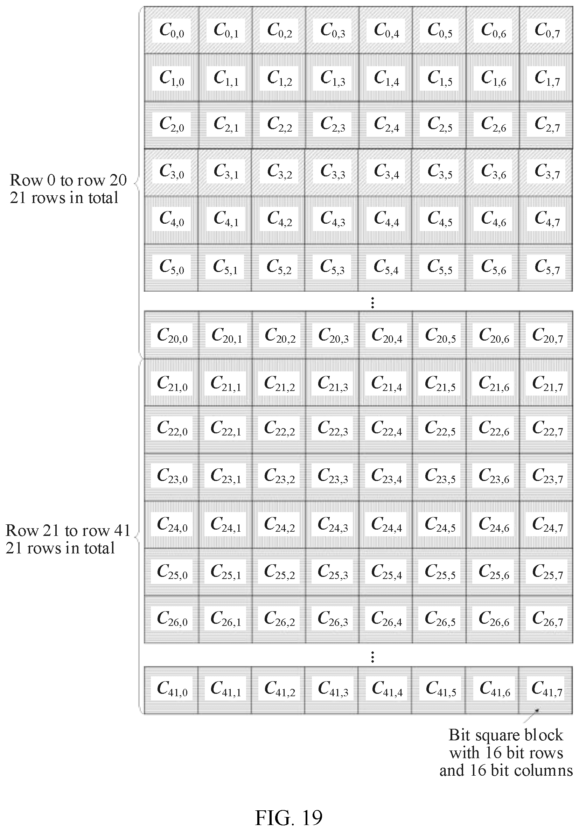

FIG. 19 is a diagram of a ninth bit set according to an embodiment of this application. As shown in FIG. 19, bits in the ninth bit set obtained through the fourth interleaving are distributed as a total of 336 bit blocks C_{*i*₃,*j*₃} (0 ≤ i₃ < 42 and 0 ≤ j₃ < 8) in 42 rows and 8 columns. It should be noted that, in the foregoing total of 336 bit blocks C in 42 rows and 8 columns, sizes of all the bit blocks C_{*i*₃,*j*₃} (0 ≤ i₃ < 42 and 0 ≤ j₃ < 8) are 16 rows and 16 columns of bits (that is, 16 × 16 = 256 bits), as shown in FIG. 9. For ease of description, *C*_{*i*₃,*j*₃}(*r*₃, *c*₃) represents a bit in bit row *r*₃ and bit column c₃ in bit block C_{*i*₃,*j*₃} in square block row i₃ and square block column j₃, where 0 ≤ r₃ < 16 and 0 ≤ c₃ < 16. In some specific applications, the bit block C_{*i*₃,*j*₃} includes a total of 256 bits in 16 rows and 16 columns, where the bits are consecutive in the fifth bit stream.

The following separately describes patterns of bit blocks in the ninth bit set 2i and the ninth bit set 2i+1.

Refer to the diagram of the bit blocks in 42 rows and 8 columns shown in FIG. 19, the following describes the pattern of bit block C_{*i*₃,*j*₃} (0 ≤ i₃ < 42 and 0 ≤ j₃ < 8) in the ninth bit set 2i in the fifth bit stream 2i.
(1) For 0 ≤ i₃ < 21 and i₃ %3 = 0, or 21 ≤ i₃ < 42 and i₃ %3 = 2, that is, i₃ = 0,3,6,9, 12, 15, 18, 23, 26, 29, 32, 35, 38, 41, and 0 ≤ j₃ < 8, bit patterns of corresponding 112 bit blocks C_{*i*₃,*j*₃} all use the first bit pattern. In an example, when the first symbol mapping is used, the first bit pattern is shown in FIG. 11a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₃ < 21 and i₃ %3 = 1, or 21 ≤ i₃ < 42 and i₃ %3 = 0, that is, i₃ = 1,4,7,10,13,16,19,21,24,27,30,33,36,39, and 0 ≤ j₃ < 8, bit patterns of corresponding 112 bit blocks C_{*i*₃,*j*₃} all use the second bit pattern. In an example, when the first symbol mapping is used, the second bit pattern is shown in FIG. 11b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₃ < 21 and i₃ %3 = 2, or 21 ≤ i₃ < 42 and i₃ %3 = 1, that is, i₃ = 2,5,8,11,14,17,20,22,25,28,31,34,37,40, and 0 ≤ j₃ < 8, bit patterns of corresponding 112 bit blocks C_{*i*₃,*j*₃} all use the third bit pattern. In an example, when the first symbol mapping is used, the third bit pattern is shown in FIG. 11c. Bits filled with shadow backgrounds are from bits in the non-PCS processed third bit set and/or the parity bits of the FEC encoding, and bits filled with non-shadow (blank) backgrounds are from the bits in the PCS processed second bit set.

Refer to the diagram of the bit blocks in 42 rows and 8 columns shown in FIG. 19, the following describes the pattern of bit block C_{*i*₃,*j*₃} (0 ≤ i₃ < 42 and 0 ≤ j₃ < 8) in the ninth bit set 2i+1 in the fifth bit stream 2i+1.
(1) For 0 ≤ i₃ < 21 and i₃ %3 = 0, or 21 ≤ i₃ < 42 and i₃ %3 = 2, that is, i₃ = 0,3,6,9, 12, 15, 18, 23, 26, 29, 32, 35, 38, 41, and 0 ≤ j₃ < 8, bit patterns of corresponding 112 bit blocks C_{*i*₃,*j*₃} all use the third bit pattern. In an example, when the first symbol mapping is used, the third bit pattern is shown in FIG. 11c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₃ < 21 and i₃ %3 = 1, or 21 ≤ i₃ < 42 and i₃ %3 = 0, that is, i₃ = 1,4,7,10,13,16,19,21,24,27,30,33,36,39, and 0 ≤ j₃ < 8, bit patterns of corresponding 112 bit blocks C_{*i*₃,*j*₃} all use the first bit pattern. In an example, when the first symbol mapping is used, the first bit pattern is shown in FIG. 11a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₃ < 21 and i₃ %3 = 2, or 21 ≤ i₃ < 42 and i₃ %3 = 1, that is, i₃ = 2,5,8,11,14,17,20,22,25,28,31,34,37,40, and 0 ≤ j₃ < 8, bit patterns of corresponding 112 bit blocks C_{*i*₃,*j*₃} all use the second bit pattern. In an example, when the first symbol mapping is used, the second bit pattern is shown in FIG. 11b. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that the distribution of the bit blocks (square blocks) in the ninth bit set 2i and the ninth bit set 2i+1 is shown in FIG. 19, but patterns of specific bit blocks C_{*i*₃,*j*₃} included in the ninth bit set 2i and the ninth bit set 2i+1 are not completely the same. More specifically, distribution patterns of bit blocks C_{*i*₃,*j*₃} are different, to be specific, distribution positions of amplitude bits and sign bits in the bit blocks are different. It should be understood that the third bit stream 2i obtained through the "fourth interleaving" may include a plurality of ninth bit sets 2i, and the third bit stream 2i+1 may include a plurality of ninth bit sets 2i+1.

It should be noted that bit patterns of each row of eight bit blocks in the sixth bit set obtained through the FEC encoding are not completely the same, and the fourth interleaving enables bit patterns of each row of eight bit blocks in the ninth bit set to be the same. In some specific applications, the fourth interleaving may also be referred to as post-encoding permutation (Post-FEC Permutation).

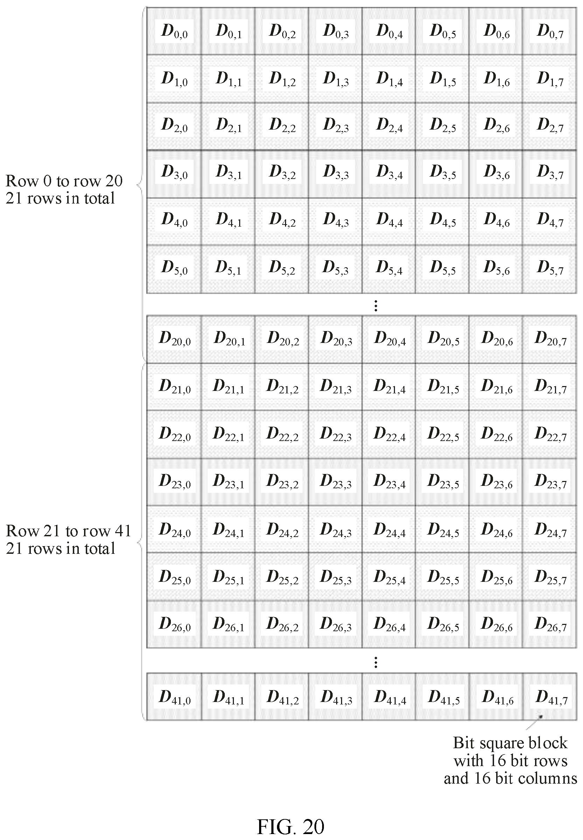

In the fifth interleaving, each bit block D_{*i*₄,*j*₄} (0 ≤ i₄ < 42 and 0 ≤ j₄ < 8) in the ninth bit set is interleaved to obtain the seventh bit set. As shown in FIG. 20, bits in the seventh bit set are distributed as a total of 336 bit blocks D_{*i*₄,*j*₄} (0 ≤ i₄ < 42 and 0 ≤ j₄ < 8) in 42 rows and 8 columns. Sizes of all the bit blocks D_{*i*₄,*j*₄} (0 ≤ i₄ < 42 and 0 ≤ j₄ < 8) are 16 rows and 16 columns of bits (that is, 16 × 16 = 256 bits), as shown in FIG. 9. For ease of description, D_{*i*₄,*j*₄}(*r*₄, *c*₄) represents a bit in bit row *r*₄ and bit column c₄ in bit block D_{*i*₄,*j*₄} in square block row i₄ and square block column j₄ , where 0 ≤ r₄ < 16 and 0 ≤ c₄ < 16. In some specific applications, the bit block D_{*i*₄,*j*₄} includes a total of 256 bits in 16 rows and 16 columns, where the bits are consecutive in the third bit stream.

In some specific applications, in the fifth interleaving, permutation (permutation) is performed on each bit row, totaling 16 bits, in each bit block C_{*i*₃,*j*₃} (0 ≤ i₃ < 42 and 0 ≤ j₃ < 8) in the ninth bit set, to obtain a corresponding bit block D_{*i*₄,*j*₄} in the seventh bit set, where i₄ = i₃, and j₄ = j₃. In the fifth interleaving, 16 bits in each row in each square block are interleaved, which is also referred to as row permutation (row permutation), row interleaving, or "^r" row permutation ("^r" permutation).

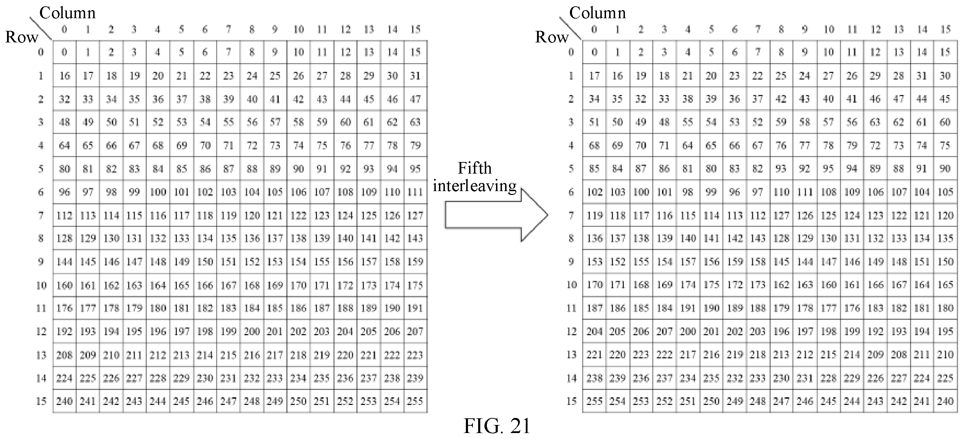

More specifically, bit *D*_{*i*₃,*j*₃}(*r*₄, c₄) in bit row *r*₄ and bit column c₄ in bit block D_{*i*₃*,j*₃} in the seventh bit set are from bit *D*_{*i*₃*,j*₃}(*r*₃, c₃) in bit row *r*₃ and bit column c₃ in bit block C_{*i*₃*,j*₃} in the ninth bit set, where r₄ = r₃ and c₄ = c₃ ^r₃. Here, a^b represents performing bitwise exclusive OR (exclusive or) on two positive integers a and b. FIG. 21 is a diagram of an implementation of fifth interleaving according to an embodiment of this application. As shown in FIG. 21, a specific interleaving manner of the fifth interleaving may be understood with reference to FIG. 21.

The following separately describes patterns of bit blocks in the seventh bit set 2i and the seventh bit set 2i+1.

FIG. 20 is a diagram of a seventh bit set according to an embodiment of this application. As shown in FIG. 20, refer to the diagram of bit blocks in 42 rows and 8 columns shown in FIG. 20, the following describes the pattern of bit block D_{*i*₄,*j*₄} (0 ≤ i₄ < 42 and 0 ≤ j₄ < 8) in the seventh bit set 2i in the third bit stream 2i. FIG. 22a is a diagram of an eleventh bit pattern according to an embodiment of this application; FIG. 22b is a diagram of a twelfth bit pattern according to an embodiment of this application; and FIG. 22c is a diagram of a thirteenth bit pattern according to an embodiment of this application.
(1) For 0 ≤ i₄ < 21 and i₄ %3 = 0, or 21 ≤ i₄ < 42 and i₄ %3 = 2, that is, i₄ = 0,3,6,9, 12, 15, 18, 23, 26, 29, 32, 35, 38, 41, and 0 ≤ j₄ < 8, bit patterns of corresponding 112 bit blocks D_{*i*₄,*j*₄} all use an eleventh bit pattern. In an example, when the first symbol mapping is used, the eleventh bit pattern is shown in FIG. 22a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₄ < 21 and i₄ %3 = 1, or 21 ≤ i₄ < 42 and i₄ %3 = 0, that is, i₄ = 1,4,7,10,13,16,19,21,24,27,30,33,36,39, and 0 ≤ j₄ < 8, bit patterns of corresponding 112 bit blocks *D*_{*i*₄,*j*₄} all use a twelfth bit pattern. In an example, when the first symbol mapping is used, the twelfth bit pattern is shown in FIG. 22b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₄ < 21 and i₄ %3 = 2, or 21 ≤ i₄ < 42 and i₄ %3 = 1, that is, i₄ = 2,5,8,11,14,17,20,22,25,28,31,34,37,40, and 0 ≤ j₄ < 8, bit patterns of corresponding 112 bit blocks *D*_{*i*₄,*j*₄} all use a thirteenth bit pattern. In an example, when the first symbol mapping is used, the thirteenth bit pattern is shown in FIG. 22c. Bits filled with shadow backgrounds are from the bits in the non-PCS processed third bit set and/or the parity bits of the FEC encoding, and bits filled with non-shadow (blank) backgrounds are from the bits in the PCS processed second bit set.

Refer to the diagram of the bit blocks in 42 rows and 8 columns shown in FIG. 20, the following describes the pattern of bit block D_{*i*₄,*j*₄} (0 ≤ i₄ < 42 and 0 ≤ j₄ < 8) in the seventh bit set 2i+1 in the third bit stream 2i+1.
(1) For 0 ≤ i₄ < 21 and i₄ %3 = 0, or 21 ≤ i₄ < 42 and i₄ %3 = 2, that is, i₄ = 0,3,6,9, 12, 15, 18, 23, 26, 29, 32, 35, 38, 41, and 0 ≤ j₄ < 8, bit patterns of corresponding 112 bit blocks *D*_{*i*₄,*j*₄} all use the thirteenth bit pattern. In an example, when the first symbol mapping is used, the thirteenth bit pattern is shown in FIG. 22c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₄ < 21 and i₄ %3 = 1, or 21 ≤ i₄ < 42 and i₄ %3 = 0, that is, i₄ = 1,4,7,10,13,16,19,21,24,27,30,33,36,39, and 0 ≤ j₄ < 8, bit patterns of corresponding 112 bit blocks *D*_{*i*₄,*j*₄} all use the eleventh bit pattern. In an example, when the first symbol mapping is used, the eleventh bit pattern is shown in FIG. 22a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₄ < 21 and i₄ %3 = 2, or 21 ≤ i₄ < 42 and i₄ %3 = 1, that is, i₄ = 2,5,8,11,14,17,20,22,25,28,31,34,37,40, and 0 ≤ j₄ < 8, bit patterns of corresponding 112 bit blocks *D*_{*i*₄,*j*₄} all use the twelfth bit pattern. In an example, when the first symbol mapping is used, the twelfth bit pattern is shown in FIG. 22b. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that the distribution of the bit blocks (square blocks) in the seventh bit set 2i and the seventh bit set 2i+1 is shown in FIG. 20, but patterns of specific bit blocks D_{*i*₄,*j*₄} included in the seventh bit set 2i and the seventh bit set 2i+1 are not completely the same. More specifically, distribution patterns of bit blocks D_{*i*₄,*j*₄} are different, to be specific, distribution positions of amplitude bits and sign bits in the bit blocks are different. It should be understood that the fourth bit stream 2i obtained through the "fifth interleaving" may include a plurality of seventh bit sets 2i, and the fourth bit stream 2i+1 may include a plurality of seventh bit sets 2i+1.

### (4) Third interleaving:

As shown in FIG. 15, the third interleaving may also be referred to as block interleaving (block Interleaving), and the third interleaving includes intra-block interleaving (Intra-block interleaving) and inter-block interleaving (Inter-block interleaving).

The seventh bit set 2i distributed as 42 rows and 8 columns in the third bit stream 2i is sent to intra-block interleaving 2i to obtain a tenth bit set 2i, and intra-block interleaving 2i+1 is performed on the seventh bit set 2i+1 distributed as 42 rows and 8 columns in the third bit stream 2i+1 to obtain a tenth bit set 2i+1. In inter-block interleaving i, the tenth bit set 2i and the tenth bit set 2i+1 are interleaved to obtain an eighth bit set i distributed as 84 rows and 8 columns. It should be noted that, in some specific applications, the block interleaving is also referred to as OFEC interleaving.

The following separately describes the intra-block interleaving and the inter-block interleaving.

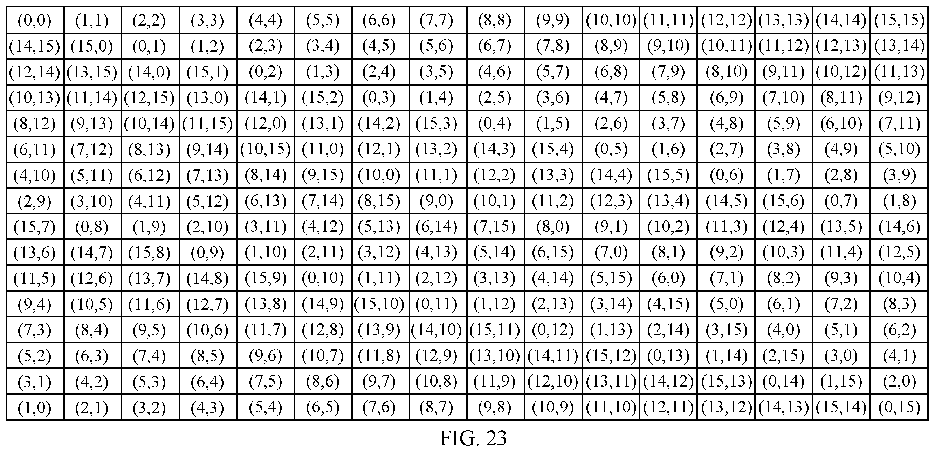

FIG. 23 is a diagram of an implementation of intra-block interleaving according to an embodiment of this application. As shown in FIG. 23, in the intra-block interleaving, each received bit block D_{*i*₄,*j*₄} (0 ≤ i₄ < 42 and 0 ≤ j₄ < 8) in the seventh bit set is intra-block interleaved to obtain bit block E_{*i*₅*,j*₅} (0 ≤ i₅ < 42 and 0 ≤ j₅ < 8) in the tenth bit set including a total of 336 bit blocks whose bits are distributed as 42 rows and 8 columns. In other words, each input square block with 16 rows and 16 columns is interleaved according to an interleaving rule shown in FIG. 23, to obtain an output square block with 16 rows and 16 columns. In FIG. 23, an element in row m and column n (0 ≤ *m* < 16 and 0 ≤ *n* < 16) in the square block with 16 rows and 16 columns is (a, b), indicating that a bit in row m and column n of the "intra-block interleaved" output square block is from a bit in row a and column b of the input square block. For example, in FIG. 23, an element in row 1 and column 0 is (14,15), indicating that a bit in row 1 and column 0 of the "intra-block interleaved" output square block is from a bit in row 14 and column 15 of the input square block. More specifically, a bit in row 1 and column 0 in the intra-block interleaved bit block E_{*i*₅,*j*₅} is from a bit in row 14 and column 15 in bit block D_{*i*₄*,j*₄}. In some specific applications, square block E_{*i*₅*,j*₅} includes a total of 256 bits in 16 rows and 16 columns, where the bits are consecutive in a bit stream output through the intra-block interleaving.

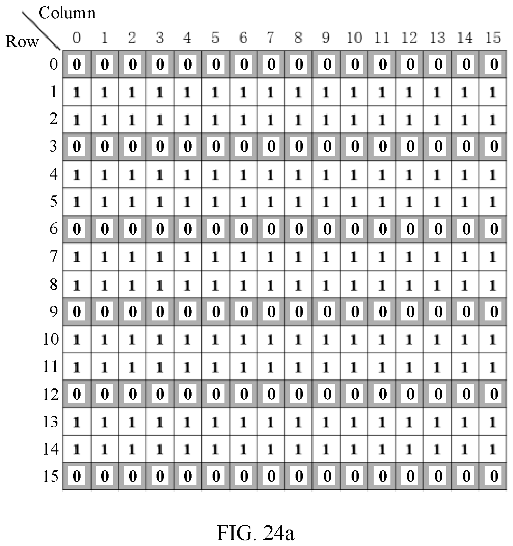

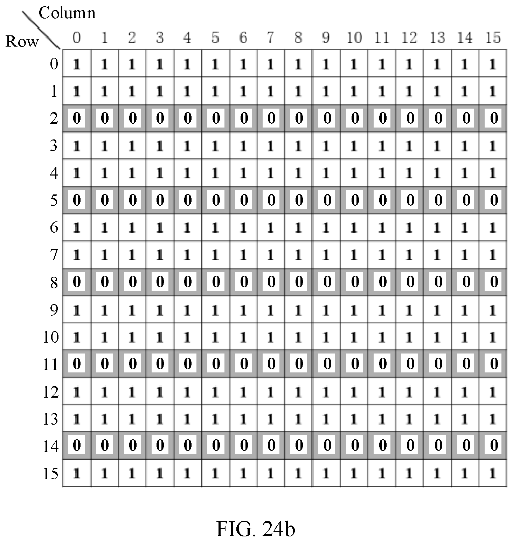

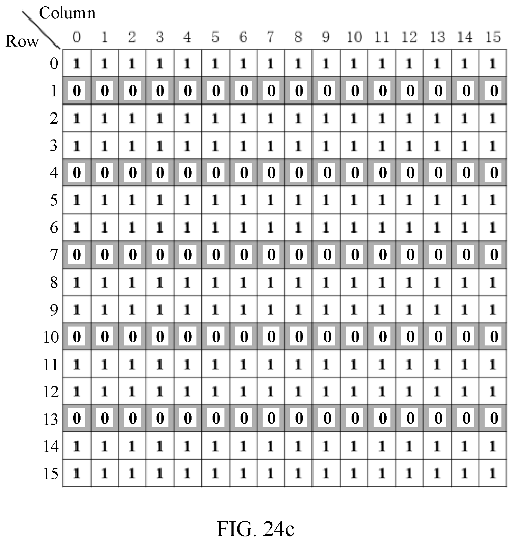

The following separately describes patterns of bit blocks in the tenth bit set 2i and the tenth bit set 2i+1. FIG. 24a is a diagram of a fourteenth bit pattern according to an embodiment of this application; FIG. 24b is a diagram of a fifteenth bit pattern according to an embodiment of this application; and FIG. 24c is a diagram of a sixteenth bit pattern according to an embodiment of this application.

The following describes the pattern of bit block E_{*i*₅*,j*₅} (0 ≤ i₅ < 42 and 0 ≤ j₅ < 8) in the tenth bit set 2i.
(1) For 0 ≤ i₅ < 21 and i₅%3 = 0, or 21 ≤ i₅ < 42 and i₅%3 = 2, that is, i₅ = 0,3,6,9, 12, 15, 18, 23, 26, 29, 32, 35, 38, 41, and 0 ≤ j₅ < 8, bit patterns of corresponding 112 bit blocks E_{*i*₅*,j*₅} all use a fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₅ < 21 and i₅%3 = 1, or 21 ≤ i₅ < 42 and i₅%3 = 0, that is, i₅ = 1,4,7,10,13,16,19,21,24,27,30,33,36,39, and 0 ≤ j₅ < 8, bit patterns of corresponding 112 bit blocks E_{*i*₅,*j*₅} all use a fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₅ < 21 and i₅%3 = 2, or 21 ≤ i₅ < 42 and i₅%3 = 1, that is, i₅ = 2,5,8,11,14,17,20,22,25,28,31,34,37,40, and 0 ≤ j₅ < 8, bit patterns of corresponding 112 bit blocks E_{*i*₅*,j*₅} all use a sixteenth bit pattern. In an example, when the first symbol mapping is used, the sixteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.

The following describes the pattern of bit block E_{*i*₅*,j*₅} (0 ≤ i₅ < 42 and 0 ≤ j₅ < 8) in the tenth bit set 2i+1.
(1) For 0 ≤ i₅ < 21 and i₅%3 = 0, or 21 ≤ i₅ < 42 and i₅%3 = 2, that is, i₅ = 0,3,6,9, 12, 15, 18, 23, 26, 29, 32, 35, 38, 41, and 0 ≤ j₅ < 8, bit patterns of corresponding 112 bit blocks E_{*i*₅*,j*₅} all use the fourteenth bit pattern. In an example, when the first symbol mapping is used, the fourteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₅ < 21 and i₅%3 = 1, or 21 ≤ i₅ < 42 and i₅%3 = 0, that is, i₅ = 1,4,7,10,13,16,19,21,24,27,30,33,36,39, and 0 ≤ j₅ < 8, bit patterns of corresponding 112 bit blocks E_{*i*₅*,j*₅} all use the fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₅ < 21 and i₅%3 = 2, or 21 ≤ i₅ < 42 and i₅%3 = 1, that is, i₅ = 2,5,8,11,14,17,20,22,25,28,31,34,37,40, and 0 ≤ j₅ < 8, bit patterns of corresponding 112 bit blocks E_{*i*₅*,j*₅} all use the fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that, distribution patterns of bit blocks (square blocks) E_{*i*₅*,j*₅} in the tenth bit set 2i and the tenth bit set 2i+1 are different, to be specific, distribution positions of amplitude bits and sign bits in the bit blocks are different.

The inter-block interleaving is performed on intra-block interleaved bits, to improve overall anti-burst performance. The following describes operations of the inter-block interleaving.

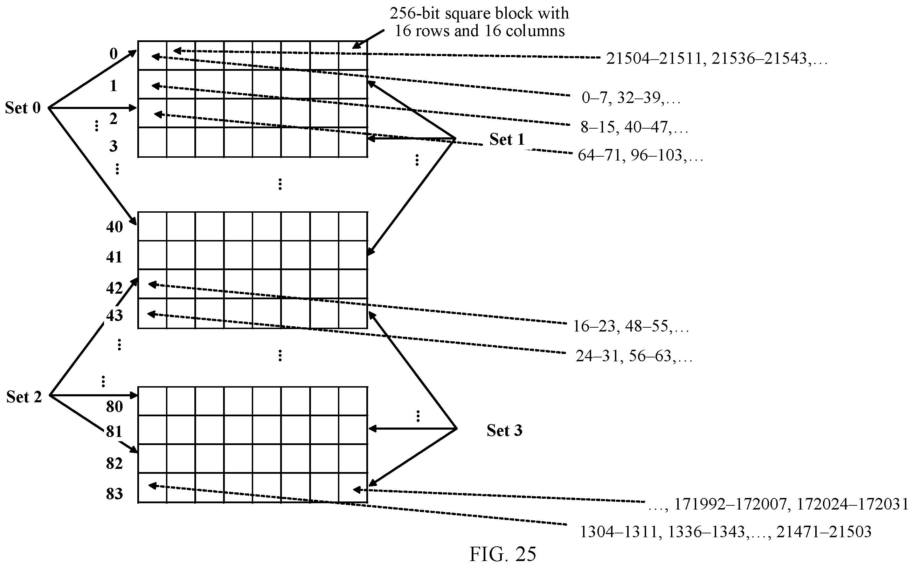

FIG. 25 is a diagram of an embodiment of inter-block interleaving according to an embodiment of this application. As shown in FIG. 25, the inter-block interleaving includes an interleaver buffer (interleaver buffer) M of 84 rows and 8 columns, each row includes eight square blocks, and each square block includes a total of 256 bits in 16 rows and 16 columns, that is, the interleaver buffer M includes a total of 84 × 16 = 1344 bit rows and 8 × 16 = 128 bit columns A size of the interleaver buffer in the inter-block interleaving is 84 × 8 × 256 = 172032 bits, where output blocks are from output blocks of the intra-block interleaving 2i and are located in even-numbered rows in the interleaver buffer M, and output blocks are from output blocks of the intra-block interleaving 2i+1 and are located in odd-numbered rows in the interleaver buffer M.

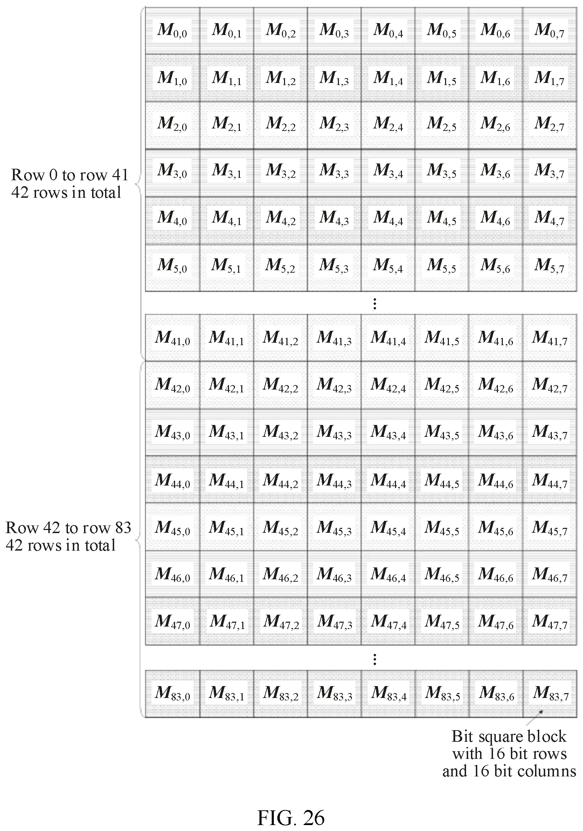

FIG. 26 is a diagram of an inter-block interleaved bit set according to an embodiment of this application. FIG. 26 shows a diagram of bit blocks M_{*i*₆*,j*₆} (0 ≤ i₆ < 84 and 0 ≤ j₆ < 8) in 84 rows and 8 columns in an interleaver buffer M. The following describes a pattern of bit block M_{*i*₆*,j*₆}.
(1) For 0 ≤ i₆ < 42 and i₆%3 = 0, or 42 ≤ i₆ < 84 and i₆%3 = 1, that is, i₆ = 0,3,6,9, 12, 15, 18, 21, 24, 27, 30, 33, 36, 39, 43, 46, 49, 52, 55, 58, 61, 64, 67, 70, 73, 76, 79, 82, and 0 ≤ j₅ < 8, bit patterns of corresponding 224 bit blocks M_{*i*₆*,j*₆} all use the fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₆ < 42 and i₆%3 = 2, or 42 ≤ i₆ < 84 and i₆%3 = 0, that is, i₆ = 2,5,8,11,14,17,20,23,26,29,32,35,38,41,42,45,48,51,54,57,60,63,66,69, 72, 75, 78,81, and 0 ≤ j₅ < 8, bit patterns of corresponding 224 bit blocks *M*_{*i*₆*,j*₆} all use the fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₆ < 42 and i₆%3 = 1, or 42 ≤ i₆ < 84 and i₆%3 = 2, that is, i₆ = 1,4,7,10,13,16,19,22,25,28,31,34,37,40,44,47,50,53,56,59,62,65,68,71,74,77,80,83, and 0 ≤ j₅ < 8, bit patterns of corresponding 224 bit blocks M_{*i*₆*,j*₆} all use the sixteenth bit pattern. In an example, when the first symbol mapping is used, the sixteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.

The interleaver buffer M in the inter-block interleaving may be divided into four sets. As shown in FIG. 25, set 0 includes a total of 21×16×128=43008 bits in square blocks in rows 0, 2, 4, ..., and 40 in the interleaver buffer M, set 1 includes a total of 43008 bits in square blocks in rows 1, 3, 5, ..., and 41 in the interleaver buffer M, set 2 includes a total of 43008 bits in square blocks in rows 42, 44, 46, ..., and 82 in the interleaver buffer M, and set 3 includes a total of 43008 bits in square blocks in rows 43, 45, 47, ..., and 83 in the interleaver buffer M.

Bits in each column are read from each set in a round-robin fashion at a granularity of 8 bits in the interleaver buffer M, and after all bits in each column are read out, bits in a next column are read. First, first 8 bits in a group are read from top to bottom in set 0, and then first 8 bits are read from top to bottom in each of set 1, set 2, and set 3. A total of 32 bits are read in a cycle (cycle). Then, in a next cycle, 8 bits in a next group are read from top to bottom in each of set 0, set 1, set 2, and set 3. A total of 32 bits are read. After a total of 42 cycles, 1344 bits in a current column are read out. Specific operations for reading bits in each column from each set are as follows:

First, 8 bits (bit rows 0 to 7 in square blocks) are sequentially read from top to bottom in the square blocks in row 0 in the interleaver buffer M,
8 bits (bit rows 0 to 7 in square blocks) are sequentially read from top to bottom in the square blocks in row 1 in the interleaver buffer M,
8 bits (bit rows 0 to 7 in square blocks) are sequentially read from top to bottom in the square blocks in row 42 in the interleaver buffer M,
8 bits (bit rows 0 to 7 in square blocks) are sequentially read from top to bottom in the square blocks in row 43 in the interleaver buffer M,
8 bits (bit rows 8 to 15 in square blocks) are sequentially read from top to bottom in the square blocks in row 0 in the interleaver buffer M,
8 bits (bit rows 8 to 15 in square blocks) are sequentially read from top to bottom in the square blocks in row 1 in the interleaver buffer M,
8 bits (bit rows 8 to 15 in square blocks) are sequentially read from top to bottom in the square blocks in row 42 in the interleaver buffer M,
8 bits (bit rows 8 to 15 in square blocks) are sequentially read from top to bottom in the square blocks in row 43 in the interleaver buffer M,
8 bits (bit rows 0 to 7 in square blocks) are sequentially read from top to bottom in the square blocks in row 2 in the interleaver buffer M, and
..., until a total of 1344 bits in a current bit column in the interleaver buffer M are completely read out.

Next, similarly, a total of 1344 bits in a next column of bits in the interleaver buffer M are completely read out based on the foregoing operations, until a total of 1344 bits in the last column of bits in the interleaver buffer M are completely read out. In this case, all 172032 bits in the interleaver buffer M are read out. The 172032 bits read out from the interleaver buffer M are used as an output, namely, an eighth bit set, of the third interleaving. It should be understood that the interleaver buffer M has a total of 128 bit columns.

It should be noted that, in the symbol mapping, bits b₁ and b₂ are two amplitude bits of a DP-64QAM symbol on an I component on X-polarization, bits b₄ and b₅ are two amplitude bits of the DP-64QAM symbol on a Q component on the X-polarization, bits b₇ and b₈ are two amplitude bits of the DP-64QAM symbol on an I component on Y-polarization, and bits b₁₀ and b₁₁ are two amplitude bits of the DP-64QAM symbol on an Q component on the Y-polarization.

It should be further noted that, the bit streams output through the third interleaving (including the intra-block interleaving and the inter-block interleaving) are merged to obtain fourth bit data, and symbol mapping and polarization distribution are performed on the fourth bit data to obtain a dual-polarization symbol. Specifically, bit streams output through a total of L third interleaving are merged in groups of S=12 bits in a round-robin fashion, and then symbol mapping is performed, to be specific, 12 bits output through third interleaving 0 are mapped to one dual polarization modulation symbol, 12 bits output through third interleaving 1 are mapped to one dual polarization modulation symbol, and so on until 12 bits output through third interleaving L-1 are mapped to one dual polarization modulation symbol. The interleaver buffer used in the inter-block interleaving in the third interleaving includes 172032 bits, that is, an interleaving granularity is 172032 bits, and the 172032 bits are mapped to 172032/12=14336 DP-64QAM symbols. In other words, the output of the third interleaving is the eighth bit set, and a total of 172032 bits are mapped to the 172032/12=14336 DP-64QAM symbols.

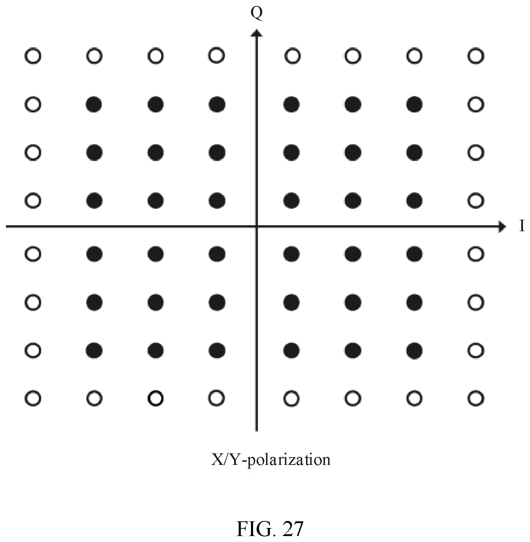

FIG. 27 is a diagram of a constellation diagram in a polarization direction according to an embodiment of this application. As shown in FIG. 27, in some specific application scenarios, specific operations of PCS processing are designed, so that some symbols (constellation points) in a 64QAM constellation diagram do not appear, for example, only 36 internal symbols appear. In this case, a DP-64QAM symbol is also referred to as a DP-36QAM symbol, and 64QAM modulation may also be referred to as 36QAM modulation. For ease of description, DP-36QAM is not distinguished in this application.

A quantity d_{scr} = q × r_{Frame} + d_{CP} of scrambled bits output through the first data processing is an integer multiple of L × e, so that a specific hardware implementation of the overall data processing is simple and power consumption is low. A quantity k_{PCS} of input bits corresponding to the PCS processing is an integer multiple of 2, so that the PCS processing is convenient for a hardware implementation and has good performance. In addition, $\frac{{d}_{scr}}{e} \times 2 \times 2048 \times {k}_{0}$ bits are obtained by performing the PCS processing and the FEC encoding on the d_{scr} scrambled bits output through the first data processing, and $\frac{{d}_{scr}}{e} \times 2 \times 2048 \times {k}_{0}$ is an integer multiple of a total size 172032 × 2 = 344064 of two inter-block interleaver buffers M, so that the specific hardware implementation of the overall data processing is simple, and power consumption is low.

As shown in FIG. 6, the PCS processing and the first interleaving are performed on the e bits to obtain the fourth bit set 2i and the fourth bit set 2i+1, and the quantity of bits in each of the fourth bit set 2i and the fourth bit set 2i+1 is 1776 x *k*₀ bits. When ${d}_{scr} = \frac{2064386}{2 \times \left(1776\times {k}_{0}+544\times \frac{{k}_{0}}{2}\right)} \times e = \frac{504 \times e}{{k}_{0}}$ , after the PCS processing and the FEC encoding, the second interleaving, and the third interleaving are performed on the d_{scr} scrambled bits, $\frac{{d}_{scr}}{L \times e} \times \left(2\times L\times 2048\times {k}_{0}\right) = 2064384$ bits are obtained. 172032 dual-polarization symbols are exactly obtained through DP-64QAM symbol mapping and polarization distribution on the bits, and one super-frame is exactly obtained through DSP framing. In other words, when ${d}_{scr} = \frac{504 \times e}{{k}_{0}}$, one super-frame corresponds to data of r rows and q columns of bits obtained from a data frame each time the first data processing is performed, to simplify data processing. When ${d}_{scr} \neq \frac{504 \times e}{{k}_{0}}$, F_{DSP} super-frames may be used as a combination, so that the F_{DSP} super frames correspond to d_{scr} × F_{Frame} bits output through F_{Frame} first data processing. In this case, ${d}_{scr} \times {F}_{Frame} = \frac{504 \times e}{{k}_{0}} \times {F}_{DSP}$ , where F_{Frame} and F_{DSP} are positive integers. Reserved symbols inserted into each super-frame are designed, so that a receiver can identify the F_{DSP} super frames, to identify a boundary corresponding to the d_{scr} × F_{Frame} bits output through the F_{Frame} first data processing.

In some specific scenarios, in consideration of *k*₀ = 3 and d_{scr} = 168 × e, one DSP super-frame corresponds to data of r rows and q columns of bits obtained from a data frame each time the first data processing is performed, to simplify data processing. In some other specific scenarios, in consideration of *k*₀ = 6 and d_{scr} = 84 × e, one DSP super-frame corresponds to data of r rows and q columns of bits obtained from a data frame each time the first data processing is performed, to simplify data processing. In some still other specific scenarios, in consideration of *k*₀ = 42 and d_{scr} = 12 × e, one DSP super-frame corresponds to data of r rows and q columns of bits obtained from a data frame each time the first data processing is performed, to simplify data processing.

It can be learned from the foregoing descriptions of the first data processing and the second data processing that, for future metro telecommunication transmission and metro DCI scenarios, DP-64QAM is used in combination with FEC encoding and PCS technologies to achieve longer transmission distances. Due to introduction of PCS processing, during symbol mapping, sign bits being 0 and 1 mapped to one modulation symbol need to be equiprobable, and amplitude bits being 0 and 1 mapped to one modulation symbol need to be non-equiprobable. More specifically, probabilities of levels, being 1, 3, 5, and 7, corresponding to amplitude bits mapped to one modulation symbol may be not completely the same. In some specific scenarios, a specific implementation of PCS processing is designed, so that the 7-level may not appear. In this case, the specific implementation is also referred to as DP-36QAM modulation. OFEC encoding is specifically used as an example for FEC encoding. To avoid impact on existing OFEC encoding and OFEC interleavers, a new interleaver needs to be introduced after OFEC encoding and before a symbol mapping operation, so that a PCS processed bit that is non-equiprobable in being 0 and 1 can be mapped to an amplitude bit of a modulation symbol. In this way, occurrence probabilities of constellation points are changed without changing positions of the constellation points, so that constellation points are not evenly distributed, to improve overall performance, so as to satisfy a requirement for longer transmission distances in the future.

The following provides several specific embodiments with reference to the foregoing descriptions of the second data processing.

### Embodiment 1:

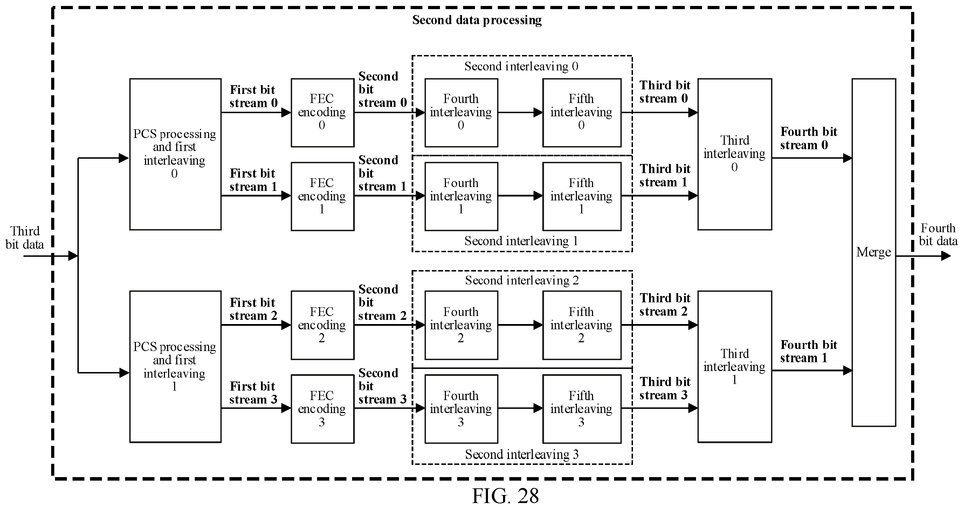

FIG. 28 is a diagram of an application scenario of second data processing according to an embodiment of this application. As shown in FIG. 28, it is considered that the second data processing includes two PCS processing and first interleaving, namely, "PCS processing and first interleaving 0" and "PCS processing and first interleaving 1". In this case, L = 2 . The corresponding second data processing includes four FEC encoding, namely, "FEC encoding 0", "FEC encoding 1", "FEC encoding 2", and "FEC encoding 3". The corresponding second data processing includes four second interleaving, namely, "second interleaving 0", "second interleaving 1", "second interleaving 2", and "second interleaving 3". The corresponding second data processing includes two third interleaving, namely, "third interleaving 0" and "third interleaving 1".

Some bits in third bit data are sent to the PCS processing and first interleaving 0, to obtain a first bit stream 0 and a first bit stream 1, and bits in the third bit data other than the bits that are sent to the PCS processing and first interleaving 0 are sent to the PCS processing and first interleaving 1, to obtain a first bit stream 2 and a first bit stream 3. Two outputs of each PCS processing and first interleaving are respectively sent to two FEC encoding and two second interleaving in sequence, and outputs of the two second interleaving are sent to one third interleaving.

Specifically, the first bit stream 0 and the first bit stream 1 are respectively sent to the FEC encoding 0 and the FEC encoding 1 to obtain a second bit stream 0 and a second bit stream 1, then the second bit stream 0 and the second bit stream 1 are respectively sent to the second interleaving 0 and the second interleaving 1 to obtain a third bit stream 0 and a third bit stream 1, and then, the third bit stream 0 and the third bit stream 1 are sent to the third interleaving 0 to obtain a fourth bit stream 0.

Similarly, the first bit stream 2 and the first bit stream 3 are respectively sent to the FEC encoding 2 and the FEC encoding 3 to obtain a second bit stream 2 and a second bit stream 3, then the second bit stream 2 and the second bit stream 3 are respectively sent to the second interleaving 2 and the second interleaving 3 to obtain a third bit stream 2 and a third bit stream 3, and then the third bit stream 2 and the third bit stream 3 are sent to the third interleaving 1 to obtain a fourth bit stream 1.

Finally, the fourth bit stream 0 and the fourth bit stream 1 are sent for merging to obtain fourth bit data.

### Embodiment 2:

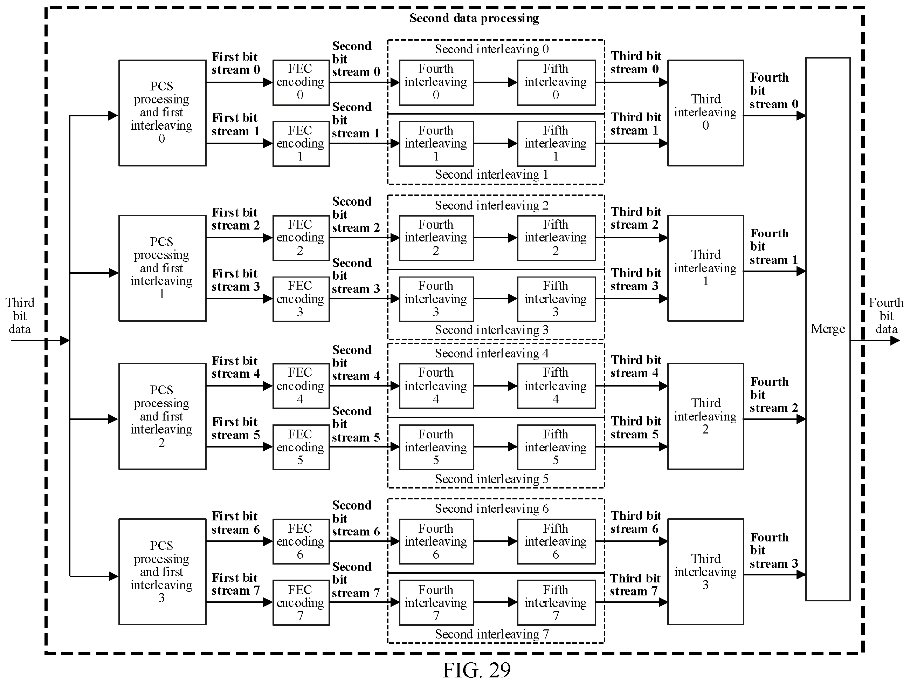

FIG. 29 is a diagram of another application scenario of second data processing according to an embodiment of this application. As shown in FIG. 29, it is considered that the second data processing includes four PCS processing and first interleaving, namely, "PCS processing and first interleaving 0", "PCS processing and first interleaving 1", "PCS processing and first interleaving 2", and "PCS processing and first interleaving 3". In this case, L = 4. The corresponding second data processing includes eight FEC encoding, namely, "FEC encoding 0", "FEC encoding 1", "FEC encoding 2", "FEC encoding 3", "FEC encoding 4", "FEC encoding 5", "FEC encoding 6", and "FEC encoding 7". The corresponding second data processing includes eight second interleaving, namely, "second interleaving 0", "second interleaving 1", "second interleaving 2", "second interleaving 3", "second interleaving 4", "second interleaving 5", "second interleaving 6", and "second interleaving 7". The corresponding second data processing includes four third interleaving, namely, "third interleaving 0", "third interleaving 1", "third interleaving 2", and "third interleaving 3".

Some bits in third bit data are sent to the PCS processing and first interleaving 0 to obtain a first bit stream 0 and a first bit stream 1, some bits in the third bit data other than the bits that are sent to the PCS processing and first interleaving 0 are sent to the PCS processing and first interleaving 1 to obtain a first bit stream 2 and a first bit stream 3, some bits in the third bit data other than the bits that are sent to the PCS processing and first interleaving 0 and the PCS processing and first interleaving 1 are sent to the PCS processing and first interleaving 2 to obtain a first bit stream 4 and a first bit stream 5, and bits in the third bit data other than the bits that are sent to the PCS processing and first interleaving 0, the PCS processing and first interleaving 1, and the PCS processing and first interleaving 2 are sent to the PCS processing and first interleaving 3 to obtain a first bit stream 6 and a first bit stream 7. Two outputs of each PCS processing and first interleaving are respectively sent to two FEC encoding and two second interleaving in sequence, and outputs of the two second interleaving are sent to one third interleaving.

Specifically, the first bit stream 0 and the first bit stream 1 are respectively sent to the FEC encoding 0 and the FEC encoding 1 to obtain a second bit stream 0 and a second bit stream 1, then the second bit stream 0 and the second bit stream 1 are respectively sent to the second interleaving 0 and the second interleaving 1 to obtain a third bit stream 0 and a third bit stream 1, and then, the third bit stream 0 and the third bit stream 1 are sent to the third interleaving 0 to obtain a fourth bit stream 0.

Similarly, the first bit stream 2 and the first bit stream 3 are respectively sent to the FEC encoding 2 and the FEC encoding 3 to obtain a second bit stream 2 and a second bit stream 3, then the second bit stream 2 and the second bit stream 3 are respectively sent to the second interleaving 2 and the second interleaving 3 to obtain a third bit stream 2 and a third bit stream 3, and then the third bit stream 2 and the third bit stream 3 are sent to the third interleaving 1 to obtain a fourth bit stream 1.

Similarly, the first bit stream 4 and the first bit stream 5 are respectively sent to the FEC encoding 4 and the FEC encoding 5 to obtain a second bit stream 4 and a second bit stream 5, then the second bit stream 4 and the second bit stream 5 are respectively sent to the second interleaving 4 and the second interleaving 5 to obtain a third bit stream 4 and a third bit stream 5, and then the third bit stream 4 and the third bit stream 5 are sent to the third interleaving 2 to obtain a fourth bit stream 2.

Similarly, the first bit stream 6 and the first bit stream 7 are respectively sent to the FEC encoding 6 and the FEC encoding 7 to obtain a second bit stream 6 and a second bit stream 7, then the second bit stream 6 and the second bit stream 7 are respectively sent to the second interleaving 6 and the second interleaving 7 to obtain a third bit stream 6 and a third bit stream 7, and then the third bit stream 6 and the third bit stream 7 are sent to the third interleaving 3 to obtain a fourth bit stream 3.

Finally, the fourth bit stream 0, the fourth bit stream 1, the fourth bit stream 2, and the fourth bit stream 3 are sent for merging to obtain fourth bit data.

### Embodiment 3:

A sixth bit set 2i distributed as bit blocks in 42 rows and 8 columns in a second bit stream 2i is sent to fourth interleaving 2i to obtain a ninth bit set 2i, and a sixth bit set 2i+1 distributed as bit blocks in 42 rows and 8 columns in the second bit stream 2i+1 is sent to fourth interleaving 2i+1 to obtain a ninth bit set 2i+1.

FIG. 30a-1 and FIG. 30a-2 are a diagram of bit distribution of last 51 bit columns in a sixth bit set 2i and a sixth bit set 2i+1 according to an embodiment of this application. In an example, for 0 ≤ i₂ < 42, patterns of last three bits columns in bit block B_{i₂,4} in row i₂ and column j₂ = 4 in the sixth bit set 2i and the sixth bit set 2i+1 are shown in FIG. 30a-1 and FIG. 30a-2, that is, these bits are amplitude bits. Patterns of bits in bit blocks B_{i₂,5}, B_{i₂,6}, and B_{i₂,7} in row i₂ and columns j₂ = 5, 6, 7 in the sixth bit set 2i and the sixth bit set 2i+1 are shown in FIG. 30a-1 and FIG. 30a-2, that is, bits in B_{i₂,5} are all amplitude bits, bits in first 15 bit columns in B_{i₂,6} are all amplitude bits, bits in the last bit column in B_{i₂,6} are all from FEC parity bits (that is, all the bits are sign bits), and all bits in B_{i₂,7} are from the FEC parity bits (that is, all the bits are sign bits).

FIG. 30b-1 and FIG. 30b-2 are a diagram of bit distribution of a ninth bit set 2i according to an embodiment of this application. Bits in the last 51 bit columns in the sixth bit set 2i are sent to the fourth interleaving 2i to obtain bits in last 51 bit columns in the ninth bit set 2i shown in FIG. 30b-1 and FIG. 30b-2.

In the ninth bit set 2i, for 0 ≤ i₃ < 21 and i₃ %3 = 0, or 21 ≤ i₃ < 42 and i₃ %3 = 2, that is, i₃ = 0,3,6,9, 12, 15, 18, 23, 26, 29, 32, 35, 38, 41: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11a; and when j₃ = 5, 6, 7, distribution patterns of bit blocks C_{i₃,5}, C_{i₃,6}, and C_{i₃,7} are all shown in FIG. 11a.

In the ninth bit set 2i, for 0 ≤ i₃ < 21 and i₃ %3 = 1, or 21 ≤ i₃ < 42 and i₃ %3 = 0, that is, i₃ = 1,4,7,10,13,16,19,21,24,27,30,33,36,39: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11b; and when j₃ = 5, 6, 7, distribution patterns of bit blocks C_{j₃,5}, C_{i₃,6}, and C_{i₃,7} are all shown in FIG. 11b.

In the ninth bit set 2i, for 0 ≤ i₃ < 21 and i₃ %3 = 2, or 21 ≤ i₃ < 42 and i₃ %3 = 1, that is, i₃ = 2,5,8,11,14,17,20,22,25,28,31,34,37,40: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11c; and when j₃ = 5, 6, 7, distribution patterns of bit blocks C_{i₃,5}, C_{i₃,6}, and C_{i₃,7} are all shown in FIG. 11c.

FIG. 30c-1 and FIG. 30c-2 are a diagram of bit distribution of a ninth bit set 2i+1 according to an embodiment of this application. Bits in the last 51 bit columns in the sixth bit set 2i+1 are sent to the fourth interleaving 2i+1 to obtain bits in last 51 bit columns in the ninth bit set 2i+1 shown in FIG. 30c-1 and FIG. 30c-2.

In the ninth bit set 2i+1, for 0 ≤ i₃ < 21 and i₃ %3 = 0, or 21 ≤ i₃ < 42 and i₃ %3 = 2, that is, i₃ = 0,3,6,9, 12, 15, 18, 23, 26, 29, 32, 35, 38, 41: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11c; and when j₃ = 5, 6, 7, distribution patterns of bit blocks C_{i₃,5}, C_{i₃,6}, and C_{i₃,7} are all shown in FIG. 11c.

In the ninth bit set 2i+1, for 0 ≤ i₃ < 21 and i₃ %3 = 1, or 21 ≤ i₃ < 42 and i₃ %3 = 0, that is, i₃ = 1,4,7,10,13,16,19,21,24,27,30,33,36,39: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11a; and when j₃ = 5, 6, 7, distribution patterns of bit blocks C_{i₃,5}, C_{i₃,6}, and C_{i₃,7} are all shown in FIG. 11a.

In the ninth bit set 2i+1, for 0 ≤ i₃ < 21 and i₃ %3 = 2, or 21 ≤ i₃ < 42 and i₃ %3 = 1, that is, i₃ = 2,5,8,11,14,17,20,22,25,28,31,34,37,40: when j₃ = 4, distribution patterns of bits in last three bit columns, namely, bit column *r*₃ = 13, bit column *r*₃ = 14, and bit column *r*₃ = 15, in bit block C_{i₃,4} are shown in bit column 13, bit column 14, and bit column 15 in FIG. 11b; and when j₃ = 5, 6, 7, distribution patterns of bit blocks C_{i₃,5}, C_{i₃,6}, and C_{i₃,7} are all shown in FIG. 11b.

### Embodiment 4:

In consideration of use of first symbol mapping, a sixth bit set 2i distributed as bit blocks in 42 rows and 8 columns in a second bit stream 2i is sent to fourth interleaving 2i to obtain a ninth bit set 2i, and a sixth bit set 2i+1 distributed as bit blocks in 42 rows and 8 columns in the second bit stream 2i+1 is sent to fourth interleaving 2i+1 to obtain a ninth bit set 2i+1.

FIG. 31a-1 and FIG. 31a-2 are a diagram of bit distribution of last 54 bit columns in a sixth bit set 2i and a sixth bit set 2i+1 according to an embodiment of this application. In an example, for 0 ≤ *i*₂ < 42, patterns of last six bits columns in bit block B_{*i*₂,4} in row i₂ and column j₂ = 4 in the sixth bit set 2i and the sixth bit set 2i+1 are shown in FIG. 31a-1 and FIG. 31a-2, where bit column 10 in bit block B_{*i*₂,4} is sign bits, and bit column 11 to bit column 15 in bit block B_{*i*₂,4} are amplitude bits. Patterns of bits in bit blocks B_{*i*₂,5}, B_{*i*₂,6}, and B_{*iZ*₂,7} in row i₂ and columns j₂ = 5, 6, 7 in the sixth bit set 2i and the sixth bit set 2i+1 are shown in FIG. 31a-1 and FIG. 31a-2, that is, bits in B_{*i*₂,5} are all amplitude bits, bits in first 15 bit columns in B_{*i*₂,6} are all amplitude bits, bits in the last bit column in B_{*i*₂,6} are all from FEC parity bits (that is, all the bits are sign bits), and all bits in B_{*i*₂,7} are from the FEC parity bits (that is, all the bits are sign bits).

FIG. 31b-1 and FIG. 31b-2 are a diagram of bit distribution of a ninth bit set 2i according to an embodiment of this application. Bits in the last 54 bit columns in the sixth bit set 2i are sent to the fourth interleaving 2i to obtain bits in last 54 bit columns in the ninth bit set 2i shown in FIG. 31b-1 and FIG. 31b-2.

In the ninth bit set 2i, for 0 ≤ i₃ < 21 and i₃ %3 = 0, or 21 ≤ i₃ < 42 and i₃ %3 = 2, that is, i₃ = 0, 3, 6, 9, 12, 15, 18, 23, 26, 29, 32, 35, 38, 41: when j₃ = 4, distribution patterns of bits in last six bit columns, namely, bit columns *r*₃ = 10, 11, 12, 13, 14, 15, in bit block C_{i₃,4} are shown in bit columns 10, 11, 12, 13, 14, 15 in FIG. 11a; and when j₃ = 5, 6, 7, distribution patterns of bit blocks C_{i₃,5}, C_{i₃,6}, and C_{i₃,7} are all shown in FIG. 11a.

In the ninth bit set 2i, for 0 ≤ i₃ < 21 and i₃ %3 = 1, or 21 ≤ i₃ < 42 and i₃ %3 = 0, that is, i₃ = 1, 4, 7, 10, 13, 16,19, 21, 24, 27, 30, 33, 36, 3 9: when j₃ = 4, distribution patterns of bits in last six bit columns, namely, bit columns *r*₃ = 10, 11, 12, 13, 14, 15 in bit block C_{i₃,4} are shown in bit columns 10, 11, 12, 13, 14, 15 in FIG. 11b; and when j₃ = 5, 6, 7, distribution patterns of bit blocks C_{i₃,5}, C_{i₃,6}, and C_{i₃,7} are all shown in FIG. 11b.

In the ninth bit set 2i, for 0 ≤ i₃ < 21 and i₃ %3 = 2, or 21 ≤ i₃ < 42 and i₃ %3 = 1, that is, i₃ = 2, 5, 8, 11, 14, 17, 20, 22, 25, 28, 31, 34, 37, 40: when j₃ = 4, distribution patterns of bits in last six bit columns, namely, bit columns *r*₃ = 10, 11, 12, 13, 14, 15 in bit block C_{i₃,4} are shown in bit columns 10, 11, 12, 13, 14, 15 in FIG. 11c; and when j₃ = 5, 6, 7, distribution patterns of bit blocks C_{i₃,5}, C_{i₃,6}, and C_{i₃,7} are all shown in FIG. 11c.

FIG. 31c-1 and FIG. 31c-2 are a diagram of bit distribution of a ninth bit set 2i+1 according to an embodiment of this application. Bits in the last 54 bit columns in the sixth bit set 2i+1 are sent to the fourth interleaving 2i+1 to obtain bits in last 54 bit columns in the ninth bit set 2i+1 shown in FIG. 31c-1 and FIG. 31c-2.

In the ninth bit set 2i+1, for 0 ≤ i₃ < 21 and i₃ %3 = 0, or 21 ≤ i₃ < 42 and i₃ %3 = 2, that is, i₃ = 0, 3, 6, 9, 12, 15, 18, 23, 26, 29, 32, 35, 38, 41: when j₃ = 4, distribution patterns of bits in last six bit columns, namely, bit columns *r*₃ = 10, 11, 12, 13, 14, 15, in bit block C_{i₃,4} are shown in bit columns 10, 11, 12, 13, 14, 15 in FIG. 11c; and when j₃ = 5, 6, 7, distribution patterns of bit blocks C_{i₃,5}, C_{i₃,6}, and C_{i₃,7} are all shown in FIG. 11c.

In the ninth bit set 2i+1, for 0 ≤ i₃ < 21 and i₃ %3 = 1, or 21 ≤ i₃ < 42 and i₃%3 = 0, that is, i₃ = 1, 4, 7, 10, 13, 16, 19, 21, 24, 27, 30, 33, 36, 39: when j₃ = 4, distribution patterns of bits in last six bit columns, namely, bit columns *r*₃ = 10, 11, 12, 13, 14, 15 in bit block C_{i₃,4} are shown in bit columns 10, 11, 12, 13, 14, 15 in FIG. 11a; and when j₃ = 5, 6, 7 , distribution patterns of bit blocks C_{i₃,5}, C_{i₃,6}, and C_{i₃,7} are all shown in FIG. 11a.

In the ninth bit set 2i+1, for 0 ≤ i₃ < 21 and i₃ %3 = 2, or 21 ≤ i₃ < 42 and i₃ %3 = 1, that is, i₃ = 2,5, 8, 11, 14, 17, 20, 22, 25, 28, 31, 34, 37, 40: when j₃ = 4, distribution patterns of bits in last six bit columns, namely, bit columns *r*₃ = 10, 11, 12, 13, 14, 15 in bit block C_{i₃,4} are shown in bit columns 10, 11, 12, 13, 14, 15 in FIG. 11b; and when j₃ = 5, 6, 7, distribution patterns of bit blocks C_{i₃,5}, C_{i₃,6}, and C_{i₃,7} are all shown in FIG. 11b.

### Embodiment 5:

FIG. 32 is a diagram of still another application scenario of second data processing according to an embodiment of this application. As shown in FIG. 32, it is considered that second bit data processing L=2, and PCS processing and first interleaving specifically use the manner shown in FIG. 6c. In some application scenarios, the PCS processing, the first interleaving, and fourth interleaving may be collectively referred to as a probabilistic constellation shaper (Probabilistic Constellation Shaper), as shown in a grid shadow region in FIG. 32. In some application scenarios, an input processing granularity of FEC encoding is K=3552 bits, a corresponding output granularity is N=4096 bits, extended BCH (256,239) with an encoding overhead of 15.3% is used, and the FEC encoding and fifth interleaving may be collectively referred to as OFEC encoding, as shown in an area shaded with oblique lines in FIG. 32.

It is considered that each row of one data frame includes q = 10280 bits. In first data processing, r_{Frame} rows of data is obtained from the data frame to obtain a total of dᵢₙ = q × r_{Frame} bits. Then, CRC and/or pad bit insertion are/is performed on first bit data, to obtain second bit data. d_{CRC} CRC parity bits are added in the CRC operation, and d_{PAD} pad (Pad) bits are inserted in the pad insertion operation. Further, the second bit data is scrambled to obtain third bit data, where a quantity of bits of the third bit data is d_{scr} = q × r_{Frame} + d_{CP} scrambled bits, and d_{CP} = d_{CRC} + d_{PAD}.

In consideration of *k*₀ = 42, the quantity of bits of the scrambled third bit data is d_{CP} = 12 × *e*₂. A quantity of bits sent to each PCS processing and first interleaving is e₂/2 bits. e₂/2-17248 bits in a first bit set 0, a first bit set 1, a first bit set 2, and a first bit set 3 are respectively sent to PCS processing 0, PCS processing 1, PCS processing 2, and PCS processing 3, to obtain a second bit set 0, a second bit set 1, a second bit set 2, and a second bit set 3 each with a quantity of 57344 bits. A quantity of bits in each of a corresponding non-PCS processed third bit set 0, third bit set 1, third bit set 2, and third bit set 3 is 17248 bits. Next, a total of 57344+17248=74592 bits in the second bit set 0 and the third bit set 0 are sent to first interleaving 0, to obtain a fifth bit set 0 with a quantity of 74592 bits. Similarly, a total of 57344+17248=74592 bits in the second bit set 1 and the third bit set 1 are sent to first interleaving 1, to obtain a fifth bit set 1 with a quantity of 74592 bits. A total of 57344+17248=74592 bits in the second bit set 2 and the third bit set 2 are sent to first interleaving 2, to obtain a fifth bit set 2 with a quantity of 74592 bits. A total of 57344+17248=74592 bits in the second bit set 3 and the third bit set 3 are sent to first interleaving 3, to obtain a fifth bit set 3 with a quantity of 74592 bits.

The fifth bit set 0, the fifth bit set 1, the fifth bit set 2, and the fifth bit set 3 are respectively sent to FEC encoding 0, FEC encoding 1, FEC encoding 2, and FEC encoding 3, to obtain a sixth bit set 0, a sixth bit set 1, a sixth bit set 2, and a sixth bit set 3 each with a quantity of 86016 bits. For example, extended BCH (256,239) is used for FEC encoding. Quantities of FEC parity bits in the sixth bit set 0, the sixth bit set 1, the sixth bit set 2, and the sixth bit set 3 are all 544×21=11424 bits.

The sixth bit set 0, the sixth bit set 1, the sixth bit set 2, and the sixth bit set 3 are respectively sent to fourth interleaving 0, fourth interleaving 1, fourth interleaving 2, and fourth interleaving 3, to obtain a ninth bit set 0, a ninth bit set 1, a ninth bit set 2, and a ninth bit set 3 each with a quantity of 86016 bits. Next, the ninth bit set 0, the ninth bit set 1, the ninth bit set 2, and the ninth bit set 3 are respectively sent to fifth interleaving 0, fifth interleaving 1, fifth interleaving 2, and fifth interleaving 3, to obtain a seventh bit set 0, a seventh bit set 1, a seventh bit set 2, and a seventh bit set 3 each with a quantity of 86016 bits.

The seventh bit set 0, the seventh bit set 1, the seventh bit set 2, and the seventh bit set 3 are respectively sent to third interleaving 0, third interleaving 1, third interleaving 2, and third interleaving 3, to obtain a tenth bit set 0, a tenth bit set 1, a tenth bit set 2, and a tenth bit set 3 each with a quantity of 86016 bits. Next, a total of 86016+86016=172032 bits in the tenth bit set 0 and the tenth bit set 1 are sent to an interleaver buffer M in inter-block interleaving 0, to obtain an eighth bit set 0 through reading. Similarly, a total of 86016+86016=172032 bits in the tenth bit set 2 and the tenth bit set 3 are sent to an interleaver buffer M in inter-block interleaving 1, to obtain an eighth bit set 1 through reading.

It should be understood that a fourth bit stream 0 obtained by reading out bits in the interleaver buffer M in the inter-block interleaving 0 includes six eighth bit sets 0. Similarly, a fourth bit stream 1 obtained by reading out bits in the interleaver buffer M in the inter-block interleaving 1 includes six eighth bit sets 1. In this case, fourth bit data obtained by merging the fourth bit stream 0 and the fourth bit stream 1 includes a total of 2064384 bits.

In consideration of DP-64QAM, every 12 bits in the fourth bit data are mapped to one dual-polarization symbol, so that a total of 2064384/12=172032 dual-polarization symbols are obtained. DSP framing is performed on the foregoing 172032 dual-polarization symbols, to be specific, frame alignment words, training symbols, reserved symbols, and pilot symbols are inserted into X-polarization and Y-polarization symbols. A super-frame including 175104 dual-polarization symbols is obtained and then sent.

It should be noted that, as shown in FIG. 25, for the inter-block interleaving in the block interleaving in the second data sub-processing i (i = 0, 1, ... , L - 1), bits in each column are read from each set in a round-robin fashion at a granularity of 8 bits in the interleaver buffer M. In some other application scenarios, for the inter-block interleaving in the block interleaving in the second data sub-processing i, bits in each column are read from each set in a round-robin fashion at a granularity of 16 bits in the interleaver buffer M. The following uses a case in which bits in each column are read from each set in a round-robin fashion at a granularity of 16 bits in the interleaver buffer M for description.

FIG. 33 is a diagram of another embodiment of inter-block interleaving according to an embodiment of this application. As shown in FIG. 33, first 16 bits in a group are read from top to bottom in set 0, and then first 16 bits are read from top to bottom in each of set 1, set 2, and set 3. A total of 64 bits are read in a cycle. Then, in a next cycle, 16 bits in a next group are read from top to bottom in each of set 0, set 1, set 2, and set 3. A total of 64 bits are read. After a total of 21 cycles, 1344 bits in a current column are read out. Specific operations for reading bits in each column from each set are as follows:

First, 16 bits (bit rows 0 to 15 in square blocks) are sequentially read from top to bottom in the square blocks in row 0 in the interleaver buffer M,
16 bits (bit rows 0 to 15 in square blocks) are sequentially read from top to bottom in the square blocks in row 1 in the interleaver buffer M,
16 bits (bit rows 0 to 15 in square blocks) are sequentially read from top to bottom in the square blocks in row 42 in the interleaver buffer M,
16 bits (bit rows 0 to 15 in square blocks) are sequentially read from top to bottom in the square blocks in row 43 in the interleaver buffer M,
16 bits (bit rows 0 to 15 in square blocks) are sequentially read from top to bottom in the square blocks in row 2 in the interleaver buffer M,
16 bits (bit rows 0 to 15 in square blocks) are sequentially read from top to bottom in the square blocks in row 3 in the interleaver buffer M,
16 bits (bit rows 0 to 15 in square blocks) are sequentially read from top to bottom in the square blocks in row 44 in the interleaver buffer M,
16 bits (bit rows 0 to 15 in square blocks) are sequentially read from top to bottom in the square blocks in row 45 in the interleaver buffer M,
16 bits (bit rows 0 to 15 in square blocks) are sequentially read from top to bottom in the square blocks in row 4 in the interleaver buffer M, and
..., until a total of 1344 bits in a current bit column in the interleaver buffer M are completely read out.

Next, similarly, a total of 1344 bits in a next column of bits in the interleaver buffer M are completely read out based on the foregoing operations, until a total of 1344 bits in the last column of bits in the interleaver buffer M are completely read out. In this case, all 172032 bits in the interleaver buffer M are read out. The 172032 bits read out from the interleaver buffer M are used as an output, namely, an eighth bit set, of the third interleaving. It should be understood that the interleaver buffer M has a total of 128 bit columns.

It should be noted that, based on different implementations of inter-block interleaving in FIG. 25 and FIG. 33, specific implementations of the second data sub-processing i are also different. Based on the implementation of inter-block interleaving described in FIG. 33, the following describes specific bit patterns of the fifth bit set, the sixth bit set, the ninth bit set, the seventh bit set, and the tenth bit set by using an example in which the second data sub-processing i (i = 0,1, ..., L - 1, where L is an integer greater than 0) uses the first symbol mapping.

### (1) PCS processing and first interleaving:

Refer to the diagram of the bit blocks in 42 rows and 7 columns shown in FIG. 8, the following describes a pattern of bit block A_{*i*₁,*j*₁} (0 ≤ i₁ < 42 and 0 ≤ j₁ < 7) in the fifth bit set 2i in the first bit stream 2i.
(1) For 0 ≤ i₁ < 21 and i₁%3 = 0, or 21 ≤ i₁ < 42 and i₁%3 = 1, that is, i₁ = 0, 3, 6, 9,12, 15, 18, 22, 25, 28, 31, 34, 37, 40, and j₁ = 0,1,2,3, bit patterns of corresponding 56 bit blocks A_{*i*₁,*j*₁} all use a first bit pattern. In an example, when the first symbol mapping is used, the first bit pattern is shown in FIG. 11a. As shown in FIG. 11a, in a bit block with 16 rows and 16 columns, each row includes six bits filled with shadow backgrounds and 10 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(2) For 0 ≤ i₁ < 21 and i₁%3 = 1, or 21 ≤ i₁ < 42 and i₁%3 = 2, that is, i₁ = 1,4, 7, 10, 13, 16, 19, 23, 26, 29, 32, 35, 38, 41, and j₁ = 0,1,2,3, bit patterns of corresponding 56 bit blocks A_{*i*₁,*j*₁} all use a second bit pattern. In an example, when the first symbol mapping is used, the second bit pattern is shown in FIG. 11b. As shown in FIG. 11b, in a bit block with 16 rows and 16 columns, each row includes six bits filled with shadow backgrounds and 10 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(3) For 0 ≤ i₁ < 21 and i₁%3 = 2, or 21 ≤ i₁ < 42 and i₁%3 = 0, that is, i₁ = 2, 5, 8, 11, 14, 17, 20, 21, 24, 27, 30, 33, 36, 39, and j₁ = 0,1,2,3, bit patterns of corresponding 56 bit blocks A_{*i*₁,*j*₁} all use a third bit pattern. In an example, when the first symbol mapping is used, the third bit pattern is shown in FIG. 11c. As shown in FIG. 11c, in a bit block with 16 rows and 16 columns, each row includes four bits filled with shadow backgrounds and 12 bits filled with non-shadow (blank) backgrounds. The bits filled with the shadow backgrounds are from bits in the non-PCS processed third bit set, and the bits filled with the non-shadow (blank) backgrounds are from bits in the PCS processed second bit set.
(4) For 0 ≤ i₁ < 21 and i₁%3 = 0, or 21 ≤ i₁ < 42 and i₁%3 = 1, that is, i₁ = 0, 3, 6, 9, 12, 15, 18, 22, 25, 28, 31, 34, 37, 40, and j₁ = 4, bit patterns of corresponding 14 bit blocks A_{*i*₁*,j*₁} all use a fourth bit pattern.

In a specific implementation, when the first symbol mapping is used, the fourth bit pattern is shown in FIG. 12a, and includes 82 bits filled with shadow backgrounds and 174 bits filled with non-shadow (blank) backgrounds.

In another specific implementation, when the first symbol mapping is used, the fourth bit pattern is shown in FIG. 12d, and includes 78 bits filled with shadow backgrounds and 178 bits filled with non-shadow (blank) backgrounds.

In still another specific implementation, when the first symbol mapping is used, the fourth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fourth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fourth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.

(5) For 0 ≤ i₁ < 21 and i₁%3 = 1, or 21 ≤ i₁ < 42 and i₁%3 = 2, that is, i₁ = 1,4,7,10,13,16,19,23, 26, 29, 32, 35, 38, 41, and j₁ = 4, bit patterns of corresponding 14 bit blocks A_{*i*₁,*j*₁} all use a fifth bit pattern.

In a specific implementation, when the first symbol mapping is used, the fifth bit pattern is shown in FIG. 12b, and includes 78 bits filled with shadow backgrounds and 178 bits filled with non-shadow (blank) backgrounds.

In another specific implementation, when the first symbol mapping is used, the fifth bit pattern is shown in FIG. 12e, and includes 90 bits filled with shadow backgrounds and 166 bits filled with non-shadow (blank) backgrounds.

In still another specific implementation, when the first symbol mapping is used, the fifth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fifth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fifth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.

(6) For 0 ≤ i₁ < 21 and i₁%3 = 2, or 21 ≤ i₁ < 42 and i₁%3 = 0, that is, i₁ = 2,5,8,11,14,17,20,21,24,27,30,33,36,39, and j₁ = 4, bit patterns of corresponding 14 bit blocks *A*_{*i*₁,*j*₁} all use a sixth bit pattern.

In a specific implementation, the bit pattern of bit block *A*_{i₁,*j*₁} uses a sixth bit pattern. In an example, when the first symbol mapping is used, the sixth bit pattern is shown in FIG. 12c, and includes 48 bits filled with shadow backgrounds and 208 bits filled with non-shadow (blank) backgrounds.

In another specific implementation, when the first symbol mapping is used, the sixth bit pattern is shown in FIG. 12f, and includes 40 bits filled with shadow backgrounds and 216 bits filled with non-shadow (blank) backgrounds.

In still another specific implementation, when the first symbol mapping is used, the sixth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the sixth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the sixth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

The bits filled with the shadow backgrounds are from bits in the non-PCS processed third bit set, and the bits filled with the non-shadow (blank) backgrounds are from bits in the PCS processed second bit set.
(7) For 0 ≤ i₁ < 42 and j₁ = 5, bit patterns of corresponding 42 bit blocks *A*_{i₁,*j*₁} all use a seventh bit pattern. In an example, when the first symbol mapping is used, the seventh bit pattern is shown in FIG. 13, and includes 256 bits filled with non-shadow (blank) backgrounds. The bits filled with the non-shadow (blank) backgrounds are from bits in the PCS processed second bit set.
(8) For 0 ≤ i₁ < 42 and j₁ = 6, bit patterns of corresponding 42 bit blocks *A*_{i₁,*j*₁} all use an eighth bit pattern. In an example, when the first symbol mapping is used, the eighth bit pattern is shown in FIG. 14, and includes 240 bits filled with non-shadow (blank) backgrounds. The bits filled with the non-shadow (blank) backgrounds are from bits in the PCS processed second bit set.

It should be noted that when 0 ≤ i₁ < 42 and j₁ = 4, corresponding 42 bit blocks A_{*i*1,*j*₁} include bits in 7840 second bit sets and bits in 2912 third bit sets in total. Further, for every three consecutive rows of bit blocks in the 42 bit blocks A_{*i*₁,4}, that is, when 0 ≤ i₃ < 14 and j₁ = 4, 768 bits in corresponding three bit blocks *A*_{3*i*₃,*j*₁}, A_{3*i*₃+1,*j*1}, A_{3*i*₃+2,*j*₁} include 560 bits from the second bit set and 208 bits from the third bit set. In a specific implementation, when the first symbol mapping is used, the fourth bit pattern is shown in FIG. 12a, the fifth bit pattern is shown in FIG. 12b, and the sixth bit pattern is shown in FIG. 12c. In another specific implementation, when the first symbol mapping is used, the fourth bit pattern is shown in FIG. 12d, the fifth bit pattern is shown in FIG. 12e, and the sixth bit pattern is shown in FIG. 12f.

Refer to the diagram of the bit blocks in 42 rows and 7 columns shown in FIG. 8, the following describes a pattern of bit block A_{*i*₁,*j*₁} (0 ≤ i₁ < 42 and 0 ≤ j₁ < 7) in the fifth bit set 2i+1 in the first bit stream 2i+1.
(1) For 0 ≤ i₁ < 21 and i₁%3 = 0, or 21 ≤ i₁ < 42 and i₁%3 = 1, that is, i₁ = 0,3,6,9,12,15,18,22,25,28,31,34,37,40, and j₁ = 0,1,2,3, bit patterns of corresponding 56 bit blocks A_{*i*₁,*j*₁} all use the second bit pattern. In an example, when the first symbol mapping is used, the second bit pattern is shown in FIG. 11b.
(2) For 0 ≤ i₁ < 21 and i₁%3 = 1, or 21 ≤ i₁ < 42 and i₁%3 = 2, that is, i₁ = 1,4,7,10,13,16,19,21,24,27,30,33,36,39, and j₁ = 0,1,2,3, bit patterns of corresponding 56 bit blocks A_{*i*₁,*j*₁} all use the third bit pattern. In an example, when the first symbol mapping is used, the third bit pattern is shown in FIG. 11c.
(3) For 0 ≤ i₁ < 21 and i₁%3 = 2, or 21 ≤ i₁ < 42 and i₁%3 = 0, that is, i₁ = 2,5,8,11,14,17,20,21,24,27,30,33,36,39, and j₁ = 0,1,2,3, bit patterns of corresponding 56 bit blocks A_{*i*₁,*j*₁} all use the first bit pattern. In an example is used, the first bit pattern is shown in FIG. 11a.
(4) For 0 ≤ i₁ < 21 and i₁%3 = 0, or 21 ≤ i₁ < 42 and i₁%3 = 1, that is, i₁ = 0,3,6,9, 12, 15, 18, 22,25,28,31,34,37,40, and j₁ = 4, bit patterns of corresponding 14 bit blocks A_{*i*₁,*j*₁} all use the fifth bit pattern.

In a specific implementation, the bit pattern of bit block A_{*i*₁,*j*₁} uses the fifth bit pattern. In an example, when the first symbol mapping is used, the fifth bit pattern is shown in FIG. 12b.

In another specific implementation, when the first symbol mapping is used, the fifth bit pattern is shown in FIG. 12e.

In still another specific implementation, when the first symbol mapping is used, the fifth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fifth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fifth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

(5) For 0 ≤ i₁ < 21 and i₁%3 = 1, or 21 ≤ i₁ < 42 and i₁%3 = 2, that is, i₁ = 1,4,7,10,13,16,19,23,26,29,32,35,38,41, and j₁ = 4, bit patterns of corresponding 14 bit blocks A_{*i*₁,*j*₁} all use the sixth bit pattern.

In a specific implementation, the bit pattern of bit block A_{*i*₁,*j*₁} uses the sixth bit pattern. In an example, when the first symbol mapping is used, the sixth bit pattern is shown in FIG. 12c.

In another specific implementation, when the first symbol mapping is used, the sixth bit pattern is shown in FIG. 12f.

In still another specific implementation, when the first symbol mapping is used, the sixth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the sixth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the sixth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.

(6) For 0 ≤ i₁ < 21 and i₁%3 = 2, or 21 ≤ i₁ < 42 and i₁%3 = 0, that is, i₁ = 2,5,8,11,14,17,20,21,24,27,30,33,36,39, and j₁ = 4, bit patterns of corresponding 14 bit blocks A_{*i*₁,*j*₁} all use the fourth bit pattern.

In a specific implementation, the bit pattern of bit block A_{*i*₁,*j*₁} uses the fourth bit pattern. In an example, when the first symbol mapping is used, the fourth bit pattern is shown in FIG. 12a.

In another specific implementation, when the first symbol mapping is used, the fourth bit pattern is shown in FIG. 12d.

In still another specific implementation, when the first symbol mapping is used, the fourth bit pattern is described as follows: In a bit block, 5 × 16 = 80 bits in first five bit columns are bits filled with shadow backgrounds, and 11 × 16 = 176 bits in last 11 bit columns are bits filled with non-shadow (blank) backgrounds. In another example, when the first symbol mapping is used, the fifth bit pattern is described as follows: In a bit block, 4 × 16 = 64 bits in first four bit columns are bits filled with shadow backgrounds, and 12 × 16 = 192 bits in last 12 bit columns are bits filled with non-shadow (blank) backgrounds. In still another example, when the first symbol mapping is used, the fifth bit pattern is described as follows: In a bit block, 3 × 16 = 48 bits in first three bit columns are bits filled with shadow backgrounds, and 13 × 16 = 208 bits in last 13 bit columns are bits filled with non-shadow (blank) backgrounds.
(7) For 0 ≤ i₁ < 42 and j₁ = 5, bit patterns of corresponding 42 bit blocks A_{*i*₁,*j*₁} all use the seventh bit pattern. In an example, when the first symbol mapping is used, the seventh bit pattern is shown in FIG. 13.
(8) For 0 ≤ i₁ < 42 and j₁ = 6, bit patterns of corresponding 42 bit blocks A_{*i*₁,*j*₁} all use the eighth bit pattern. In an example, when the first symbol mapping is used, the eighth bit pattern is shown in FIG. 14.

It should be noted that when 0 ≤ i₁ < 42 and j₁ = 4, corresponding 42 bit blocks A_{*i*₁,*j*₁} include bits in 7840 second bit sets and bits in 2912 third bit sets in total. Further, for every three consecutive rows of bit blocks in the 42 bit blocks A_{i₁,4}, that is, when 0 ≤ i₃ < 14 and j₁ = 4, 768 bits in corresponding three bit blocks A_{3*i*₃,*j*₁}, A_{3*i*₃+1,j₁}, A_{3*i*₃+2,*j*₁} include 560 bits from the second bit set and 208 bits from the third bit set. In a specific implementation, when the first symbol mapping is used, the fourth bit pattern is shown in FIG. 12b, the fifth bit pattern is shown in FIG. 12c, and the sixth bit pattern is shown in FIG. 12a. In another specific implementation, when the first symbol mapping is used, the fourth bit pattern is shown in FIG. 12e, the fifth bit pattern is shown in FIG. 12f, and the sixth bit pattern is shown in FIG. 12d.

It should be noted that, in this application, bit blocks (or square blocks) in different figures are marked by using same shadow backgrounds. This does not mean that patterns of these bit blocks are completely the same, and is merely a graphical representation method. It should be noted that the bits in the PCS processed second bit set are used as amplitude bits (Amplitude bits) in symbol mapping (also referred to as modulation), and the bits in the non-PCS processed third bit set are used as sign bits (Sign bits) in symbol mapping (also referred to as modulation). In FIG. 11a, FIG. 11b, FIG. 11c, FIG. 12a, FIG. 12b, FIG. 12c, FIG. 13, and FIG. 14, the bits in the shadow backgrounds are from the bits in the non-PCS processed third bit set, which are sign bits, and the remaining bits in the non-shadow (blank) backgrounds are from the bits in the PCS processed second bit set, which are amplitude bits.

It should be noted that the distribution of the bit blocks in the fifth bit set 2i and the fifth bit set 2i+1 is shown in FIG. 8, but patterns of specific bit blocks A_{*i*₁,*j*₁} included in the fifth bit set 2i and the fifth bit set 2i+1 are not completely the same. More specifically, distribution patterns of bit blocks A_{*i*₁,*j*₁} (0 ≤ i₁ < 42 and 0 ≤ j₁ < 5) are different, to be specific, distribution positions of amplitude bits and sign bits in the bit blocks are different. It should be understood that the first bit stream 2i obtained through the "PCS processing and first interleaving" may include a plurality of fifth bit sets 2i, and the first bit stream 2i+1 may include a plurality of fifth bit sets 2i+1.

### (2) FEC encoding:

As shown in FIG. 17, the bits in the sixth bit set are distributed as a total of 336 bit blocks B_{*i*₂*,j*₂} (0 ≤ i₂ < 42 and 0 ≤ j₂ < 8) in 42 rows and 8 columns. Bits in leftmost five bit blocks (namely, columns 0 to 4) in the sixth bit set, namely, bit blocks B_{*i*₂,*j*₂} (0 ≤ i₂ < 42 and 0 ≤ j₂ < 5) filled with shadow backgrounds shown in FIG. 17, are from some bits in the PCS processed second bit set and the bits in the non-PCS processed third bit set. Leftmost 15 bit columns in bit block *B*_{i₂,5} (0 ≤ i₂ < 42) in column 5 and bit block B_{i₂,6} (0 ≤ i₂ < 42) in column 6 in the sixth bit set, bits in a total of 16+15=31 bit columns, are from remaining bits in the PCS processed second bit set (that is, no bits from the third bit set are included). The rightmost bit column in bit block B_{*i*₂,6} (0 ≤ i₂ < 42) in column 6 and bit block B_{*i*₂,7} (0 ≤ i₂ < 42) in column 7 in the sixth bit set, bits in a total of 1+16=17 bit columns, are from the parity bits obtained through the FEC encoding.

It should be noted that specific bit patterns (bit patterns) in a sixth bit set 2i in the second bit stream 2i and a sixth bit set 2i+1 in the second bit stream 2i+1 may be understood with reference to FIG. 17. However, specific bit patterns of bit blocks (square blocks) are not completely the same, that is, specific bit patterns of B_{*i*₂,*j*₂} (0 ≤ i₂ < 42 and 0 ≤ j₂ < 8) in the sixth bit set 2i and *B*_{i₂,*j*₂} (0 ≤ i₂ < 42 and 0 ≤ j₂ < 8) in the sixth bit set 2i+1 are not completely the same. The following separately describes patterns of bit blocks (square blocks) in the sixth bit set 2i and the sixth bit set 2i+1.

For 0 ≤ i₂ < 42 and 0 ≤ j₂ < 6, a bit pattern of bit block (square block) B_{*i*₂,*j*₂} in the sixth bit set 2i is the same as that of bit block (square block) A_{*i*₁,*j*₁} in the corresponding fifth bit set 2i before the encoding, and a bit pattern of bit block (square block) B_{*i*₂,*j*₂} in the sixth bit set 2i+1 is the same as that of bit block (square block) A_{*i*₁,*j*₁} in the corresponding fifth bit set 2i+1 before the encoding.

For 0 ≤ i₂ < 42 and j₂ = 6, a bit pattern of bit block (square block) B_{*i*₂,6} in the sixth bit set 2i and the sixth bit set 2i+1 uses a ninth bit pattern. In an example, when the first symbol mapping is used, the ninth bit pattern is shown in FIG. 18a, and includes 240 bits filled with non-shadow (blank) backgrounds and 16 bits filled with shadow backgrounds. The bits filled with the non-shadow (blank) backgrounds are from the bits in the PCS processed second bit set, and the bits filled with the shadow backgrounds are from the parity bits of the FEC encoding.

For 0 ≤ i₂ < 42 and j₂ = 7, a bit pattern of bit block (square block) B_{*i*₂,7} in the sixth bit set 2i and the sixth bit set 2i+1 uses a tenth bit pattern. In an example, when the first symbol mapping is used, the tenth bit pattern is shown in FIG. 18b, and includes 256 bits filled with shadow backgrounds. The bits filled with the shadow background are from the parity bits of the FEC encoding.

In some specific applications, one sixth bit set 2i in the second bit stream 2i is obtained by directly adding parity bits to one fifth bit set 2i before the encoding, and one sixth bit set 2i+1 in the second bit stream 2i+1 is obtained by directly adding parity bits to one fifth bit set 2i+1 before the encoding. More specifically, bit data in bit columns 0 to 111 in the sixth bit set 2i in the second bit stream 2i is equal to bit data in bit columns 0 to 111 in the fifth bit set 2i before the encoding, and bit data in bit columns 0 to 111 in the sixth bit set 2i+1 in the second bit stream 2i+1 is equal to bit data in bit columns 0 to 111 in the fifth bit set 2i+1 before the encoding.

It should be noted that the bits in the PCS processed second bit set are used as amplitude bits (Amplitude bits) in symbol mapping (also referred to as modulation), and the bits in the non-PCS processed third bit set and the parity bits obtained through the FEC encoding are used as sign bits (Sign bits) in symbol mapping (also referred to as modulation). For the sixth bit set 2i and the sixth bit set 2i+1 shown in FIG. 17, when the square block in the sixth bit set 2i and the sixth bit set 2i+1 use the bit pattern shown in FIG. 11a, FIG. 11b, FIG. 11c, or FIG. 13, bits in shadow backgrounds in the bit pattern are from the bits in the non-PCS processed third bit set, which are sign bits; and bits in non-shadow backgrounds are from the bits in the PCS processed second bit set, which are amplitude bits. When the square block uses the bit pattern in FIG. 18a or FIG. 18b, bits in shadow backgrounds in the bit pattern are from the parity bits of the FEC encoding, which are sign bits; and bits in non-shadow (blank) backgrounds are from the bits in the PCS processed second bit set, which are amplitude bits.

It should be noted that the distribution of the bit blocks (square blocks) in the sixth bit set 2i and the sixth bit set 2i+1 is shown in FIG. 17, but patterns of specific bit blocks B_{*i*₂,*j*₂} included in the sixth bit set 2i and the sixth bit set 2i+1 are not completely the same. More specifically, distribution patterns of bit blocks B_{*i*₂,*j*₂} (0 ≤ i₁ < 42 and 0 ≤ j₁ < 5) are different, to be specific, distribution positions of amplitude bits and sign bits in the bit blocks are different. It should be understood that the second bit stream 2i obtained through the "FEC encoding" may include a plurality of sixth bit sets 2i, and the second bit stream 2i+1 may include a plurality of sixth bit sets 2i+1.

### (3) Second interleaving:

As shown in FIG. 19, bits in the ninth bit set obtained through the fourth interleaving are distributed as a total of 336 bit blocks *C*_{*i*₃,*j*₃} (0 ≤ i₃ < 42 and 0 ≤ j₃ < 8) in 42 rows and 8 columns. It should be noted that, in the foregoing total of 336 bit blocks C in 42 rows and 8 columns, sizes of all the bit blocks *C*_{*i*₃,*j*₃} (0 ≤ i₃ < 42 and 0 ≤ j₃ < 8) are 16 rows and 16 columns of bits (that is, 16 × 16 = 256 bits).

The following separately describes patterns of bit blocks in the ninth bit set 2i and the ninth bit set 2i+1.

Refer to the diagram of the bit blocks in 42 rows and 8 columns shown in FIG. 19, the following describes the pattern of bit block *C*_{*i*₃,*j*₃} (0 ≤ i₃ < 42 and 0 ≤ j₃ < 8) in the ninth bit set 2i in the fifth bit stream 2i.
(1) For 0 ≤ i₃ < 21 and i₃%3 = 0, or 21 ≤ i₃ < 42 and i₃%3 = 1, that is, i₃ = 0,3,6,9, 12, 15, 18, 22,25,28,31,34,37,40, and 0 ≤ j₃ < 8, bit patterns of corresponding 112 bit blocks C_{*i*₃,*j*₃} all use the first bit pattern. In an example, when the first symbol mapping is used, the first bit pattern is shown in FIG. 11a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₃ < 21 and i₃%3 = 1, or 21 ≤ i₃ < 42 and i₃%3 = 2, that is, i₃ = 1,4,7,10,13,16,19,23,26,29,32,35,38,41, and 0 ≤ j₃ < 8, bit patterns of corresponding 112 bit blocks C_{*i*3,*j*3} all use the second bit pattern. In an example, when the first symbol mapping is used, the second bit pattern is shown in FIG. 11b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₃ < 21 and i₃%3 = 2, or 21 ≤ i₃ < 42 and i₃%3 = 0, that is, i₃ = 2,5,8,11,14,17,20,21,24,27,30,33,36,39, and 0 ≤ j₃ < 8, bit patterns of corresponding 112 bit blocks C_{*i*₃,*j*₃} all use the third bit pattern. In an example, when the first symbol mapping is used, the third bit pattern is shown in FIG. 11c. Bits filled with shadow backgrounds are from the bits in the non-PCS processed third bit set and/or the parity bits of the FEC encoding, and bits filled with non-shadow (blank) backgrounds are from the bits in the PCS processed second bit set.

Refer to the diagram of the bit blocks in 42 rows and 8 columns shown in FIG. 19, the following describes the pattern of bit block C_{*i*₃,*j*₃} (0 ≤ i₃ < 42 and 0 ≤ j₃ < 8) in the ninth bit set 2i+1 in the fifth bit stream 2i+1.
(1) For 0 ≤ i₃ < 21 and i₃%3 = 0, or 21 ≤ i₃ < 42 and i₃%3 = 1, that is, i₃ = 0,3,6,9, 12, 15, 18, 22,25,28,31,34,37,40, and 0 ≤ j₃ < 8, bit patterns of corresponding 112 bit blocks C_{*i*₃,*j*₃} all use the second bit pattern. In an example, when the first symbol mapping is used, the second bit pattern is shown in FIG. 11b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₃ < 21 and i₃%3 = 1, or 21 ≤ i₃ < 42 and i₃%3 = 2, that is, i₃ = 1,4,7,10,13,16,19,23,26,29,32,35,38,41, and 0 ≤ j₃ < 8, bit patterns of corresponding 112 bit blocks C_{*i*₃,*j*₃} all use the third bit pattern. In an example, when the first symbol mapping is used, the third bit pattern is shown in FIG. 11c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₃ < 21 and i₃%3 = 2, or 21 ≤ i₃ < 42 and i₃%3 = 0, that is, i₃ = 2,5,8,11,14,17,20,21,24,27,30,33,36,39, and 0 ≤ j₃ < 8, bit patterns of corresponding 112 bit blocks C_{*i*₃,*j*₃} all use the first bit pattern. In an example, when the first symbol mapping is used, the first bit pattern is shown in FIG. 11a. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that the distribution of the bit blocks (square blocks) in the ninth bit set 2i and the ninth bit set 2i+1 is shown in FIG. 19, but patterns of specific bit blocks j₃ included in the ninth bit set 2i and the ninth bit set 2i+1 are not completely the same. More specifically, distribution patterns of bit blocks C_{*i*₃,*j*₃} are different, to be specific, distribution positions of amplitude bits and sign bits in the bit blocks are different. It should be understood that the fifth bit stream 2i obtained through the fourth interleaving may include a plurality of ninth bit sets 2i, and the fifth bit stream 2i+1 may include a plurality of ninth bit sets 2i+1.

As shown in FIG. 20, bits in the seventh bit set are distributed as a total of 336 bit blocks D_{*i*₄,*j*₄} (0 ≤ i₄ < 42 and 0 ≤ j₄ < 8) in 42 rows and 8 columns. Sizes of all the bit blocks D_{*i*₄,*j*₄} (0 ≤ i₄ < 42 and 0 ≤ j₄ < 8) are 16 rows and 16 columns of bits (that is, 16 × 16 = 256 bits).

The following separately describes patterns of bit blocks in the seventh bit set 2i and the seventh bit set 2i+1.

Refer to the diagram of the bit blocks in 42 rows and 8 columns shown in FIG. 20, the following describes the pattern of bit block D_{*i*₄,*j*₄} (0 ≤ i₄ < 42 and 0 ≤ j₄ < 8) in the seventh bit set 2i in the third bit stream 2i.
(1) For 0 ≤ i₄ < 21 and i₄%3 = 0, or 21 ≤ i₄ < 42 and i₄%3 = 1, that is, i₄ = 0,3,6,9, 12, 15, 18, 22,25,28,31,34,37,40, and 0 ≤ j₄ < 8, bit patterns of corresponding 112 bit blocks D_{*i*₄,*j*₄} all use an eleventh bit pattern. In an example, when the first symbol mapping is used, the eleventh bit pattern is shown in FIG. 22a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₄ < 21 and i₄%3 = 1, or 21 ≤ i₄ < 42 and i₄%3 = 2, that is, i₄ = 1,4,7,10,13,16,19,23,26,29,32,35,38,41, and 0 ≤ j₄ < 8, bit patterns of corresponding 112 bit blocks D_{*i*₄,*j*₄} all use a twelfth bit pattern. In an example, when the first symbol mapping is used, the twelfth bit pattern is shown in FIG. 22b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₄ < 21 and i₄%3 = 2, or 21 ≤ i₄ < 42 and i₄%3 = 0, that is, i₄ = 2,5,8,11,14,17,20,21,24,27,30,33,36,39, and 0 ≤ j₄ < 8, bit patterns of corresponding 112 bit blocks D_{*i*₄,*j*₄} all use a thirteenth bit pattern. In an example, when the first symbol mapping is used, the thirteenth bit pattern is shown in FIG. 22c. Bits filled with shadow backgrounds are from the bits in the non-PCS processed third bit set and/or the parity bits of the FEC encoding, and bits filled with non-shadow (blank) backgrounds are from the bits in the PCS processed second bit set.

Refer to the diagram of the bit blocks in 42 rows and 8 columns shown in FIG. 20, the following describes the pattern of bit block D_{*i*₄,*j*₄} (0 ≤ i₄ < 42 and 0 ≤ j₄ < 8) in a seventh bit set 2i+1 in the third bit stream 2i+1.
(1) For 0 ≤ i₄ < 21 and i₄%3 = 0, or 21 ≤ i₄ < 42 and i₄%3 = 1, that is, i₄ = 0,3,6,9, 12, 15, 18, 22,25,28,31,34,37,40, and 0 ≤ j₄ < 8, bit patterns of corresponding 112 bit blocks D_{*i*₄,*j*₄} all use the twelfth bit pattern. In an example, when the first symbol mapping is used, the twelfth bit pattern is shown in FIG. 22b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₄ < 21 and i₄%3 = 1, or 21 ≤ i₄ < 42 and i₄%3 = 2, that is, i₄ = 1,4,7,10,13,16,19,23,26,29,32,35,38,41, and 0 ≤ j₄ < 8, bit patterns of corresponding 112 bit blocks D_{*i*₄,*j*₄} all use the thirteenth bit pattern. In an example, when the first symbol mapping is used, the thirteenth bit pattern is shown in FIG. 22c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₄ < 21 and i₄%3 = 2, or 21 ≤ i₄ < 42 and i₄%3 = 0, that is, i₄ = 2,5,8,11,14,17,20,21,24,27,30,33,36,39, and 0 ≤ j₄ < 8, bit patterns of corresponding 112 bit blocks D_{*i*₄,*j*₄} all use the eleventh bit pattern. In an example, when the first symbol mapping is used, the eleventh bit pattern is shown in FIG. 22a. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that the distribution of the bit blocks (square blocks) in the seventh bit set 2i and the seventh bit set 2i+1 is shown in FIG. 20, but patterns of specific bit blocks D_{*i*₄,*j*₄} included in the seventh bit set 2i and the seventh bit set 2i+1 are not completely the same. More specifically, distribution patterns of bit blocks D_{*i*₄,*j*₄} are different, to be specific, distribution positions of amplitude bits and sign bits in the bit blocks are different. It should be understood that the third bit stream 2i obtained through the "fifth interleaving" may include a plurality of seventh bit sets 2i, and the third bit stream 2i+1 may include a plurality of seventh bit sets 2i+1.

### (4) Third interleaving:

Bits in the tenth bit set obtained through the intra-block interleaving are distributed as a total of 336 bit blocks E_{*i*₅,*j*₅} (0 ≤ i₅ < 42 and 0 ≤ j₅ < 8) in 42 rows and 8 columns.

The following separately describes patterns of bit blocks in a tenth bit set 2i and a tenth bit set 2i+1.

The following describes the pattern of bit block E_{*i*₅,*j*₅} (0 ≤ i₅ < 42 and 0 ≤ j₅ < 8) in the tenth bit set 2i.
(1) For 0 ≤ i₅ < 21 and i₅%3 = 0, or 21 ≤ i₅ < 42 and i₅%3 = 1, that is, i₅ = 0,3,6,9, 12, 15, 18, 22,25,28,31,34,37,40, and 0 ≤ j₅ < 8, bit patterns of corresponding 112 bit blocks D_{*i*₅,*j*₅} all use a fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₅ < 21 and i₅%3 = 1, or 21 ≤ i₅ < 42 and i₅%3 = 2, that is, i₅ = 1,4,7,10,13,16,19,23,26,29,32,35,38,41, and 0 ≤ j₅ < 8, bit patterns of corresponding 112 bit blocks E_{*i*₅,*j*₅} all use a fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₅ < 21 and i₅%3 = 2, or 21 ≤ i₅ < 42 and i₅%3 = 0, that is, i₅ = 2,5,8,11,14,17,20,21,24,27,30,33,36,39, and 0 ≤ i₅ < 8, bit patterns of corresponding 112 bit blocks E_{*i*₅,*j*₅} all use a sixteenth bit pattern. In an example, when the first symbol mapping is used, the sixteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.

The following describes the pattern of bit block E_{*i*₅,*j*₅} (0 ≤ i₅ < 42 and 0 ≤ j₅ < 8) in the tenth bit set 2i+1.
(1) For 0 ≤ i₅ < 21 and i₅%3 = 0, or 21 ≤ i₅ < 42 and i₅%3 = 1, that is, i₅ = 0,3,6,9, 12, 15, 18, 22,25,28,31,34,37,40, and 0 ≤ i₅ < 8, bit patterns of corresponding 112 bit blocks E_{*i*₅,*j*₅} all use the fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₅ < 21 and i₅%3 = 1, or 21 ≤ i₅ < 42 and i₅%3 = 2, that is, i₅ = 1,4,7,10,13,16,19,23,26,29,32,35,38,41, and 0 ≤ j₅ < 8, bit patterns of corresponding 112 bit blocks E_{*i*₅,*j*₅} all use the sixteenth bit pattern. In an example, when the first symbol mapping is used, the sixteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₅ < 21 and i₅%3 = 2, or 21 ≤ i₅ < 42 and i₅%3 = 0, that is, i₅ = 2,5,8,11,14,17,20, 21,24,27,30,33,36,39, and 0 ≤ i₅ < 8, bit patterns of corresponding 112 bit blocks E_{*i*₅,*j*₅} all use the fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.

It should be noted that, distribution patterns of bit blocks (square blocks) E_{*i*₅,*j*₅} in the tenth bit set 2i and the tenth bit set 2i+1 are different, to be specific, distribution positions of amplitude bits and sign bits in the bit blocks are different.

Refer to a diagram of bit blocks M_{*i*₆,*j*₆} (0 ≤ i₆ < 84 and 0 ≤ j₆ < 8) in 84 rows and 8 columns in an interleaver buffer M shown in FIG. 26. The following describes a pattern of bit block M_{*i*₆,*j*₆}.
(1) For 0 ≤ i₆ < 42 and i₆%6 = 0 or i₆%6 = 5, or 42 ≤ i₆ < 84 and i₆%6 = 1 or i₆%6 = 2 , that is, i₆ = 0,5,6,11,12,17,18,23,24,29,30,35,36,41,43,44,49,50,55,56,61,62,67,68,73,74,79,80, and 0 ≤ j₅ < 8, bit patterns of corresponding 224 bit blocks M_{*i*₆,*j*₆} all use the fourteenth bit pattern. In an example, when the first symbol mapping is used, the fourteenth bit pattern is shown in FIG. 24a. Bits filled with shadow backgrounds are from the bits in the non-PCS processed third bit set and/or the parity bits of the FEC encoding, and bits filled with non-shadow (blank) backgrounds are from the bits in the PCS processed second bit set.
(2) For 0 ≤ i₆ < 42 and i₆%6 = 1 or i₆%6 = 2, or 42 ≤ i₆ < 84 and i₆%6 = 3 or i₆%6 = 4 , that is, i₆ = 1,2,7,8,13,14,19,20,25,26,31,32,37,38,45,46,51,52,57,58,63,64,69,70,75,76,81,82 , and 0 ≤ j₅ < 8, bit patterns of corresponding 224 bit blocks M_{*i*₆,*j*₆} all use the fifteenth bit pattern. In an example, when the first symbol mapping is used, the fifteenth bit pattern is shown in FIG. 24b. Bits filled with shadow backgrounds are from the bits in the non-PCS processed third bit set and/or the parity bits of the FEC encoding, and bits filled with non-shadow (blank) backgrounds are from the bits in the PCS processed second bit set.
(3) For 0 ≤ i₆ < 42 and i₆%6 = 3 or i₆%6 = 4, or 42 ≤ i₆ < 84 and i₆%6 = 0 or i₆%6 = 5 , that is, i₆ = 3,4,9,10,15,16,21,22,27,28,33,34,39,40,42,47,48,53,54,59,60,65,66,71,72,77,78,83, and 0 ≤ j₅ < 8, bit patterns of corresponding 224 bit blocks M_{*i*₆,*j*₆} all use the sixteenth bit pattern. In an example, when the first symbol mapping is used, the sixteenth bit pattern is shown in FIG. 24c. Bits filled with shadow backgrounds are from the bits in the non-PCS processed third bit set and/or the parity bits of the FEC encoding, and bits filled with non-shadow (blank) backgrounds are from the bits in the PCS processed second bit set.

The following provides several specific embodiments with reference to the foregoing descriptions of the second data processing.

### Embodiment 6:

FIG. 34 is a diagram of yet another application scenario of second data processing according to an embodiment of this application. As shown in FIG. 34, it is considered that second bit data processing L=4, and PCS processing and first interleaving specifically use the manner shown in FIG. 6c. In some application scenarios, the PCS processing, the first interleaving, and fourth interleaving may be collectively referred to as a probabilistic constellation shaper (Probabilistic Constellation Shaper), as shown in a grid shadow region in FIG. 34. In some application scenarios, an input processing granularity of FEC encoding is K=3552 bits, a corresponding output granularity is N=4096 bits, extended BCH (256,239) with an encoding overhead of 15.3% is used, and the FEC encoding and fifth interleaving may be collectively referred to as OFEC encoding, as shown in an area shaded with oblique lines in FIG. 34.

It is considered that each row of one data frame includes q = 10280 bits. In first data processing, r_{Frame} rows of data is obtained from the data frame to obtain a total of dᵢₙ = q × r_{Frame} bits. Then, CRC and/or pad bit insertion are/is performed on first bit data, to obtain second bit data. d_{CRC} CRC parity bits are added in the CRC operation, and d_{PAD} pad (Pad) bits are inserted in the pad insertion operation. Further, the second bit data is scrambled to obtain third bit data, where a quantity of bits of the third bit data is d_{scr} = q × r_{Frame} + d_{CP} scrambled bits, and d_{CP} = d_{CRC} + d_{PAD}.

In consideration of *k*₀ = 42, the quantity of bits of the scrambled third bit data is d_{CP} = 12 × *e*₂. A quantity of bits sent to each PCS processing and first interleaving is e₂/2 bits. e₂/2-17248 bits in a first bit set 0, a first bit set 1, a first bit set 2, a first bit set 3, a first bit set 4, a first bit set 5, a first bit set 6, and a first bit set 7 are respectively sent to PCS processing 0, PCS processing 1, PCS processing 2, PCS processing 3, PCS processing 4, PCS processing 5, PCS processing 6, and PCS processing 7, to obtain a second bit set 0, a second bit set 1, a second bit set 2, a second bit set 3, a second bit set 4, a second bit set 5, a second bit set 6, and a second bit set 7 each with a quantity of 57344 bits.

A quantity of bits in each of a corresponding non-PCS processed third bit 0, third bit set 1, third bit set 2, third bit set 3, third bit 4, third bit set 5, third bit set 6, and third bit set 7 is 17248 bits. Next, a total of 57344+17248=74592 bits in the second bit set 0 and the third bit set 0 are sent to first interleaving 0, to obtain a fifth bit set 0 with a quantity of 74592 bits. Similarly, a total of 57344+17248=74592 bits in the second bit set 1 and the third bit set 1 are sent to first interleaving 1, to obtain a fifth bit set 1 with a quantity of 74592 bits. A total of 57344+17248=74592 bits in the second bit set 2 and the third bit set 2 are sent to first interleaving 2, to obtain a fifth bit set 2 with a quantity of 74592 bits. A total of 57344+17248=74592 bits in the second bit set 3 and the third bit set 3 are sent to first interleaving 3, to obtain a fifth bit set 3 with a quantity of 74592 bits. A total of 57344+17248=74592 bits in the second bit set 4 and the third bit set 4 are sent to first interleaving 4, to obtain a fifth bit set 4 with a quantity of 74592 bits. A total of 57344+17248=74592 bits in the second bit set 5 and the third bit set 5 are sent to first interleaving 5, to obtain a fifth bit set 5 with a quantity of 74592 bits. A total of 57344+17248=74592 bits in the second bit set 6 and the third bit set 6 are sent to first interleaving 6, to obtain a fifth bit set 6 with a quantity of 74592 bits. A total of 57344+17248=74592 bits in the second bit set 7 and the third bit set 7 are sent to first interleaving 7, to obtain a fifth bit set 7 with a quantity of 74592 bits.

The fifth bit set 0, the fifth bit set 1, the fifth bit set 2, the fifth bit set 3, the fifth bit set 4, the fifth bit set 5, the fifth bit set 6, and the fifth bit set 7 are respectively sent to FEC encoding 0, FEC encoding 1, FEC encoding 2, FEC encoding 3, FEC encoding 4, FEC encoding 5, FEC encoding 6, and FEC encoding 7, to obtain a sixth bit set 0, a sixth bit set 1, a sixth bit set 2, a sixth bit set 3, a sixth bit set 4, a sixth bit set 5, a sixth bit set 6, and a sixth bit set 7 each with a quantity of 86016 bits. For example, extended BCH (256,239) is used for FEC encoding. Quantities of FEC parity bits in the sixth bit set 0, the sixth bit set 1, the sixth bit set 2, the sixth bit set 3, the sixth bit set 4, the sixth bit set 5, the sixth bit set 6, and the sixth bit set 7 are all 544×21=11424 bits.

The sixth bit set 0, the sixth bit set 1, the sixth bit set 2, the sixth bit set 3, the sixth bit set 4, the sixth bit set 5, the sixth bit set 6, and the sixth bit set 7 are respectively sent to fourth interleaving 0, fourth interleaving 1, fourth interleaving 2, fourth interleaving 3, fourth interleaving 4, fourth interleaving 5, fourth interleaving 6, and fourth interleaving 7, to obtain a ninth bit set 0, a ninth bit set 1, a ninth bit set 2, a ninth bit set 3, and a ninth bit set 4, a ninth bit set 5, a ninth bit set 6, and a ninth bit set 7 each with a quantity of 86016 bits. Next, the ninth bit set 0, the ninth bit set 1, the ninth bit set 2, the ninth bit set 3, the ninth bit set 4, the ninth bit set 5, the ninth bit set 6, and the ninth bit set 7 are respectively sent to fifth interleaving 0, fifth interleaving 1, fifth interleaving 2, fifth interleaving 3, fifth interleaving 4, fifth interleaving 5, fifth interleaving 6, and fifth interleaving 7, to obtain a seventh bit set 0, a seventh bit set 1, a seventh bit set 2, a seventh bit set 3, a seventh bit set 4, a seventh bit set 5, a seventh bit set 6, and a seventh bit set 7 each with a quantity of 86016 bits.

The seventh bit set 0, the seventh bit set 1, the seventh bit set 2, the seventh bit set 3, the seventh bit set 4, the seventh bit set 5, the seventh bit set 6, and the seventh bit set 7 are respectively sent to intra-block interleaving 0, intra-block interleaving 1, intra-block interleaving 2, intra-block interleaving 3, intra-block interleaving 4, intra-block interleaving 5, intra-block interleaving 6, and intra-block interleaving 7, to obtain a tenth bit set 0, a tenth bit set 1, a tenth bit set 2, a tenth bit set 3, a tenth bit set 4, a tenth bit set 5, a tenth bit set 6, and a tenth bit set 7 each with a quantity of 86016 bits.

Next, a total of 86016+86016=172032 bits in the tenth bit set 0 and the tenth bit set 1 are sent to an interleaver buffer M in inter-block interleaving 0, to obtain an eighth bit set 0 through reading. Similarly, a total of 86016+86016=172032 bits in the tenth bit set 2 and the tenth bit set 3 are sent to an interleaver buffer M in inter-block interleaving 1, to obtain an eighth bit set 1 through reading. Next, a total of 86016+86016=172032 bits in the tenth bit set 4 and the tenth bit set 5 are sent to an interleaver buffer M in inter-block interleaving 2, to obtain an eighth bit set 2 through reading. Similarly, a total of 86016+86016=172032 bits in the tenth bit set 6 and the tenth bit set 7 are sent to an interleaver buffer M in inter-block interleaving 3, to obtain an eighth bit set 3 through reading.

It should be understood that a fourth bit stream 0 obtained by reading out bits in the interleaver buffer M in the inter-block interleaving 0 includes three eighth bit sets 0. Similarly, a fourth bit stream 1 obtained by reading out bits in the interleaver buffer M in the inter-block interleaving 1 includes three eighth bit sets 1. A fourth bit stream 2 obtained by reading out bits in the interleaver buffer M in the inter-block interleaving 2 includes three eighth bit sets 2. Similarly, a fourth bit stream 3 obtained by reading out bits in the interleaver buffer M in the inter-block interleaving 3 includes three eighth bit sets 3. In this case, fourth bit data obtained by merging the fourth bit stream 0, the fourth bit stream 1, the fourth bit stream 2, and the fourth bit stream 3 includes a total of 2064384 bits.

In consideration of DP-64QAM, every 12 bits in the fourth bit data are mapped to one dual-polarization symbol, so that a total of 2064384/12=172032 dual-polarization symbols are obtained. DSP framing is performed on the foregoing 172032 dual-polarization symbols, to be specific, frame alignment words, training symbols, reserved symbols, and pilot symbols are inserted into X-polarization and Y-polarization symbols. A super-frame including 175104 dual-polarization symbols is obtained and then sent.

FIG. 35 is a diagram of a structure of a data processing apparatus according to an embodiment of this application. As shown in FIG. 35, the data processing apparatus includes a PCS unit 101, a first interleaving unit 102, an FEC encoding unit 103, a second interleaving unit 104, and a third interleaving unit 105. The PCS unit 101 is specifically configured to perform the PCS processing operation in the foregoing embodiments. The first interleaving unit 102 is specifically configured to perform the first interleaving operation in the foregoing embodiments. The FEC encoding unit 103 is specifically configured to perform the FEC encoding operation in the foregoing embodiments. The second interleaving unit 104 is specifically configured to perform the second interleaving operation in the foregoing embodiments. The third interleaving unit 105 is specifically configured to perform the third interleaving operation in the foregoing embodiments. It should be understood that the data processing apparatus provided in this application may alternatively be implemented in another manner. For example, unit division in the foregoing apparatus is merely logical function division and may be actually implemented in another division manner. For example, a plurality of units or components may be combined or integrated into another system. In addition, functional units in embodiments of this application may be integrated into one processing unit, or may be independent physical units, or two or more functional units may be integrated into one processing unit. The integrated unit may be implemented in a form of hardware, or may be implemented in a form of a software functional unit.

FIG. 36 is a diagram of a structure of an optical module according to an embodiment of this application. As shown in FIG. 36, the optical module includes a processor 201 and an interface circuit 202, and the processor 201 is configured to perform operations of the first data processing, the second data processing, and the third data processing described in the foregoing embodiments. In a possible implementation, the processor 201 includes the PCS unit 101, the first interleaving unit 102, the FEC encoding unit 103, the second interleaving unit 104, and the third interleaving unit 105 that are shown in FIG. 35. The interface circuit 202 may be a transceiver or an input/output interface. The interface circuit 202 is configured to receive a signal from an apparatus other than the optical module and transmit the signal to the processor 201, or send a signal from the processor 201 to an apparatus other than the optical module. In an example, after performing the first data processing, the second data processing, and the third data processing, the processor 201 obtains a DSP super-frame, and sends the DSP super-frame through the interface 202. In this example, the interface 202 may be specifically an electrical interface. In another example, after performing the first data processing, the second data processing, and the third data processing, the processor 201 obtains a DSP super-frame. A modulator in the optical module performs signal processing such as electrical-to-optical conversion based on the DSP super-frame to obtain an optical signal, and then sends the optical signal through the interface 202. In this example, the interface 202 may be specifically an optical interface. Optionally, the optical module may further include a memory 203. The memory 203 is configured to store program instructions and data.

FIG. 37 is a diagram of a structure of a sending device according to an embodiment of this application. As shown in FIG. 37, the sending device includes a host side device 301 and an optical module 302. The host side device 301 is configured to send data to the optical module 302, and the optical module 302 generates an optical signal based on the data sent by the host side device 301 and sends the optical signal over a channel. For example, the host side device may be specifically a switch, a router, or the like. The sending device may be a communication device including the host side device 301 and the optical module 302. It should be further understood that the sending device in this embodiment of this application is named based on a data stream direction, and a function of the device is not limited. For example, the sending device may also have a receiving function.

An embodiment of this application further provides an optical transport network (Optical Transport Network, OTN) device. The OTN device includes a line side (line side) device and a client side (client side) device. The client side device may also be referred to as a tributary side device in some scenarios. The line side device includes a processor and an interface, and the processor is configured to perform operations of the first data processing, the second data processing, and the third data processing described in the foregoing embodiments. The interface may be a transceiver or an input/output interface. The interface is configured to receive a signal from an apparatus other than the line side device and transmit the signal to the processor, or send a signal from the processor to an apparatus other than the line side device.

An embodiment of this application further provides a chip. The chip integrates a circuit configured to implement a function of the foregoing processor 201 and one or more interfaces. In an example, a memory is integrated into the chip. In another example, when no memory is integrated into the chip, the chip may be connected to an external memory through an interface. The chip may complete the steps of the method in any one or more of the foregoing embodiments. Alternatively, the chip implements, based on program code stored in the memory, the actions performed by the data processing apparatus in the foregoing embodiments.

An embodiment of this application further provides a computer-readable storage medium, including a program or instructions. When the program or the instructions are run on a computer, the method performed by the processor 201 in the foregoing method embodiments is performed.

It should be understood that the processor mentioned in embodiments of this application may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may exist independently and be connected to the processor, or the memory may be integrated with the processor.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or may be a processing circuit that implements a specific function.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof.

When hardware is used to implement the embodiments, the data processing method provided in embodiments of this application may not be implemented by reading software code or instructions, for example, may be implemented by using a CPU, a DSP, an ASIC, an FPGA, another programmable logic device, a transistor logic device, a hardware component, or any combination thereof.

When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device, for example, a server, integrating one or more usable media. The usable medium may be a magnetic medium, for example, a floppy disk, a hard disk, or a magnetic tape; may be an optical medium, for example, a digital versatile disc (Digital Versatile Disc); or may be a semiconductor medium, for example, a solid-state drive (solid-state drive, SSD).

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
performing probabilistic constellation shaping PCS processing on a first bit set in a plurality of bits to obtain a second bit set;
performing first interleaving on the second bit set and a third bit set in the plurality of bits other than the first bit set to obtain a fourth bit set 1 and a fourth bit set 2;
performing forward error correction FEC encoding on each of two fifth bit sets to obtain two sixth bit sets, wherein a fifth bit set 1 in the two fifth bit sets comprises at least one fourth bit set 1, and a fifth bit set 2 in the two fifth bit sets comprises at least one fourth bit set 2;
performing second interleaving on each of the two sixth bit sets to obtain two seventh bit sets; and
performing third interleaving on the two seventh bit sets to obtain an eighth bit set, wherein 12 consecutive bits in the eighth bit set are mapped to obtain one dual-polarization symbol; the dual-polarization symbol comprises a first polarization symbol and a second polarization symbol; bit 0, bit 1, bit 2, bit 3, bit 4, and bit 5 in the 12 bits are mapped to the first polarization symbol; bit 6, bit 7, bit 8, bit 9, bit 10, and bit 11 in the 12 bits are mapped to the second polarization symbol; four bits that are in the 12 bits and that are mapped to the first polarization symbol are from the second bit set, and the other two bits that are in the 12 bits and that are mapped to the first polarization symbol are from the third bit set and/or parity bits of the FEC encoding; and four bits that are in the 12 bits and that are mapped to the second polarization symbol are from the second bit set, and the other two bits that are in the 12 bits and that are mapped to the second polarization symbol are from the third bit set and/or the parity bits of the FEC encoding.

2. The method according to claim 1, wherein the two seventh bit sets comprise a seventh bit set 1 and a seventh bit set 2, each of the seventh bit set 1 and the seventh bit set 2 comprises a total of 336 first bit subsets in 42 rows and 8 columns, the first bit subset comprises a total of 256 bits in 16 rows and 16 columns, and a bit distribution pattern of the first bit subset indicates positions of bits from the second bit set in the first bit subset and positions of bits from the third bit set and/or the parity bits of the FEC encoding in the first bit subset, wherein
bit distribution patterns of first bit subsets in row 0, row 3, row 6, row 9, row 12, row 15, row 18, row 23, row 26, row 29, row 32, row 35, row 38, and row 41 in the seventh bit set 1 are all a first bit distribution pattern;
bit distribution patterns of first bit subsets in row 1, row 4, row 7, row 10, row 13, row 16, row 19, row 21, row 24, row 27, row 30, row 33, row 36, and row 39 in the seventh bit set 1 are all a second bit distribution pattern;
bit distribution patterns of first bit subsets in row 2, row 5, row 8, row 11, row 14, row 17, row 20, row 22, row 25, row 28, row 31, row 34, row 37, and row 40 in the seventh bit set 1 are all a third bit distribution pattern;
bit distribution patterns of first bit subsets in row 0, row 3, row 6, row 9, row 12, row 15, row 18, row 23, row 26, row 29, row 32, row 35, row 38, and row 41 in the seventh bit set 2 are all the third bit distribution pattern;
bit distribution patterns of first bit subsets in row 1, row 4, row 7, row 10, row 13, row 16, row 19, row 21, row 24, row 27, row 30, row 33, row 36, and row 39 in the seventh bit set 2 are all the first bit distribution pattern; and
bit distribution patterns of first bit subsets in row 2, row 5, row 8, row 11, row 14, row 17, row 20, row 22, row 25, row 28, row 31, row 34, row 37, and row 40 in the seventh bit set 2 are all the second bit distribution pattern.

3. The method according to claim 1 or 2, wherein performing the second interleaving on each of the two sixth bit sets to obtain the two seventh bit sets comprises:
performing fourth interleaving on each of the two sixth bit sets to obtain two ninth bit sets, wherein the two ninth bit sets comprise a ninth bit set 1 and a ninth bit set 2, each of the ninth bit set 1 and the ninth bit set 2 comprises a total of 336 second bit subsets in 42 rows and 8 columns, and the second bit subset comprises a total of 256 bits in 16 rows and 16 columns; and
performing fifth interleaving on each of the two ninth bit sets to obtain the two seventh bit sets, wherein the fifth interleaving is used for interleaving 16 bits in each row of each second bit subset in the ninth bit set.

4. The method according to claim 3, wherein a bit distribution pattern of the second bit subset indicates positions of bits from the second bit set in the second bit subset and positions of bits from the third bit set and/or the parity bits of the FEC encoding in the second bit subset, wherein
bit distribution patterns of second bit subsets in row 0, row 3, row 6, row 9, row 12, row 15, row 18, row 23, row 26, row 29, row 32, row 35, row 38, and row 41 in the ninth bit set 1 are all a fourth bit distribution pattern;
bit distribution patterns of second bit subsets in row 1, row 4, row 7, row 10, row 13, row 16, row 19, row 21, row 24, row 27, row 30, row 33, row 36, and row 39 in the ninth bit set 1 are all a fifth bit distribution pattern;
bit distribution patterns of second bit subsets in row 2, row 5, row 8, row 11, row 14, row 17, row 20, row 22, row 25, row 28, row 31, row 34, row 37, and row 40 in the ninth bit set 1 are all a sixth bit distribution pattern;
bit distribution patterns of second bit subsets in row 0, row 3, row 6, row 9, row 12, row 15, row 18, row 23, row 26, row 29, row 32, row 35, row 38, and row 41 in the ninth bit set 2 are all the sixth bit distribution pattern;
bit distribution patterns of second bit subsets in row 1, row 4, row 7, row 10, row 13, row 16, row 19, row 21, row 24, row 27, row 30, row 33, row 36, and row 39 in the ninth bit set 2 are all the fourth bit distribution pattern; and
bit distribution patterns of second bit subsets in row 2, row 5, row 8, row 11, row 14, row 17, row 20, row 22, row 25, row 28, row 31, row 34, row 37, and row 40 in the ninth bit set 2 are all the fifth bit distribution pattern.

5. The method according to any one of claims 1 to 4, wherein the two sixth bit sets comprise a sixth bit set 1 and a sixth bit set 2, each of the sixth bit set 1 and the sixth bit set 2 comprises a total of 336 third bit subsets in 42 rows and 8 columns, and the third bit subset comprises a total of 256 bits in 16 rows and 16 columns; and
in the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding.

6. The method according to claim 5, wherein a bit distribution pattern of the third bit subset indicates positions of bits from the second bit set in the third bit subset and positions of bits from the third bit set and/or the parity bits of the FEC encoding in the third bit subset, wherein
bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 1 are all the fourth bit distribution pattern;
bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 1 are all the fifth bit distribution pattern;
bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 1 are all the sixth bit distribution pattern;
bit distribution patterns of third bit subsets in row 0, row 3, row 6, row 9, row 12, row 15, row 18, row 23, row 26, row 29, row 32, row 35, row 38, and row 41 of column 0 to column 3 in the sixth bit set 2 are all the sixth bit distribution pattern;
bit distribution patterns of third bit subsets in row 1, row 4, row 7, row 10, row 13, row 16, row 19, row 21, row 24, row 27, row 30, row 33, row 36, and row 39 of column 0 to column 3 in the sixth bit set 2 are all the fourth bit distribution pattern; and
bit distribution patterns of third bit subsets in row 2, row 5, row 8, row 11, row 14, row 17, row 20, row 22, row 25, row 28, row 31, row 34, row 37, and row 40 of column 0 to column 3 in the sixth bit set 2 are all the fifth bit distribution pattern.

7. The method according to claim 1, wherein the two seventh bit sets comprise a seventh bit set 1 and a seventh bit set 2, each of the seventh bit set 1 and the seventh bit set 2 comprises a total of 336 first bit subsets in 42 rows and 8 columns, the first bit subset comprises a total of 256 bits in 16 rows and 16 columns, and a bit distribution pattern of the first bit subset indicates positions of bits from the second bit set in the first bit subset and positions of bits from the third bit set and/or the parity bits of the FEC encoding in the first bit subset, wherein
bit distribution patterns of first bit subsets in row 0, row 3, row 6, row 9, row 12, row 15, row 18, row 22, row 25, row 28, row 31, row 34, row 37, and row 40 in the seventh bit set 1 are all a first bit distribution pattern;
bit distribution patterns of first bit subsets in row 1, row 4, row 7, row 10, row 13, row 16, row 19, row 23, row 26, row 29, row 32, row 35, row 38, and row 41 in the seventh bit set 1 are all a second bit distribution pattern;
bit distribution patterns of first bit subsets in row 2, row 5, row 8, row 11, row 14, row 17, row 20, row 21, row 24, row 27, row 30, row 33, row 36, and row 39 in the seventh bit set 1 are all a third bit distribution pattern;
bit distribution patterns of first bit subsets in row 0, row 3, row 6, row 9, row 12, row 15, row 18, row 22, row 25, row 28, row 31, row 34, row 37, and row 40 in the seventh bit set 2 are all the second bit distribution pattern;
bit distribution patterns of first bit subsets in row 1, row 4, row 7, row 10, row 13, row 16, row 19, row 23, row 26, row 29, row 32, row 35, row 38, and row 41 in the seventh bit set 2 are all the third bit distribution pattern; and
bit distribution patterns of first bit subsets in row 2, row 5, row 8, row 11, row 14, row 17, row 20, row 21, row 24, row 27, row 30, row 33, row 36, and row 39 in the seventh bit set 2 are all the first bit distribution pattern.

8. The method according to claim 1 or 7, wherein performing the second interleaving on each of the two sixth bit sets to obtain the two seventh bit sets comprises:
performing fourth interleaving on each of the two sixth bit sets to obtain two ninth bit sets, wherein the two ninth bit sets comprise a ninth bit set 1 and a ninth bit set 2, each of the ninth bit set 1 and the ninth bit set 2 comprises a total of 336 second bit subsets in 42 rows and 8 columns, and the second bit subset comprises a total of 256 bits in 16 rows and 16 columns; and
performing fifth interleaving on each of the two ninth bit sets to obtain the two seventh bit sets, wherein the fifth interleaving is used for interleaving 16 bits in each row of each second bit subset in the ninth bit set.

9. The method according to claim 8, wherein a bit distribution pattern of the second bit subset indicates positions of bits from the second bit set in the second bit subset and positions of bits from the third bit set and/or the parity bits of the FEC encoding in the second bit subset, wherein
bit distribution patterns of second bit subsets in row 0, row 3, row 6, row 9, row 12, row 15, row 18, row 22, row 25, row 28, row 31, row 34, row 37, and row 40 in the ninth bit set 1 are all a fourth bit distribution pattern;
bit distribution patterns of second bit subsets in row 1, row 4, row 7, row 10, row 13, row 16, row 19, row 23, row 26, row 29, row 32, row 35, row 38, and row 41 in the ninth bit set 1 are all a fifth bit distribution pattern;
bit distribution patterns of second bit subsets in row 2, row 5, row 8, row 11, row 14, row 17, row 20, row 21, row 24, row 27, row 30, row 33, row 36, and row 39 in the ninth bit set 1 are all a sixth bit distribution pattern;
bit distribution patterns of second bit subsets in row 0, row 3, row 6, row 9, row 12, row 15, row 18, row 22, row 25, row 28, row 31, row 34, row 37, and row 40 in the ninth bit set 2 are all the fifth bit distribution pattern;
bit distribution patterns of second bit subsets in row 1, row 4, row 7, row 10, row 13, row 16, row 19, row 23, row 26, row 29, row 32, row 35, row 38, and row 41 in the ninth bit set 2 are all the sixth bit distribution pattern; and
bit distribution patterns of second bit subsets in row 2, row 5, row 8, row 11, row 14, row 17, row 20, row 21, row 24, row 27, row 30, row 33, row 36, and row 39 in the ninth bit set 2 are all the fourth bit distribution pattern.

10. The method according to claim 1, 7, 8, or 9, wherein the two sixth bit sets comprise a sixth bit set 1 and a sixth bit set 2, each of the sixth bit set 1 and the sixth bit set 2 comprises a total of 336 third bit subsets in 42 rows and 8 columns, and the third bit subset comprises a total of 256 bits in 16 rows and 16 columns; and
in the total of 336 third bit subsets in 42 rows and 8 columns, bits in third bit subsets from column 0 to column 4 are from the second bit set and the third bit set, bits in third bit subsets in column 5 and bits in column 0 to column 14 in third bit subsets in column 6 are from the second bit set, and bits in column 15 in the third bit subsets in column 6 and bits in third bit subsets in column 7 are parity bits of the FEC encoding.

11. The method according to claim 10, wherein a bit distribution pattern of the third bit subset indicates positions of bits from the second bit set in the third bit subset and positions of bits from the third bit set and/or the parity bits of the FEC encoding in the third bit subset, wherein
bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 1 are all the fourth bit distribution pattern;
bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 1 are all the fifth bit distribution pattern;
bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 1 are all the sixth bit distribution pattern;
bit distribution patterns of third bit subsets in row 0, row 3, row 6, row 9, row 12, row 15, row 18, row 22, row 25, row 28, row 31, row 34, row 37, and row 40 of column 0 to column 3 in the sixth bit set 2 are all the fifth bit distribution pattern;
bit distribution patterns of third bit subsets in row 1, row 4, row 7, row 10, row 13, row 16, row 19, row 23, row 26, row 29, row 32, row 35, row 38, and row 41 of column 0 to column 3 in the sixth bit set 2 are all the sixth bit distribution pattern; and
bit distribution patterns of third bit subsets in row 2, row 5, row 8, row 11, row 14, row 17, row 20, row 21, row 24, row 27, row 30, row 33, row 36, and row 39 of column 0 to column 3 in the sixth bit set 2 are all the fourth bit distribution pattern.

12. The method according to any one of claims 1 to 11, wherein bit 0, bit 1, and bit 2 in the 12 bits are mapped to a first component of the first polarization symbol; bit 3, bit 4, and bit 5 in the 12 bits are mapped to a second component of the first polarization symbol; bit 6, bit 7, and bit 8 in the 12 bits are mapped to a first component of the second polarization symbol; and bit 9, bit 10, and bit 11 in the 12 bits are mapped to a second component of the second polarization symbol.

13. The method according to claim 12, wherein a polarization direction of the first polarization symbol and a polarization direction of the second polarization symbol are orthogonal to each other; and
the first component is an I component, and the second component is a Q component; or the first component is a Q component, and the second component is an I component.

14. The method according to any one of claims 1 to 13, wherein the two seventh bit sets comprise the seventh bit set 1 and the seventh bit set 2, and performing the third interleaving on the two seventh bit sets to obtain the eighth bit set comprises:
performing intra-block interleaving on the seventh bit set 1 to obtain a tenth bit set 1, and performing intra-block interleaving on the seventh bit set 2 to obtain a tenth bit set 2, wherein each of the tenth bit set 1 and the tenth bit set 2 comprises a total of 336 fourth bit subsets in 42 rows and 8 columns, and the fourth bit subset comprises a total of 256 bits in 16 rows and 16 columns; and
performing inter-block interleaving on the tenth bit set 1 and the tenth bit set 2 to obtain the eighth bit set, wherein the eighth bit set comprises a total of 672 fourth bit subsets in 84 rows and 8 columns.

15. The method according to any one of claims 1 to 14, wherein the first bit set comprises a first bit set 1 and a first bit set 2, and performing the PCS processing on the first bit set in the plurality of bits to obtain the second bit set comprises:
performing PCS processing on the first bit set 1 to obtain a second bit set 1, and performing PCS processing on the first bit set 2 to obtain a second bit set 2, wherein the second bit set comprises the second bit set 1 and the second bit set 2.

16. The method according to claim 15, wherein the third bit set comprises a third bit set 1 and a third bit set 2, and performing the first interleaving on the second bit set and the third bit set in the plurality of bits other than the first bit set to obtain the fourth bit set 1 and the fourth bit set 2 comprises:
performing first interleaving on the second bit set 1, the second bit set 2, the third bit set 1, and the third bit set 2 to obtain the fourth bit set 1 and the fourth bit set 2.

17. The method according to claim 15, wherein the third bit set comprises a third bit set 1 and a third bit set 2, and performing the first interleaving on the second bit set and the third bit set in the plurality of bits other than the first bit set to obtain the fourth bit set 1 and the fourth bit set 2 comprises:
performing first interleaving on the second bit set 1 and the third bit set 1 to obtain the fourth bit set 1, and performing first interleaving on the second bit set 2 and the third bit set 2 to obtain the fourth bit set 2.

18. The method according to claim 15, wherein performing the first interleaving on the second bit set and the third bit set in the plurality of bits other than the first bit set to obtain the fourth bit set 1 and the fourth bit set 2 comprises:
performing first interleaving on the second bit set 1, the second bit set 2, and the third bit set to obtain the fourth bit set 1 and the fourth bit set 2.

19. The method according to any one of claims 1 to 18, wherein amplitude bits mapped to the dual-polarization symbol are from the second bit set, and sign bits mapped to the dual-polarization symbol are from the third bit set and/or the parity bits of the FEC encoding.

20. A data processing apparatus, wherein the data processing apparatus comprises a probabilistic constellation shaping PCS unit, a first interleaving unit, a forward error correction FEC encoding unit, a second interleaving unit, and a third interleaving unit, wherein
the PCS unit is configured to perform PCS processing on a first bit set in a plurality of bits to obtain a second bit set;
the first interleaving unit is configured to perform first interleaving on the second bit set and a third bit set in the plurality of bits other than the first bit set to obtain a fourth bit set 1 and a fourth bit set 2;
the FEC encoding unit is configured to perform FEC encoding on each of two fifth bit sets to obtain two sixth bit sets, wherein a fifth bit set 1 in the two fifth bit sets comprises at least one fourth bit set 1, and a fifth bit set 2 in the two fifth bit sets comprises at least one fourth bit set 2;
the second interleaving unit is configured to perform second interleaving on each of the two sixth bit sets to obtain two seventh bit sets; and
the third interleaving unit is configured to: perform third interleaving on the two seventh bit sets to obtain an eighth bit set, wherein 12 consecutive bits in the eighth bit set are mapped to obtain one dual-polarization symbol; the dual-polarization symbol comprises a first polarization symbol and a second polarization symbol; bit 0, bit 1, bit 2, bit 3, bit 4, and bit 5 in the 12 bits are mapped to the first polarization symbol; bit 6, bit 7, bit 8, bit 9, bit 10, and bit 11 in the 12 bits are mapped to the second polarization symbol; four bits that are in the 12 bits and that are mapped to the first polarization symbol are from the second bit set, and the other two bits that are in the 12 bits and that are mapped to the first polarization symbol are from the third bit set and/or parity bits of the FEC encoding; and four bits that are in the 12 bits and that are mapped to the second polarization symbol are from the second bit set, and the other two bits that are in the 12 bits and that are mapped to the second polarization symbol are from the third bit set and/or the parity bits of the FEC encoding.

21. A chip, wherein the chip comprises a processor, and the processor is configured to perform the method according to any one of claims 1 to 19.

22. An optical module, wherein the optical module comprises a processor and an interface, and the processor is configured to: perform the method according to any one of claims 1 to 19, and send a signal through the interface.

23. The optical module according to claim 22, wherein the processor is configured to: perform data processing on an eighth bit set to obtain a DSP super-frame, and send the DSP super-frame through the interface.

24. The optical module according to claim 22, wherein the optical module further comprises a modulator, the processor is configured to perform data processing on an eighth bit set to obtain a DSP super-frame, and the modulator is configured to: perform electrical-to-optical conversion based on the DSP super-frame to obtain an optical signal, and send the optical signal through the interface.

25. A sending device, wherein the sending device comprises a host side device and the optical module according to any one of claims 22 to 24, wherein the optical module is configured to: generate an optical signal based on data from the host side device, and send the optical signal.

26. A communication system, comprising the sending device according to claim 25 and a receiving device, wherein the sending device is configured to send an optical signal to the receiving device.
